(19) Europäisches Patentamt / European Patent Office / Office européen des brevets

(11) **EP 4 716 165 A1**

(12) **EUROPEAN PATENT APPLICATION**
published in accordance with Art. 153(4) EPC

(43) Date of publication:
**25.03.2026 Bulletin 2026/13**

(21) Application number: **23942763.6**

(22) Date of filing: **27.06.2023**

(51) International Patent Classification (IPC):
**H04L 25/48** (2006.01)    **H04J 13/00** (2011.01)

(52) Cooperative Patent Classification (CPC):
**H04L 5/0048; H04J 13/00; H04L 25/49;**
**H04L 27/2613; H04L 27/26132; H04L 27/2655**

(86) International application number:
**PCT/CN2023/102941**

(87) International publication number:
**WO 2025/000239 (02.01.2025 Gazette 2025/01)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **FENG, Qi**
  **Shenzhen, Guangdong 518129 (CN)**
• **WANG, Fan**
  **Shenzhen, Guangdong 518129 (CN)**
• **ZHANG, Zhang**
  **Shenzhen, Guangdong 518129 (CN)**
• **WEI, Dongdong**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **TRANSMISSION METHOD FOR PULSE TRAIN, AND COMMUNICATION APPARATUS**

(57) A pulse signal transmission method is provided. The method includes: A communication apparatus determines a first sequence group, where the first sequence group includes $N$ sequences, where $N$ is greater than 2 and is a power of 2, the $N$ sequences include at least one Golay complementary sequence pair, each of the $N$ sequences includes a plurality of symbols, and symbols in at least two sequences are arranged in opposite orders. The communication apparatus sends a pulse train, where the pulse train is obtained based on the first sequence group, and one pulse in the pulse train corresponds to one of the $N$ sequences. This can achieve resilience to a Doppler frequency shift with linear phase variations, and can improve performance of target detection.

900

S901: Determine a first sequence group, where the first sequence group includes $N$ sequences, $N$ is greater than 2 and is a power of 2, one pulse in a pulse train corresponds to at least one of the $N$ sequences, the N sequences include at least one Golay complementary sequence pair, each of the $N$ sequences includes a plurality of symbols, and symbols in at least two sequences are arranged in opposite orders

S902: Send a pulse train, where the pulse train is obtained based on the first sequence group, and one pulse in the pulse train corresponds to one of the $N$ sequences

FIG. 9

## Description

### TECHNICAL FIELD

This application relates to the communication field, and more specifically, to a pulse train transmission method and a communication apparatus.

### BACKGROUND

Sequences play a crucial role in a communication system. Mutual discovery, clock synchronization, ranging, speed measurement, and the like between communication devices may be implemented by using a sequence correlation, and pilot multiplexing may be implemented by using orthogonality of the sequences.

Golay complementary sequence pairs are widely used in wireless fidelity (wireless fidelity, Wi-Fi) sensing systems, radar sensing systems, and the like due to ideal aperiodic autocorrelation properties of the Golay complementary sequence pairs and constant-modulus properties of binary sequences. An ambiguity function of Golay complementary sequences does not have a range sidelobe when a Doppler frequency shift is equal to zero, but exhibits large range sidelobes in other regions in which Doppler frequency shifts are not equal to zero. The Doppler frequency shift destroys ideal aperiodic autocorrelation properties of the Golay complementary sequence pair. To reduce range sidelobes, it is proposed that the Golay complementary sequence pair is extended by a Prouhet-Thue-Morse (Prouhet-Thue-Morse, PTM) sequence to obtain Doppler-resilient sequences, thereby achieving a low-ambiguity region around a main peak of the ambiguity function.

A Golay complementary sequence group extended by the PTM sequence can be resilient to a Doppler frequency shift that exhibits stepwise phase variations over time. However, the phase variations caused by the Doppler frequency shift are usually continuous and linearly increase with time. Therefore, Golay complementary sequences extended by the PTM sequence cannot be resilient to a Doppler frequency shift with linear phase variations over time.

### SUMMARY

Embodiments of this application provide a pulse train transmission method and a communication apparatus, which can be resilient to a Doppler frequency shift with linear phase variations, and can improve performance of target detection.

According to a first aspect, a pulse train transmission method is provided. The method may be performed by a communication apparatus. The communication apparatus may be a communication device or a module (for example, a chip or a chip module) configured (or used) in a communication device.

The method includes: The communication apparatus determines a first sequence group, where the first sequence group includes $N$ sequences, where $N$ is greater than 2 and is a power of 2, the $N$ sequences include at least one Golay complementary sequence pair, each of the $N$ sequences includes a plurality of symbols, and symbols in at least two sequences are arranged in opposite orders. The communication apparatus sends a pulse train, where the pulse train is obtained based on the first sequence group, and one pulse in the pulse train corresponds to one of the $N$ sequences.

According to the foregoing solution, by using a property that a Golay complementary sequence pair remains a Golay complementary sequence pair after symbols in one sequence or both sequences are arranged in a reverse order, it is proposed that a pulse train resilient to a Doppler frequency shift with linear phase variations should be obtained through extension based on the Golay complementary sequence pair and symbol reversal, thereby improving performance of target detection.

With reference to the first aspect, in some implementations of the first aspect, the method further includes: The communication apparatus receives an echo signal of the pulse train. The communication apparatus determines a range and/or a speed based on the echo signal.

According to the foregoing solution, the communication apparatus may obtain a speed and/or a range of a target by receiving the echo signal of the pulse train. Because the pulse train can be resilient to a Doppler frequency shift with linear variations, high measurement accuracy can be obtained based on the pulse train.

With reference to the first aspect, in some implementations of the first aspect, lengths of the $N$ sequences are equal.

With reference to the first aspect, in some implementations of the first aspect, the first sequence group includes a first sequence and a second sequence, where the first sequence and the second sequence are Golay complementary sequences. The first sequence group further includes a third sequence and a fourth sequence, where a symbol arrangement order of the third sequence is opposite to that of the first sequence, and a symbol arrangement order of the fourth sequence is opposite to that of the second sequence.

With reference to the first aspect, in some implementations of the first aspect, a quantity of first sequences, a quantity of second sequences, a quantity of third sequences, and a quantity of fourth sequences that are included in the first sequence group are the same.

According to the foregoing solution and based on a quantity of sequences arranged in opposite orders in the first sequence group, a corresponding pulse train can be resilient to a Doppler frequency shift with sawtooth phase variations, and with reference to the Golay complementary sequence pair that is extended based on a PTM sequence and that is included in the first sequence group, can be resilient to a Doppler frequency shift with stepwise phase variations, so that the pulse train obtained based on the first sequence can be resilient to a Doppler frequency shift with linear phase variations.

With reference to the first aspect, in some implementations of the first aspect, a first-order term of a phase in a Taylor expansion of an ambiguity function of the first sequence group at zero Doppler is set to zero.

According to the foregoing solution, the first-order term in the Taylor expansion of the ambiguity function of the first sequence group at zero Doppler is set to zero, and the pulse train obtained based on the first sequence group can be resilient to a Doppler frequency shift with first-order linear phase variations. Therefore, the pulse train can achieve high performance of target detection, for example, accuracy of speed measurement and ranging.

With reference to the first aspect, in some implementations of the first aspect, if $N = 4$, the first sequence, the second sequence, the fourth sequence, and the third sequence in the first sequence group are sequentially arranged; or if $N > 4$, an arrangement order of first $N/2$ sequences in the first sequence group is the same as an arrangement order of sequences when the first sequence group includes the $N/2$ sequences.

With reference to the first aspect, in some implementations of the first aspect, for $N = 4$, the first sequence group is $(\vec{x}, \vec{y}, \vec{y}, \vec{x})$; or for $N = 8$, the first sequence group is $(\vec{x}, \vec{y}, \vec{y}, \vec{x}, \vec{y}, \vec{x}, \vec{x}, \vec{y})$; or for $N = 16$, the first sequence group is $(\vec{x}, \vec{y}, \vec{y}, \vec{x}, \vec{y}, \vec{x}, \vec{x}, \vec{y}, \vec{y}, \vec{x}, \vec{x}, \vec{y}, \vec{x}, \vec{y}, \vec{y}, \vec{x})$, where $\vec{x}$ represents the first sequence, $\vec{y}$ represents the second sequence, $\vec{x}$ represents the third sequence, and $\vec{y}$ represents the fourth sequence.

With reference to the first aspect, in some implementations of the first aspect, if $N \geq 16$, an arrangement of the $N$ sequences in the first sequence group satisfies the following rule:

if sequence $i$ in the first sequence group is the first sequence, sequence $N/2 + i$ is the second sequence; or
if sequence $i$ in the first sequence group is the second sequence, sequence $N/2 + i$ is the first sequence; or
if sequence $i$ in the first sequence group is the third sequence, sequence $N/2 + i$ is the fourth sequence; or
if sequence $i$ in the first sequence group is the fourth sequence, sequence $N/2 + i$ is the third sequence, where
$0 \leq i < N/2$, and $i$ is an integer.

With reference to the first aspect, in some implementations of the first aspect, when $N \geq 16$, the quantity of first sequences, the quantity of second sequences, the quantity of third sequences, and the quantity of fourth sequences in the first sequence group are all $N/4$, and in the first sequence group, a sum of indexes of the $N/4$ first sequences in the first sequence group, a sum of indexes of the $N/4$ second sequences in the first sequence group, a sum of indexes of the $N/4$ third sequences in the first sequence group, and a sum of indexes of the $N/4$ fourth sequences in the first sequence group are the same.

According to the foregoing solution, when $N \geq 16$, a Lagrange remainder term in the Taylor expansion of the ambiguity function of the first sequence group is minimized, a large low-ambiguity region is obtained around a main peak of the ambiguity function of the first sequence group, and higher performance of target detection is achieved.

With reference to the first aspect, in some implementations of the first aspect, the method further includes: The communication apparatus constructs, based on a PTM sequence, a second sequence group by using the first sequence and the second sequence, where the second sequence group includes $N/2$ sequences. The communication apparatus constructs, based on the PTM sequence, a third sequence group by using the fourth sequence and the third sequence, where the third sequence group includes $N/2$ sequences. The first sequence group includes the second sequence group and the third sequence group.

With reference to the first aspect, in some implementations of the first aspect, sequence $i$ in the second sequence group is sequence $2i$ in the first sequence group, and sequence $i$ in the third sequence group is a $(2i + 1)^{th}$ sequence in the first sequence group, where $0 \leq i < N/2$, and $i$ is an integer.

According to the foregoing solution, implementation complexity of the first sequence group is low, and the pulse train obtained based on the first sequence group can be resilient to a Doppler frequency shift with first-order linear phase variations. Therefore, the pulse train can achieve high performance of target detection, for example, accuracy of speed measurement and ranging.

With reference to the first aspect, in some implementations of the first aspect, for $N = 4$, the second sequence group is $(\vec{x}, \vec{y})$, the third sequence group is $(\vec{y}, \vec{x})$, and the first sequence group is $(\vec{x}, \vec{y}, \vec{y}, \vec{x})$; or for $N = 8$, the second sequence group is $(\vec{x}, \vec{y}, \vec{y}, \vec{x})$, the third sequence group is $(\vec{y}, \vec{x}, \vec{x}, \vec{y})$, and the first sequence group is $(\vec{x}, \vec{y}, \vec{y}, \vec{x}, \vec{y}, \vec{x}, \vec{x}, \vec{y})$; or for $N = 16$, the second sequence group is $(\vec{x}, \vec{y}, \vec{y}, \vec{x}, \vec{y}, \vec{x}, \vec{x}, \vec{y})$, the third sequence group is $(\vec{y}, \vec{x}, \vec{x}, \vec{y}, \vec{x}, \vec{y}, \vec{y}, \vec{x})$, and the first sequence group is $(\vec{x}, \vec{y}, \vec{y}, \vec{x}, \vec{y}, \vec{x}, \vec{x}, \vec{y}, \vec{y}, \vec{x}, \vec{x}, \vec{y}, \vec{x}, \vec{y}, \vec{y}, \vec{x})$, where $\vec{x}$ represents the first sequence, $\vec{y}$ represents the second sequence, $\vec{x}$ represents the third sequence, and $\vec{y}$ represents the fourth sequence.

With reference to the first aspect, in some implementations of the first aspect, first $N/2$ sequences in the first sequence group are the second sequence group, and last $N/2$ sequences in the first sequence group are the third sequence group.

According to the foregoing solution, implementation complexity of the first sequence group is low, and the pulse train obtained based on the first sequence group can be resilient to a Doppler frequency shift with first-order linear phase variations. Therefore, the pulse train can achieve high performance of target detection, for example, accuracy of speed measurement and ranging.

With reference to the first aspect, in some implementations of the first aspect, for $N = 4$, the second sequence group is $(\vec{x}, \vec{y})$, the third sequence group is $(\vec{y}, \vec{x})$, and the first sequence group is $(\vec{x}, \vec{y}, \vec{y}, \vec{x})$; or for $N = 8$, the second sequence group is $(\vec{x}, \vec{y}, \vec{y}, \vec{x})$, the third sequence group is $(\vec{y}, \vec{x}, \vec{x}, \vec{y})$, and the first sequence group is $(\vec{x}, \vec{y}, \vec{y}, \vec{x}, \vec{y}, \vec{x}, \vec{x}, \vec{y})$; or for $N = 16$, the second sequence group is $(\vec{x}, \vec{y}, \vec{y}, \vec{x}, \vec{y}, \vec{x}, \vec{x}, \vec{y})$, the third sequence group is $(\vec{y}, \vec{x}, \vec{x}, \vec{y}, \vec{x}, \vec{y}, \vec{y}, \vec{x})$, and the first sequence group is $(\vec{x}, \vec{y}, \vec{y}, \vec{x}, \vec{y}, \vec{x}, \vec{x}, \vec{y}, \vec{y}, \vec{x}, \vec{x}, \vec{y}, \vec{x}, \vec{y}, \vec{y}, \vec{x})$, where $\vec{x}$ represents the first sequence, $\vec{y}$ represents the second sequence, $\vec{x}$ represents the third sequence, and $\vec{y}$ represents the fourth sequence.

With reference to the first aspect, in some implementations of the first aspect, $N$ pulses in the pulse train respectively carry the $N$ sequences in the first sequence group sequentially.

With reference to the first aspect, in some implementations of the first aspect, the method further includes: The communication apparatus determines a fourth sequence group and a fifth sequence group based on the first sequence group and by using space-time coding, where both the fourth sequence group and the fifth sequence group include $N$ sequences. The fourth sequence group and the fifth sequence group include one or more of the first sequence, the second sequence, the third sequence, and the fourth sequence; and the fourth sequence group and the fifth sequence group further include one or more of a fifth sequence, a sixth sequence, a seventh sequence, and an eighth sequence, where positive/negative signs of symbols at identical positions in the fifth sequence and the first sequence are opposite, positive/negative signs of symbols at identical positions in the sixth sequence and the second sequence are opposite, positive/negative signs of symbols at identical positions in the seventh sequence and the third sequence are opposite, and positive/negative signs of symbols at identical positions in the eighth sequence and the fourth sequence are opposite.

With reference to the first aspect, in some implementations of the first aspect, sending the pulse train includes: The communication apparatus sends a first pulse train by using a first antenna, and sends a second pulse train by using a second antenna. Both the first pulse train and the second pulse train include $N$ pulses and have a same start moment and a same pulse period, the $N$ pulses in the first pulse train respectively carry the sequences in the fourth sequence group sequentially, and the $N$ pulses in the second pulse train respectively carry the sequences in the fifth sequence group sequentially.

According to the foregoing solution, sequence groups in a sequence group set are separately sent by using a plurality of antennas. This can increase a signal-to-noise ratio while achieving resilience to a Doppler frequency shift with first-order linear phase variations, thereby further improving performance of target detection, for example, accuracy of speed measurement and ranging.

With reference to the first aspect, in some implementations of the first aspect, for $N = 4$, the first sequence group is $(\vec{x}, \vec{y}, \vec{y}, \vec{x})$, the fourth sequence group is $(\vec{x}, -\vec{y}, -\vec{y}, -\vec{x})$, and the fifth sequence group is $(\vec{y}, \vec{x}, \vec{x}, -\vec{y})$; or

for $N = 8$, the first sequence group is $(\vec{x}, \vec{y}, \vec{y}, \vec{x}, \vec{y}, \vec{x}, \vec{x}, \vec{y})$, the fourth sequence group is $(\vec{x}, -\vec{y}, -\vec{y}, -\vec{x}, -\vec{y}, -\vec{x}, \vec{x}, -\vec{y})$, and the fifth sequence group is $(\vec{y}, \vec{x}, \vec{x}, -\vec{y}, \vec{x}, -\vec{y}, \vec{y}, \vec{x})$; or

for $N = 16$, the first sequence group is $(\vec{x}, \vec{y}, \vec{y}, \vec{x}, \vec{y}, \vec{x}, \vec{x}, \vec{y}, \vec{y}, \vec{x}, \vec{x}, \vec{y}, \vec{x}, \vec{y}, \vec{y}, \vec{x})$, the fourth sequence group is $(\vec{x}, -\vec{y}, -\vec{y}, -\vec{x}, -\vec{y}, -\vec{x}, \vec{x}, -\vec{y}, -\vec{y}, -\vec{x}, \vec{x}, -\vec{y}, \vec{x}, -\vec{y}, -\vec{y}, -\vec{x})$, and the fifth sequence group is $(\vec{y}, \vec{x}, \vec{x}, -\vec{y}, \vec{x}, -\vec{y}, \vec{y}, \vec{x}, \vec{x}, -\vec{y}, \vec{y}, \vec{x}, \vec{y}, \vec{x}, \vec{x}, -\vec{y})$, where $\vec{x}$ represents the first sequence, $\vec{y}$ represents the second sequence, $\vec{x}$ represents the third sequence, $\vec{y}$ represents the fourth sequence, $-\vec{x}$ represents the fifth sequence, $-\vec{y}$ represents the sixth sequence, $-\vec{x}$ represents the seventh sequence, and $-\vec{y}$ represents the eighth sequence.

"-" preceding a sequence denotes a negative sign. For example, the fifth sequence $-\vec{x}$ is obtained by multiplying all symbols in the first sequence $\vec{x}$ by "-1" (-1). Similarly, the sixth sequence $-\vec{y}$ is obtained by multiplying all symbols in the second sequence $\vec{y}$ by -1, the seventh sequence $-\vec{x}$ is obtained by multiplying all symbols in the third sequence $\vec{x}$ by -1, and the eighth sequence $-\vec{y}$ is obtained by multiplying all symbols in the fourth sequence $\vec{y}$ by -1.

With reference to the first aspect, in some implementations of the first aspect, when $N \geq 16$, an arrangement of the sequences in the fourth sequence group and the fifth sequence group satisfies the following rules:

when sequence number $i$ of a sequence is an even number, if sequence $i$ in the fourth sequence group is the first sequence, sequence $N/2 + i$ is the sixth sequence; if sequence $i$ in the fourth sequence group is the second sequence, sequence $N/2 + i$ is the fifth sequence; if sequence $i$ in the fourth sequence group is the third sequence, sequence $N/2 + i$ is the eighth sequence; if sequence $i$ in the fourth sequence group is the fourth sequence, sequence $N/2 + i$ is the seventh sequence; if sequence $i$ in the fourth sequence group is the fifth sequence, sequence $N/2 + i$ is the second sequence; if sequence *i* in the fourth sequence group is the sixth sequence, sequence *N/2* + *i* is the first sequence; if sequence *i* in the fourth sequence group is the seventh sequence, sequence *N/2* + *i* is the fourth sequence; or if sequence *i* in the fourth sequence group is the eighth sequence, sequence *N/2* + *i* is the third sequence; or

when sequence number *i* of a sequence is an odd number, if sequence *i* in the fourth sequence group is the first sequence, sequence *N/2* + *i* is the second sequence; if sequence *i* in the fourth sequence group is the second sequence, sequence *N/2* + *i* is the first sequence; if sequence *i* in the fourth sequence group is the third sequence, sequence *N/2* + *i* is the fourth sequence; if sequence *i* in the fourth sequence group is the fourth sequence, sequence *N/2* + *i* is the third sequence; if sequence i in the fourth sequence group is the fifth sequence, sequence *N/2* + *i* is the sixth sequence; if sequence *i* in the fourth sequence group is the sixth sequence, sequence *N/2* + *i* is the fifth sequence; if sequence *i* in the fourth sequence group is the seventh sequence, sequence *N/2* + *i* is the eighth sequence; or if sequence *i* in the fourth sequence group is the eighth sequence, sequence *N/2* + *i* is the seventh sequence; and

when sequence number *i* of a sequence is an even number, if sequence *i* in the fifth sequence group is the first sequence, sequence *N/2* + *i* is the second sequence; if sequence *i* in the fifth sequence group is the second sequence, sequence *N/2* + *i* is the first sequence; if sequence *i* in the fifth sequence group is the third sequence, sequence *N/2* + *i* is the fourth sequence; if sequence *i* in the fifth sequence group is the fourth sequence, sequence *N/2* + *i* is the third sequence; if sequence *i* in the fifth sequence group is the fifth sequence, sequence *N/2* + *i* is the sixth sequence; if sequence *i* in the fifth sequence group is the sixth sequence, sequence *N/2* + *i* is the fifth sequence; if sequence *i* in the fifth sequence group is the seventh sequence, sequence *N/2* + *i* is the eighth sequence; or if sequence *i* in the fifth sequence group is the eighth sequence, sequence *N/2* + *i* is the seventh sequence; or

when sequence number *i* of a sequence is an odd number, if sequence *i* in the fifth sequence group is the first sequence, sequence *N/2* + *i* is the sixth sequence; if sequence *i* in the fifth sequence group is the second sequence, sequence *N/2* + *i* is the fifth sequence; if sequence *i* in the fifth sequence group is the third sequence, sequence *N/2* + *i* is the eighth sequence; if sequence *i* in the fifth sequence group is the fourth sequence, sequence *N/2* + *i* is the seventh sequence; if sequence *i* in the fifth sequence group is the fifth sequence, sequence *N/2* + *i* is the second sequence; if sequence *i* in the fifth sequence group is the sixth sequence, sequence *N/2* + *i* is the first sequence; if sequence *i* in the fifth sequence group is the seventh sequence, sequence *N/2* + *i* is the fourth sequence; or if sequence *i* in the fifth sequence group is the eighth sequence, sequence *N/2* + *i* is the third sequence, where

$$0 \leq i < N/2.$$

With reference to the first aspect, in some implementations of the first aspect, sequence 2i in the fourth sequence group is sequence *i* in a sixth sequence group, where the sixth sequence group is obtained through construction based on the PTM sequence and by using the first sequence and the sixth sequence; sequence 2*i* + 1 in the fourth sequence group is sequence *i* in a seventh sequence group, where the seventh sequence group is obtained through construction based on the PTM sequence and by using the eighth sequence and the seventh sequence; sequence 2i in the fifth sequence group is sequence *i* in an eighth sequence group, where the eighth sequence group is obtained through construction based on the PTM sequence and by using the second sequence and the first sequence; and sequence 2*i* + 1 in the fifth sequence group is sequence *i* in a ninth sequence group, where the seventh sequence group is obtained through construction based on the PTM sequence and by using the third sequence and the eighth sequence, where $0 \leq i < N/2$, and *i* is an integer.

With reference to the first aspect, in some implementations of the first aspect, for *N* = 4, the first sequence group is $(\vec{x},\vec{y},\vec{y},\vec{x})$, the fourth sequence group is $(\vec{x},-\vec{y},-\vec{y},-\vec{x})$, and the fifth sequence group is $(\vec{y},\vec{x},\vec{x},-\vec{y})$; or

for *N* = 8, the first sequence group is $(\vec{x},\vec{y},\vec{y},\vec{x},\vec{y},\vec{x},\vec{x},\vec{y})$, the fourth sequence group is $(\vec{x},-\vec{y},-\vec{y},-\vec{x},-\vec{y},-\vec{x},\vec{x},-\vec{y})$, and the fifth sequence group is $(\vec{y},\vec{x},\vec{x},-\vec{y},\vec{x},-\vec{y},\vec{y},\vec{x})$; or

for *N* = 16, the first sequence group is $(\vec{x},\vec{y},\vec{y},\vec{x},\vec{y},\vec{x},\vec{x},\vec{y},\vec{y},\vec{x},\vec{x},\vec{y},\vec{x},\vec{y},\vec{y},\vec{x})$ the fourth sequence group is $(\vec{x},-\vec{y},-\vec{y},-\vec{x},-\vec{y},-\vec{x},\vec{x},-\vec{y},-\vec{y},-\vec{x},\vec{x},-\vec{y},\vec{x},-\vec{y},-\vec{y},-\vec{x})$, and the fifth sequence group is $(\vec{y},\vec{x},\vec{x},-\vec{y},\vec{x},-\vec{y},\vec{y},\vec{x},\vec{x},-\vec{y},\vec{y},\vec{x},\vec{y},\vec{x},\vec{x},-\vec{y})$, where $\vec{x}$ represents the first sequence, $\vec{y}$ represents the second sequence, $\vec{x}$ represents the third sequence, $\vec{y}$ represents the fourth sequence, $-\vec{x}$ represents the fifth sequence, $-\vec{y}$ represents the sixth sequence, $-\vec{x}$ represents the seventh sequence, and $-\vec{y}$ represents the eighth sequence.

With reference to the first aspect, in some implementations of the first aspect, first *N/2* sequences in the fourth sequence group are a sixth sequence group, and last *N/2* sequences in the fourth sequence group are a seventh sequence group, where the sixth sequence group is obtained through construction based on the PTM sequence and by using the first sequence and the sixth sequence, and the seventh sequence group is obtained through construction based on the PTM sequence and by using the eighth sequence and the seventh sequence; and first *N/2* sequences in the fifth sequence group are an eighth sequence group, and last *N/2* sequences in the fifth sequence group are a ninth sequence group, where the eighth sequence group is obtained through construction based on the PTM sequence and by using the second sequence and the first sequence, and the seventh sequence group is obtained through construction based on the PTM sequence and by using the third sequence and the eighth sequence.

With reference to the first aspect, in some implementations of the first aspect, for $N = 4$, the first sequence group is $(\vec{x},\vec{y},\vec{y},\vec{x})$, the fourth sequence group is $(\vec{x},-\vec{y},-\vec{y},-\vec{x})$, and the fifth sequence group is $(\vec{y},\vec{x},\vec{x},-\vec{y})$; or

for $N = 8$, the first sequence group is $(\vec{x},\vec{y},\vec{y},\vec{x},\vec{y},\vec{x},\vec{x},\vec{y})$, the fourth sequence group is $(\vec{x},-\vec{y},-\vec{y},\vec{x},-\vec{y},-\vec{x},-\vec{x},-\vec{y})$, and the fifth sequence group is $(\vec{y},\vec{x},\vec{x},\vec{y},\vec{x},-\vec{y},-\vec{y},\vec{x})$; or

for $N = 16$, the first sequence group is $(\vec{x},\vec{y},\vec{y},\vec{x},\vec{y},\vec{x},\vec{x},\vec{y},\vec{y},\vec{x},\vec{x},\vec{y},\vec{x},\vec{y},\vec{y},\vec{x})$, the fourth sequence group is $(\vec{x},-\vec{y},-\vec{y},-\vec{x},-\vec{y},\vec{x},\vec{x},-\vec{y},-\vec{y},-\vec{x},-\vec{x},-\vec{y},-\vec{x},-\vec{y},-\vec{y},-\vec{x})$, and the fifth sequence group is $(\vec{y},\vec{x},\vec{x},\vec{y},\vec{x},\vec{y},\vec{y},\vec{x},\vec{x},-\vec{y},-\vec{y},\vec{x},-\vec{y},\vec{x},\vec{x},-\vec{y})$, where $\vec{x}$ represents the first sequence, $\vec{y}$ represents the second sequence, $\vec{x}$ represents the third sequence, $\vec{y}$ represents the fourth sequence, $-\vec{x}$ represents the fifth sequence, $-\vec{y}$ represents the sixth sequence, $-\vec{x}$ represents the seventh sequence, and $-\vec{y}$ represents the eighth sequence.

With reference to the first aspect, in some implementations of the first aspect, the first antenna is an antenna in a vertical polarization direction of a dual-polarized antenna, and the second antenna is an antenna in a horizontal polarization direction of the dual-polarized antenna; or the first antenna is an antenna in a horizontal polarization direction of a dual-polarized antenna, and the second antenna is an antenna in a vertical polarization direction of the dual-polarized antenna.

According to the foregoing solution, the sequence groups in the sequence group set are separately sent by using the antennas in the two polarization directions of the dual-polarized antenna. This can further ensure mutual orthogonality of signals sent by the antennas in the two polarization directions, increase the signal-to-noise ratio, and further improve performance of target detection.

It should be understood that this application is not limited thereto. Alternatively, the first antenna and the second antenna may not be dual-polarized antennas, that is, the first antenna and the second antenna are other antennas.

According to a second aspect, a pulse train transmission method is provided. The method may be performed by a communication apparatus. The communication apparatus may be a communication device or a module (for example, a chip or a chip module) configured (or used) in a communication device.

The method includes: The communication apparatus receives an echo signal of a pulse train, where the pulse train is obtained based on a first sequence group, and the first sequence group includes $N$ sequences, where $N$ is greater than 2 and is a power of 2, the $N$ sequences include at least one Golay complementary sequence pair, each of the $N$ sequences includes a plurality of symbols, symbols in at least two sequences are arranged in opposite orders, and one pulse in the pulse train corresponds to one of the $N$ sequences. The communication apparatus determines a range and/or a speed based on the echo signal.

For details about the first sequence group and the pulse train in the second aspect, refer to the description in the first aspect. For brevity, details are not described herein again.

According to a third aspect, a communication system is provided. The system includes a first communication apparatus configured to perform the method according to any one of the first aspect and the implementations of the first aspect, and a second communication apparatus configured to perform the method according to any one of the second aspect and the implementations of the second aspect.

In an implementation, the first communication apparatus sends a pulse signal, and the first communication apparatus determines a first sequence group, where the first sequence group includes $N$ sequences, where $N$ is greater than 2 and is a power of 2, the $N$ sequences include at least one Golay complementary sequence pair, each of the $N$ sequences includes a plurality of symbols, and symbols in at least two sequences are arranged in opposite orders. The first communication apparatus sends a pulse train, where the pulse train is obtained based on the first sequence group, and one pulse in the pulse train corresponds to one of the $N$ sequences. The second communication apparatus receives an echo signal of the pulse train, and determines a range and/or a speed based on the echo signal.

The first communication apparatus and the second communication apparatus may maintain clock synchronization by using a wired connection (for example, a communication medium such as an optical fiber), or may implement clock synchronization in a wireless communication mode. In this way, target detection can be implemented in a manner in which the first communication apparatus sends the pulse train and the second communication apparatus receives the echo signal of the pulse train.

For example, the first communication apparatus may be a transmitter of a multistatic radar, and the second communication apparatus may be a receiver of the multistatic radar. The transmitter and the receiver of the multistatic radar may be placed at different locations. However, this application is not limited thereto. The first communication apparatus and the second communication apparatus may be different communication devices or apparatuses configured in different communication devices.

According to a fourth aspect, a communication apparatus is provided. In a design, the apparatus may include a module configured to perform the corresponding method/operation/step/action described in the first aspect. The module may be implemented by a hardware circuit, software, or a combination of a hardware circuit and software. In a design, the apparatus includes a processing unit and a transceiver unit. The processing unit is configured to determine a first sequence group, where the first sequence group includes $N$ sequences, where $N$ is greater than 2 and is a power of 2, the $N$ sequences include at least one Golay complementary sequence pair, each of the $N$ sequences includes a plurality of symbols, and symbols in at least two sequences are arranged in opposite orders. The transceiver unit is configured to send a pulse train, where the pulse train is obtained based on the first sequence group, and one pulse in the pulse train corresponds to one of the $N$ sequences.

According to a fifth aspect, a communication apparatus is provided. In a design, the apparatus may include a module configured to perform the corresponding method/operation/step/action described in the second aspect. The module may be implemented by a hardware circuit, software, or a combination of a hardware circuit and software. In a design, the apparatus includes: a transceiver unit, configured to receive an echo signal of a pulse train, where the pulse train is obtained based on a first sequence group, and the first sequence group includes $N$ sequences, where $N$ is greater than 2 and is a power of 2, the $N$ sequences include at least one Golay complementary sequence pair, each of the $N$ sequences includes a plurality of symbols, symbols in at least two sequences are arranged in opposite orders, and one pulse in the pulse train corresponds to one of the $N$ sequences; and a processing unit, configured to determine a range and/or a speed based on the echo signal.

According to a sixth aspect, a communication apparatus is provided and includes a processor. The processor may implement the method according to any one of the first aspect and the possible implementations of the first aspect.

Optionally, the communication apparatus further includes a memory. The processor may be configured to execute instructions in the memory, to implement the method according to any one of the first aspect and the possible implementations of the first aspect. In an implementation, the processor is integrated with the memory. In another implementation, the processor includes the memory.

Optionally, the communication apparatus further includes a communication interface, and the processor is coupled to the communication interface. In an embodiment of this application, the communication interface may be a transceiver, a pin, a circuit, a bus, a module, or another type of communication interface. This is not limited.

In an implementation, the communication apparatus is a communication device. When the communication apparatus is the communication device, the communication interface may be a transceiver or an input/output interface.

In another implementation, the communication apparatus is a chip configured in a communication device. When the communication apparatus is the chip configured in the communication device, the communication interface may be an input/output interface.

Optionally, the transceiver may be a transceiver circuit. Optionally, the input/output interface may be an input/output circuit.

According to a seventh aspect, an embodiment of this application provides a communication apparatus, including a logic circuit and a communication interface. The logic circuit is configured to process to-be-processed information to obtain processed information, and the communication interface is configured to obtain the to-be-processed information and/or output the processed information, to enable the communication apparatus to perform the method according to any one of the first aspect and the possible implementations of the first aspect, where the communication interface includes an input interface and an output interface.

In an implementation, the logic circuit is configured to determine a first sequence group, where the first sequence group includes $N$ sequences, where $N$ is greater than 2 and is a power of 2, the $N$ sequences include at least one Golay complementary sequence pair, each of the $N$ sequences includes a plurality of symbols, and symbols in at least two sequences are arranged in opposite orders. The communication interface is configured to send a pulse train, where the pulse train is obtained based on the first sequence group, and one pulse in the pulse train corresponds to one of the $N$ sequences.

According to an eighth aspect, a processor is provided and includes an input circuit, an output circuit, and a processing circuit. The processing circuit is configured to receive a signal by using the input circuit, and transmit a signal by using the output circuit, to enable the processor to perform the method according to any one of the first aspect and the possible implementations of the first aspect.

In a specific implementation process, the processor may be one or more chips, the input circuit may be an input pin, the output circuit may be an output pin, and the processing circuit may be a transistor, a gate circuit, a trigger, any type of logic circuit, or the like. An input signal received by the input circuit may be, for example but not limited to, a signal received and input by a receiver. A signal output by the output circuit may be, for example but not limited to, a signal output to a transmitter and transmitted by the transmitter. The input circuit and the output circuit may be a same circuit, and the circuit is used as the input circuit and the output circuit at different moments. Specific implementations of the processor and the various circuits are not limited in embodiments of this application.

According to a ninth aspect, a communication apparatus is provided. The communication apparatus may be a first apparatus, or the communication apparatus is a module or unit (for example, a chip, a chip system, or a circuit) that is in a first apparatus and that is configured to perform the corresponding method (or referred to as the operation, the step, or the action) according to the first aspect and the possible implementations of the first aspect, or an apparatus that can be used in conjunction with a first apparatus.

In an implementation, the first apparatus may be a radar, and the communication apparatus may be a radar, or a module or unit configured in a radar (for example, the communication apparatus may be a chip, a chip system, or a circuit configured in a radar), or an apparatus used in conjunction with a radar.

In another implementation, the first apparatus may be an aircraft, a vehicle, a base station, a terminal, or the like. This is not limited in this application.

According to a tenth aspect, a computer program product is provided. The computer program product includes a computer program (which may also be referred to as code or instructions). When the computer program is run, a computer is enabled to perform the method according to any one of the first aspect and the possible implementations of the first aspect.

According to an eleventh aspect, a computer-readable storage medium is provided. The computer-readable storage medium stores a computer program (which may also be referred to as code or instructions). When the computer program is run on a computer, the computer is enabled to perform the method according to any one of the first aspect and the possible implementations of the first aspect.

It may be understood that, for beneficial effects of features that are in the second aspect to the eleventh aspect and that correspond to the features in the first aspect, refer to related descriptions in the first aspect. Details are not described again.

## BRIEF DESCRIPTION OF DRAWINGS

FIG. 1 is a block diagram of a communication system to which an embodiment of this application is applicable;

FIG. 2 is a diagram of a pulse train obtained based on a PTM-extended Golay complementary sequence group according to this application;

FIG. 3 is a diagram of an ambiguity function of an alternately transmitted pulse train of a Golay complementary sequence pair according to this application;

FIG. 4 is a diagram of an ambiguity function of a pulse train obtained based on a PTM-extended Golay complementary sequence group according to this application;

FIG. 5 is a diagram illustrating stepwise phase variations according to this application;

FIG. 6 is a diagram illustrating linear phase variations according to this application;

FIG. 7 is a diagram illustrating ambiguity functions of a Golay complementary sequence group extended by a PTM sequence for a Doppler frequency with linear phase variations under different speed and duty cycle conditions according to this application;

FIG. 8 is a diagram illustrating decomposition of a linear phase variation according to this application;

FIG. 9 is a schematic flowchart of a pulse signal transmission method according to this application;

FIG. 10 is a diagram of a pulse train when $N = 4$ according to Implementation 1 of this application;

FIG. 11 is a diagram of a pulse train when $N = 8$ according to Implementation 1 of this application;

FIG. 12 is a diagram comparing ambiguity functions of different sequence groups with linear phase variations according to this application;

FIG. 13 is a diagram of a pulse train when $N = 4$ according to Implementation 2 of this application;

FIG. 14 is a diagram of a pulse train when $N = 8$ according to Implementation 2 of this application;

FIG. 15 is another diagram comparing ambiguity functions of different sequence groups with linear phase variations according to this application;

FIG. 16 is a diagram of a pulse train when $N = 8$ according to Implementation 3 of this application;

FIG. 17 is still another diagram comparing ambiguity functions of different sequence groups with linear phase variations according to this application;

FIG. 18 is a diagram of pulse trains corresponding to two antennas when $N = 8$ according to this application;

FIG. 19 is a diagram of a structure of a communication apparatus according to this application; and

FIG. 20 is another diagram of a structure of a communication apparatus according to this application.

## DESCRIPTION OF EMBODIMENTS

The following describes technical solutions of this application with reference to accompanying drawings.

In embodiments of this application, "/" may represent an "or" relationship between associated objects. For example, "A/B" may represent A or B. The term "and/or" may be used to describe three relationships that exist between associated objects. For example, A and/or B may represent the following three cases: Only A exists, both A and B exist, and only B exists, where A and B may be singular or plural. For ease of describing the technical solutions in embodiments of this application, terms such as "first" and "second" may be used for differentiation in embodiments of this application. Terms such as "first" and "second" do not limit a quantity and an execution sequence, and the terms such as "first" and "second" do not define a definite difference. In embodiments of this application, the term "example", "for example", or the like is used to represent an example, an illustration, or a description. Any embodiment or design scheme described as "example" or "for example" should not be construed as being more preferred or advantageous than another embodiment or design scheme. Use of the terms such as "example" or "for example" is intended to present a related concept in a specific manner for ease of understanding. In embodiments of this application, "at least one (type)" may alternatively be described as "one (type) or more (types)", and "a plurality of (types)" may be two (types), three (types), four (types), or more (types). This is not limited in embodiments of this application.

The technical solutions of this application may be applied to a non-terrestrial network and/or a terrestrial network (terrestrial network, TN). The technical solutions provided in this application may be applied to a wireless sensing system, a radar communication system, or the like, and the technical solutions provided in this application may be further applied to a wireless fidelity (wireless fidelity, Wi-Fi) communication system, a 5th generation (5th generation, 5G) mobile communication system, a 6th generation (6th generation, 6G) mobile communication system, a new wireless communication system that emerges in the future, or the like.

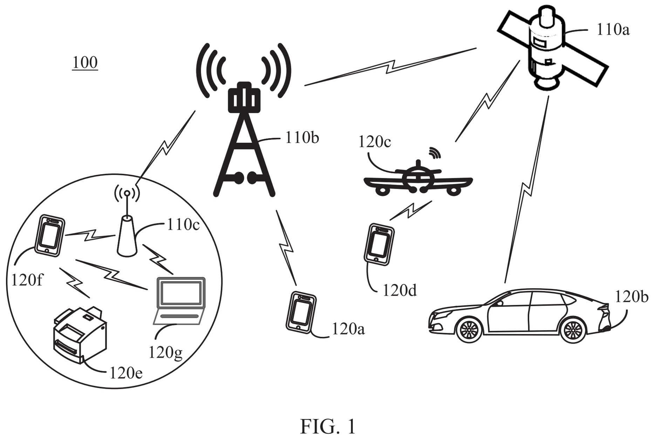

FIG. 1 is a diagram of an architecture of a communication system 100 to which an embodiment of this application is applicable. As shown in FIG. 1, the communication system 100 may include at least one network device (for example, 110a, 110b, and 110c in FIG. 1). For example, the at least one network device may include a terrestrial network device, for example, an access network device 110b and an access network device 110c. The at least one network device may further include a non-terrestrial network device, for example, a satellite 110a. The communication system 100 may further include at least one terminal (for example, 120a to 120j in FIG. 1).

The network device or the terminal in the system shown in FIG. 1 may implement target detection by using a pulse train transmission method provided in this application, such as target discovery, speed measurement, and ranging, and have high performance of target detection. For example, a vehicle 120b may perform target detection by using the pulse train transmission method provided in this application, to implement assisted driving, autonomous driving, or the like. An airplane 120c may perform target detection by using the pulse transmission method provided in this application, to avoid collision or the like. For another example, a base station 110b may perform target detection by using the pulse transmission method provided in this application, to implement terminal sensing in a coverage area.

It should be understood that FIG. 1 is merely a diagram of an architecture of a communication system to which an embodiment of this application is applicable. Embodiments of this application may be further applied to other communication systems.

A communication apparatus provided in embodiments of this application may be a network device or configured in a network device (for example, a chip or a chip system), and includes various base stations (base stations), for example, a NodeB (NodeB), an evolved NodeB (evolved NodeB, eNodeB, or eNB), a next-generation NodeB (next generation NodeB, gNB), a next-generation base station in a 6th generation (6th generation, 6G) mobile communication system, or a base station in a future mobile communication system; or may be a transmission reception point (transmission reception point, TRP), an access network device in an open radio access network (open radio access network, O-RAN or open RAN), an access node in a Wi-Fi system, or the like. The network device may alternatively be a micro base station or an indoor station (for example, 110c in FIG. 1), or may be a relay node, a donor node, or the like.

The communication apparatus provided in embodiments of this application may be a terminal device or configured in a terminal device (for example, a chip or a chip system). The terminal device may also be referred to as a terminal, and includes but is not limited to user equipment (user equipment, UE), a mobile station, a mobile terminal, or the like. The terminal device may be widely used in various scenarios for communication. For example, the scenario includes but is not limited to at least one of the following scenarios: enhanced mobile broadband (enhanced mobile broadband, eMBB), ultra-reliable low-latency communication (ultra-reliable low-latency communication, URLLC), massive machine-type communication (massive machine-type communication, mMTC), device-to-device (device-to-device, D2D) communication, vehicle to everything (vehicle to everything, V2X) communication, machine-type communication (machine-type communication, MTC), an Internet of Things (Internet of Things, IoT), virtual reality, augmented reality, industrial control, autonomous driving, telemedicine, a smart grid, smart furniture, smart office, smart wearable, smart transportation, a smart city, or the like. The terminal device may be a mobile phone (for example, mobile phones 120a, 120d, and 120f in FIG. 1), a tablet computer, a computer (for example, a computer 120g in FIG. 1) having a wireless transceiver function, a wearable device, a vehicle (for example, 120b in FIG. 1), an unmanned aerial vehicle, a helicopter, an airplane (for example, 120c in FIG. 1), a ship, a robot, a mechanical arm, a smart home device (for example, a printer 120e in FIG. 1), or the like.

The communication apparatus provided in embodiments of this application may alternatively be a detection device such as a radar. A specific implementation form of the communication apparatus provided in this application is not limited in this application.

The following first describes related technologies and terms in embodiments of this application.

1. Ambiguity function

An ambiguity function is an important tool for waveform design and performance analysis for a signal processing system. Based on an ambiguity function of a signal, a resolution capability, measurement accuracy, an ambiguity property, and an interference suppression capability of a signal waveform can be determined.

In this application, the ambiguity function is used to measure a capability of a signal used for target detection, to distinguish between two targets whose locations and speeds are approximately the same. The ambiguity function of the signal is usually defined as a two-dimensional cross-correlation function. A specific expression may be $A(\tau, f)$:

$$A(\tau, f) = \sum_{n=0}^{N-1} \sum_{l=0}^{L-1-\tau} s_{n,l} s_{n,l+\tau} e^{j2\pi fn/N}$$

In the expression, $\tau$ represents a difference in delay time between echo signals of the two targets relative to a transmitted signal, and f represents a difference between Doppler frequency shifts of the two targets. During target detection, a moving target differs from a stationary target in that the moving target generates a Doppler frequency shift.

When the ambiguity function of the signal decreases quickly with the increase of $\tau$ and f, a target detection capability of the signal is higher, and the two targets are distinguished more easily.

2. Taylor expansion

A Taylor expansion may also be referred to as a Taylor formula. The Taylor formula is a formula that uses information of a function at a point to describe values near the point. A geometric meaning of the Taylor formula is to approximate an original function by using a polynomial function. Because the polynomial function can support derivatives of any order, the calculation is easy, and it is convenient to obtain an extremum or determine a property of the function. A Taylor expansion of the ambiguity function may be used to determine magnitudes of sidelobes around a main peak of the ambiguity function of the signal and whether a low-ambiguity region can be obtained, thereby determining a target resolution capability of the signal.

3. Golay complementary sequence

Two sequences are mutually Golay complementary sequences, and the two sequences may be referred to as a Golay complementary sequence pair. The Golay complementary sequence pair has ideal aperiodic autocorrelation properties and constant-modulus properties of binary sequences. An aperiodic cross-correlation function of sequences $x$ and $y$ may be expressed as:

$$R_{xy}(\tau) = \begin{cases} \sum_{l=0}^{L-1-\tau} x_l y_{l+\tau}^*, & 0 \leq \tau \leq L-1 \\ \sum_{l=0}^{L-1+\tau} x_{l-\tau} y_l^*, & -L+1 \leq \tau < 0 \end{cases}$$

In the expression, $a^*$ represents a conjugate of $a$. In particular, when $x = y$, $R_x(\tau)$ represents an aperiodic autocorrelation function of sequence $x$. An autocorrelation function of the Golay complementary sequence pair satisfies $R(\tau) = R_x(\tau) + R_y(\tau) = 2L\delta(\tau)$, where $\delta(\tau)$ is an impulse function.

For example, $x$ and $y$ in a Golay complementary pair with a sequence length of $L = 4$ are $x = [+1, +1, +1, -1]$ and $y = [+1, +1, -1, +1]$ respectively.

The Golay complementary sequence pair is still a Golay complementary sequence pair after any one of the following transformations is performed:

- swapping the two sequences in the Golay complementary sequence pair
- negating symbols of one or two sequences in the Golay complementary sequence pair
- reversing symbols of one or two sequences in the Golay complementary sequence pair

- ₍negating symbols at even positions of the two sequences in the Golay complementary sequence pair

2. Golay complementary sequence group extended based on a PTM sequence

An ambiguity function of Golay complementary sequences does not have a range sidelobe at zero Doppler, but exhibits large range sidelobes in other regions in which Doppler frequency shifts are not equal to zero. Because the Doppler frequency shift destroys ideal aperiodic autocorrelation properties of a Golay complementary sequence pair, the Golay complementary sequences cannot be used for detection of a moving target.

Therefore, it is proposed that a pulse train order of a Golay complementary sequence pair should be designed based on a PTM sequence, so that a lower-order term in a Taylor expansion of an ambiguity function near zero Doppler frequency shift is set to zero, thereby reducing range sidelobes and obtaining a Doppler-resilient pulse train. A PTM sequence $\boldsymbol{s} = (s_0, s_1, \ldots, s_{N-1})$ with a length of $N$ may be recursively constructed by using symbols in a binary field $s_n \in \{0,1\}$, and an element in the PTM sequence satisfies:

1)

$$s_0 = 0$$

2)

$$s_{2n} = s_n$$

3)

$$s_{2n+1} = 1 - s_n$$

$0 < n \le N-1$, and the sequence length $N$ is an integer power of 2. For example, a PTM sequence with a length $N = 8$ may be expressed as:

$$\boldsymbol{s} = (0, 1, 1, 0, 1, 0, 0, 1)$$

A pulse train of a Golay complementary pair $\boldsymbol{x}$ and $\boldsymbol{y}$ may be constructed based on the PTM sequence, and a Golay complementary sequence group extended based on the PTM sequence and with a length N = 8 may be obtained. Specifically, if 0 in $\boldsymbol{s}$ corresponds to $\boldsymbol{x}$ and 1 corresponds to $\boldsymbol{y}$, the Golay complementary sequence group extended based on the PTM sequence is $(\boldsymbol{x}, \boldsymbol{y}, \boldsymbol{y}, \boldsymbol{x}, \boldsymbol{y}, \boldsymbol{x}, \boldsymbol{x}, \boldsymbol{y})$. This Golay complementary sequence group can be resilient to a Doppler frequency shift. Theoretical analysis shows that, for a pulse train obtained by using a Golay complementary sequence group extended based on a PTM sequence, an order $M$ of a zeroed term in a Taylor expansion of an ambiguity function of the pulse train and a length of the PTM sequence satisfy $M = log_2 N - 1$. Therefore, when the length is $N = 8$, the order of the zeroed term is $M = 2$, that is, when $N = 8$, a first-order term and a second-order term in the Taylor expansion of the ambiguity function of the pulse train are set to 0.

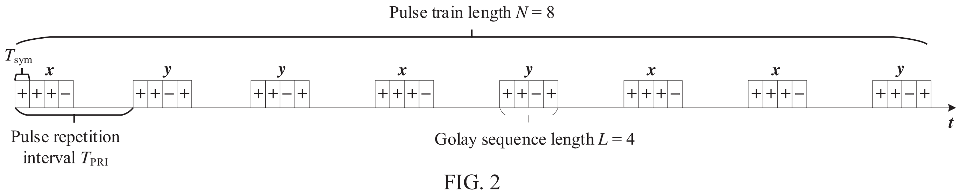

FIG. 2 is a diagram of a pulse train obtained based on various complementary sequence groups extended based on a PTM sequence, where a Golay sequence length is L = 4 and a PTM sequence length is $N = 8$. As shown in the figure, $\boldsymbol{x}$ and $\boldsymbol{y}$ are Golay complementary sequences. $T_{sym}$ represents symbol duration in a Golay sequence, $T_{PRI}$ represents a pulse repetition interval (pulse repetition interval, PRI), a duty cycle of the pulse train is $D = LT_{sym}/T_{PRI}$, and a ratio of the pulse repetition interval to the symbol duration is $T = T_{PRI}/T_{sym}$. Therefore, a maximum measurable range $r_{max}$ of the pulse train is related to the pulse repetition interval $T_{PRI}$, the Golay sequence length $L$, and the symbol duration $T_{sym}$, that is, $r_{max} = c(T_{PRI} - LT_{sym})/2$, where c represents a speed of light. A maximum measurable speed of the pulse train is related to the pulse repetition interval $T_{PRI}$ and a subcarrier spacing $f_c$, that is, $V_{max} = c/4f_c T_{PRI}$.

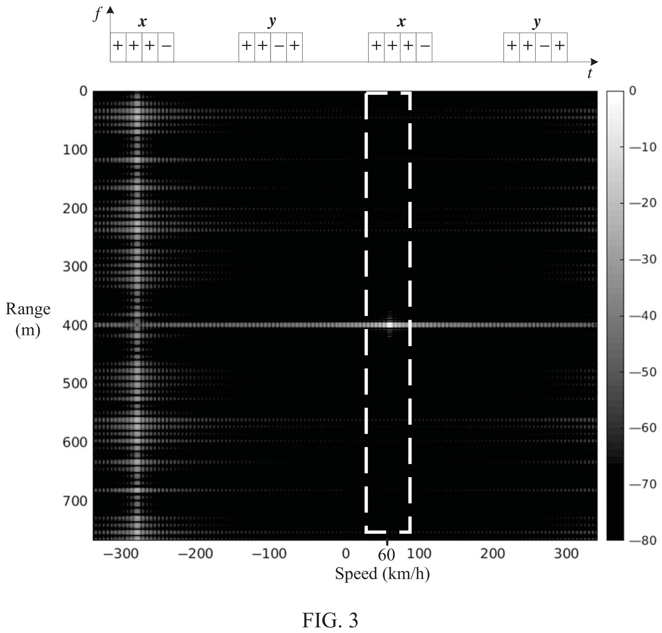

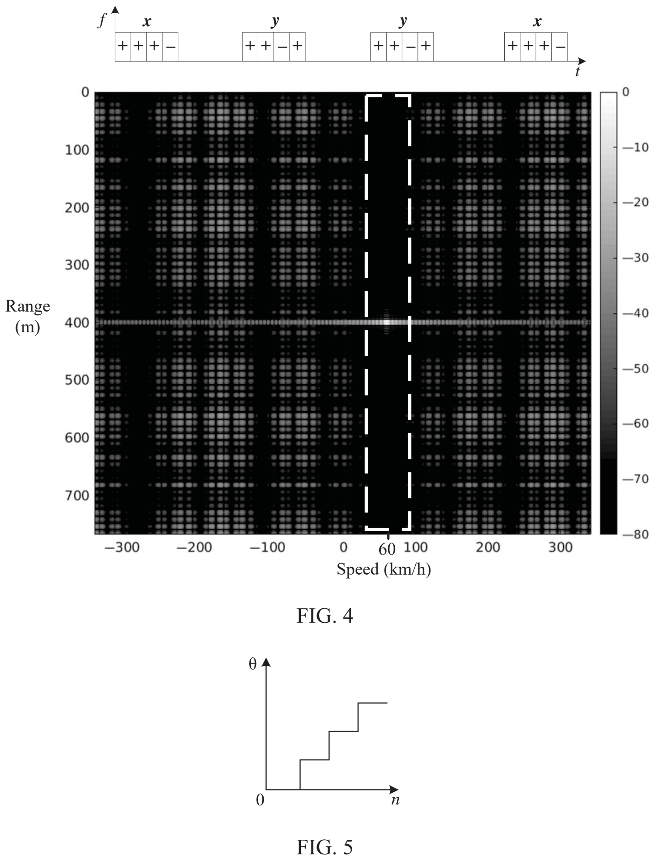

When the range is $r = 400$ m and the speed is $v = 60$ km/h, FIG. 3 is an ambiguity function of an alternately sent pulse train of $\boldsymbol{x}$ and $\boldsymbol{y}$, and FIG. 4 is an ambiguity function of a pulse train obtained based on a Golay complementary sequence group extended by a PTM sequence. In FIG. 3 and FIG. 4, a horizontal axis represents a speed, a vertical axis represents a range, and brightness represents intensity of the ambiguity function. By comparing FIG. 3 and FIG. 4, it can be learned that the ambiguity function of the alternate pulse train shown in FIG. 3 exhibits range sidelobes in terms of range in a vicinity of the speed $v = 60$ km/h. As shown in a white dashed block corresponding to the speed $v = 60$ km/h in FIG. 3, brightness at a plurality of range positions is high. In contrast, a Doppler-resilient pulse train constructed based on the PTM sequence and the Golay complementary sequence pair, as shown in FIG. 4, exhibits a low-ambiguity region in a vicinity of the speed $v = 60$ km/h. As shown in a white dashed box corresponding to the speed v = 60 km/h in FIG. 4, brightness at other range positions than the range $r = 400$ m is low. Therefore, the pulse train obtained based on the Golay complementary sequence group extended by the PTM sequence has a high range resolution.

The pulse train obtained based on the Golay complementary sequence group extended by the PTM sequence can be resilient to a Doppler frequency shift with stepwise phase variations shown in FIG. 5, that is, the phase variations caused by the Doppler frequency shift remain unchanged within the pulse repetition interval $T_{PRI}$. For a pulse train with a pulse train length of $N$ and a Golay sequence length of $L$, $s_{n,l}$ represents symbol $l$ $(0 \leq l \leq L - 1)$ in pulse $n$ $(0 \leq n \leq N - 1)$. For a pulse train corresponding to a Doppler frequency shift $f$ with stepwise phase variations, an ambiguity function may be expressed as:

$$A_{step}(\tau, f) = \sum_{n=0}^{N-1} \sum_{l=0}^{L-1-\tau} s_{n,l} s_{n,l+\tau} e^{j2\pi fn/N}$$

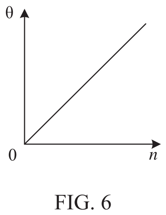

Actually, phase variations caused by a Doppler frequency shift are continuous and linearly increase with time, as shown in FIG. 6. An ambiguity function of a pulse train corresponding to a Doppler frequency offset with linear phase variations may be expressed as:

$$A_{linear}(\tau, f) = \sum_{n=0}^{N-1} \sum_{l=0}^{L-1-\tau} s_{n,l} s_{n,l+\tau} e^{j2\pi f(nT+l)/NT}$$

For a Doppler frequency shift f, if a phase variation in a single symbol period in a Golay sequence is $\varphi = 2\pi f/NT$, a phase variation in a pulse repetition period $T$ is $2\pi f/N$. For a Doppler frequency shift with stepwise phase variations, an ambiguity function $A_{step}(\tau, v)$ of a pulse train $(x, y, y, x)$ with a pulse length $N = 4$ may be expressed as:

$$A_{step}(\tau, f) = \sum_{l=0}^{L-1-\tau} x_l x_{l+\tau} + y_l y_{l+\tau} e^{jT\varphi} + y_l y_{l+\tau} e^{j2T\varphi} + x_l x_{l+\tau} e^{j3T\varphi}$$

$$= \sum_{l=0}^{L-1-\tau} x_l x_{l+\tau} + y_l y_{l+\tau}(1 + jT\varphi + j^2 T^2 \varphi^2/2 + \cdots)$$

$$+ y_l y_{l+\tau}(1 + j2T\varphi + j^2 (2T)^2 \varphi^2/2 + \cdots)$$

$$+ x_l x_{l+\tau}(1 + j3T\varphi + j^2 (3T)^2 \varphi^2/2 + \cdots) = (4L + j6TL\varphi)\delta(\tau) + o(\varphi)$$

$\delta(\tau)$ is an impulse function, and $o(\varphi^n)$ represents higher-order remainder terms of a phase $\varphi$ except terms of the phase $\varphi$ up to an $nth$ order, that is, $o(\varphi^n)$ includes remainder terms of the phase $\varphi$ with orders equal to or greater than $n + 1$. In the foregoing expression, $o(\varphi)$ includes remainder terms of the phase $\varphi$ of the second order and higher. Based on the foregoing expression, it can be learned that the first-order term of the phase in a Taylor expansion of the ambiguity function around zero Doppler is set to zero. Therefore, the pulse train can be resilient to a Doppler frequency shift with first-order stepwise phase variations.

However, for a Doppler frequency shift with linear phase variations, an ambiguity function $A_{linear}(\tau, f)$ of a pulse train $(x, y, y, x)$ with a pulse length $N = 4$ may be expressed as:

$$A_{linear}(\tau, f) = \sum_{l=0}^{L-1-\tau} x_l x_{l+\tau} e^{jl\varphi} + y_l y_{l+\tau} e^{j(T+l)\varphi} + y_l y_{l+\tau} e^{j(2T+l)\varphi} + x_l x_{l+\tau} e^{j(3T+l)\varphi}$$

$$= \sum_{l=0}^{L-1-\tau} x_l x_{l+\tau}(1 + jl\varphi + \cdots) + y_l y_{l+\tau}(1 + j(T+l)\varphi + \cdots) + y_l y_{l+\tau}(1 + j(2T+l)\varphi + \cdots)$$

$$+ x_l x_{l+\tau}(1 + j(3T+l)\varphi + \cdots)$$

$$= 4L\delta(\tau) + o(\varphi^0)$$

In the expression, $o(\varphi^0)$ includes all-order terms of a phase $\varphi$. Based on the foregoing expression, it can be learned that any-order term of the phase in a Taylor expansion of the ambiguity function around a zero Doppler frequency shift is non-zero. Therefore, the pulse train obtained based on a PTM-extended Golay complementary sequence group cannot be resilient to a Doppler frequency shift with linear phase variations.

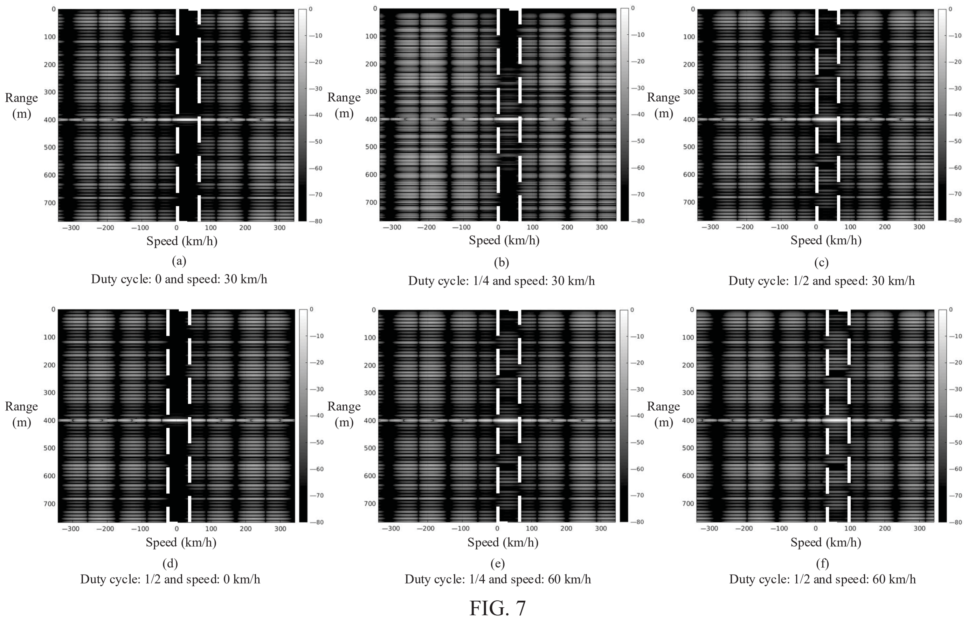

FIG. 7 shows performance of ambiguity functions of a Golay complementary sequence group extended based on a PTM sequence for a Doppler frequency with linear phase variations under different speed and duty cycle conditions. As shown in (a) and (d) in FIG. 7, in an ideal state in which a duty cycle of a pulse signal is 0 or a target speed is 0, a linear Doppler model is equivalent to a stepwise Doppler model. In this case, a low-ambiguity region exists around a main peak of an ambiguity function. However, when a duty cycle of a pulse train is not 0, a larger duty cycle indicates larger sidelobes. (a), (b), and (c) in FIG. 7 show ambiguity functions of pulse trains for a target speed of 30 km/h, with duty cycles of the pulse trains being 0, 1/4, and 1/2 respectively. It can be learned that, for the same target speed, as the duty cycle increases, the range sidelobes become larger, and the low-ambiguity region around the main peak of the ambiguity function is less pronounced. In addition, when the target speed is not 0, a higher target speed indicates larger range sidelobes. (e) and (f) in FIG. 7 show ambiguity functions of pulse trains for a target speed of 60 km/h, with duty cycles being 1/4 and 1/2 respectively. By comparing the ambiguity functions with the same pulse train duty cycle and different speeds, it can be learned that if the target speed is higher, the range sidelobes become larger, and the low-ambiguity region around the main peak of the ambiguity function is less pronounced. Therefore, it can be learned that the pulse train obtained based on the Golay complementary sequence group extended by the PTM sequence has a low resolution and weak detection performance for a target with a Doppler frequency shift exhibiting linear phase variations.

According to the solutions provided in this application, by using a property that a Golay complementary sequence pair remains a Golay complementary sequence pair after symbols in one sequence or both sequences are arranged in a reverse order, it is proposed that a pulse train resilient to a Doppler frequency shift with linear phase variations should be obtained through extension based on the Golay complementary sequence pair and symbol reversal. Target detection performed based on the pulse train can improve ranging accuracy, so that performance of target detection is improved.

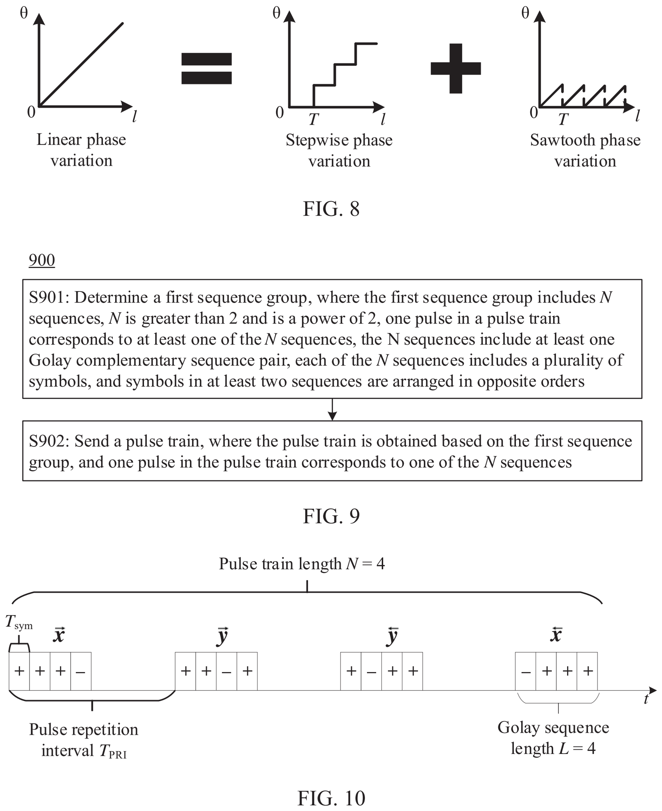

As shown in FIG. 8, a linear phase variation may be decomposed into a sum of a stepwise phase variation and a sawtooth phase variation. For a pulse train with a length of $N$, extending a Golay complementary sequence based on a PTM sequence can resist $(log_2 N - 1)^{th}$-order stepwise phase variations, and arranging symbols in the Golay sequence in a reverse order can resist first-order sawtooth phase variations. Therefore, a forward-reverse arrangement may be designed for symbols in the Golay complementary sequence in the pulse train, so that a pulse train obtained through extension based on the Golay complementary sequence and the forward-reverse arrangement of the symbols can be resilient to a Doppler frequency shift with linear phase variations.

FIG. 9 is a schematic flowchart of a pulse signal transmission method 900 according to an embodiment of this application. The method may be performed by a communication apparatus. The communication apparatus may be a communication device. For example, the communication apparatus may be a network device, a terminal, a radar, or the like. Alternatively, the communication apparatus may be configured in a communication device. For example, the communication apparatus may be a chip or a chip system. The method includes but is not limited to the following steps.

S901: The communication apparatus determines a first sequence group, where the first sequence group includes $N$ sequences, where $N$ is greater than 2 and is a power of 2, the $N$ sequences include at least one Golay complementary sequence pair, each of the $N$ sequences includes a plurality of symbols, and symbols in at least two sequences are arranged in opposite orders.

Specifically, the first sequence group includes a first sequence and a second sequence, where the first sequence and the second sequence are Golay complementary sequences. In other words, the first sequence and the second sequence are a Golay complementary sequence pair. The first sequence group further includes a third sequence and a fourth sequence, where a symbol arrangement order of the third sequence is opposite to that of the first sequence, and a symbol arrangement order of the fourth sequence is opposite to that of the second sequence.

For example, the first sequence may be denoted as $\vec{x} = [x_0, x_1, \ldots, x_{L-1}]$, and the second sequence may be

denoted as $\vec{y} = [y_0, y_1, \dots, y_{L-1}]$, where $L$ is a quantity of symbols included in the sequence, that is, a sequence length. $x$ and $\vec{y}$ are Golay complementary sequences, and $\vec{x}$ and $\vec{y}$ may be referred to as a Golay complementary sequence pair. The third sequence may be denoted as $\overleftarrow{x}$, and the symbol arrangement order of the third sequence $\overleftarrow{x}$ is opposite to that of the first sequence $\vec{x}$, that is, the third sequence is $\overleftarrow{x} = [x_{L-1}, x_{L-2}, \dots, x_0]$, and $\vec{x}$ and $\overleftarrow{x}$ are reverse sequences of each other. For example, $\overleftarrow{x}$ may be referred to as a reverse sequence of $\vec{x}$, and $\vec{x}$ may also be referred to as a reverse sequence of $\overleftarrow{x}$. The fourth sequence may be denoted as $\overleftarrow{y}$, and the symbol arrangement order of the fourth sequence is opposite to that of the second sequence $\vec{y}$, that is, the fourth sequence is $\overleftarrow{y} = [y_{L-1}, y_{L-2}, \dots, y_0]$, and $\vec{y}$ and $\overleftarrow{y}$ are reverse sequences of each other.

Based on properties of the Golay complementary sequence pair described above, sequences obtained by arranging symbols in one or both sequences of a Golay complementary sequence pair in a reverse order are still a Golay complementary sequence pair. Therefore, any two of the first sequence, the second sequence, the third sequence, and the fourth sequence are Golay complementary sequences.

In an implementation, a quantity of first sequences, a quantity of second sequences, a quantity of third sequences, and a quantity of fourth sequences in the first sequence group are the same. In other words, the quantity of first sequences, the quantity of second sequences, the quantity of third sequences, and the quantity of fourth sequences in the first sequence group are all $N/4$.

The first sequence group may include but is not limited to the following implementations. The following separately describes different implementations of the first sequence group.

Implementation 1: The first sequence group satisfies the following rule 1-1.

Rule 1-1: If $N = 4$, the first sequence, the second sequence, the fourth sequence, and the third sequence in the first sequence group are sequentially arranged; or if $N > 4$, an arrangement order of first $N/2$ sequences in the first sequence group is the same as an arrangement order of sequences when the first sequence group includes the $N/2$ sequences.

In Implementation 1, for $N = 4$, the first sequence group is $(\vec{x}, \vec{y}, \overleftarrow{y}, \overleftarrow{x})$.

When $N = 4$, the first sequence, the second sequence, the fourth sequence, and the third sequence in the first sequence group are sequentially arranged. The quantity of first sequences, the quantity of second sequences, the quantity of third sequences, and the quantity of fourth sequences are all $N/4 = 1$. In the first sequence group, a sum of position indexes of the first sequences $x$ is $\sum idx(\vec{x}) = 0$, a sum of position indexes of the second sequences $\vec{x}$ is $\sum idx(\vec{x}) = 3$, a sum of position indexes of the third sequences $\vec{y}$ is $\sum idx(\vec{y}) = 1$, and a sum of position indexes of the fourth sequences $\vec{y}$ is $\sum idx(\vec{y}) = 2$.

In Implementation 1, when $N = 4$, a Taylor expansion of an ambiguity function of the first sequence group at zero Doppler may be expressed as:

$$A(\tau, f) = \sum_{l=0}^{L-\tau-1} x_l x_{l+\tau} e^{jl\varphi} + y_l y_{l+\tau} e^{j(T+l)\varphi} + y_l y_{l+\tau} e^{j(2T+L-l-1)\varphi} + x_l x_{l+\tau} e^{j(3T+L-l-1)\varphi}$$

$$= \sum_{l=0}^{L-\tau-1} x_l x_{l+\tau}(1 + jl\varphi + j^2 l^2 \varphi^2/2 + \cdots)$$

$$+ y_l y_{l+\tau}(1 + j(T+l)\varphi + j^2(T+l)^2\varphi^2/2 + \cdots)$$

$$+ y_l y_{l+\tau}(1 + j(2T+L-l-1)\varphi + j^2(2T+L-l-1)^2\varphi^2/2 + \cdots)$$

$$+ x_l x_{l+\tau}(1 + j(3T+L-l-1)\varphi + j^2(3T+L-l-1)^2\varphi^2/2 + \cdots)$$

$$= (4L + j(6T + 2L - 2)L\varphi)\delta(\tau) + o(\varphi)$$

As can be learned from the foregoing expression, a first-order term in the Taylor expansion of the ambiguity function of the first sequence group at zero Doppler is set to zero. Therefore, a pulse train obtained based on the first sequence group can be resilient to a Doppler frequency shift with first-order linear phase variations.

For example, sequence lengths of the first sequence, the second sequence, the third sequence, and the fourth sequence are L = 4, that is, each sequence includes four symbols, where $\vec{x} = [+1, +1, +1, -1]$ and $\vec{y} = [+1, +1, -1, +1]$. In this case, $\overleftarrow{x} = [-1, +1, +1, +1]$ and $\overleftarrow{y} = [+1, -1, +1, +1]$. When $N = 4$, the pulse train obtained based on the first sequence group may be shown in FIG. 10. The pulse train includes four pulses, and the four pulses respectively carry the four sequences in the first sequence group sequentially.

It should be understood that, in this application, the sequence length L = 4 is mainly used as an example for description. However, this application is not limited thereto. The sequence length may alternatively be another value, and may be specifically determined based on a specific implementation requirement.

In Implementation 1, for $N = 8$, the first sequence group is $(\vec{x},\vec{y},\vec{y},\vec{x},\vec{y},\vec{x},\vec{x},\vec{y})$.

When $N = 8$, the first sequence group satisfies the foregoing rule 1-1, and an arrangement order of first $N/2 = 4$ sequences in the first sequence group is the same as an arrangement order of sequences when the first sequence group includes the four sequences, that is, $(\vec{x},\vec{y},\vec{y},\vec{x})$. In the first sequence group, a sum of position indexes of the first sequences $\vec{x}$ is $\Sigma\, idx(\vec{x}) = 0 + 6 = 6$, a sum of position indexes of the second sequences $\vec{x}$ is $\Sigma\, idx(\vec{x}) = 3 + 5 = 8$, a sum of position indexes of the third sequences $\vec{y}$ is $\Sigma\, idx(\vec{y}) = 1 + 7 = 8$, and a sum of position indexes of the fourth sequences $\vec{y}$ is $\Sigma\, idx(\vec{y}) = 2 + 4 = 6$.

In Implementation 1, when $N = 8$, a Taylor expansion of an ambiguity function of the first sequence group at zero Doppler may be expressed as:

$$A(\tau, f) = \sum_{l=0}^{L-\tau-1} x_l x_{l+\tau} e^{jl\varphi} + y_l y_{l+\tau} e^{j(T+l)\varphi} + y_l y_{l+\tau} e^{j(2T+L-l-1)\varphi} + x_l x_{l+\tau} e^{j(3T+L-l-1)\varphi}$$

$$+ y_l y_{l+\tau} e^{j(4T+L-l-1)\varphi} + x_l x_{l+\tau} e^{j(5T+L-l-1)\varphi} + x_l x_{l+\tau} e^{j(6T+l)\varphi}$$

$$+ y_l y_{l+\tau} e^{j(7T+l)\varphi}$$

$$= \sum_{l=0}^{L-\tau-1} x_l x_{l+\tau}(1 + jl\varphi + j^2 l^2 \varphi^2/2 + \cdots)$$

$$+ y_l y_{l+\tau}(1 + j(T+l)\varphi + j^2(T+l)^2\varphi^2/2 + \cdots)$$

$$+ y_l y_{l+\tau}(1 + j(2T+L-l-1)\varphi + j^2(2T+L-l-1)^2\varphi^2/2 + \cdots)$$

$$+ x_l x_{l+\tau}(1 + j(3T+L-l-1)\varphi + j^2(3T+L-l-1)^2\varphi^2/2 + \cdots)$$

$$+ y_l y_{l+\tau}(1 + j(4T+L-l-1)\varphi + j^2(4T+L-l-1)^2\varphi^2/2 + \cdots)$$

$$+ x_l x_{l+\tau}(1 + j(5T+L-l-1)\varphi + j^2(5T+L-l-1)^2\varphi^2/2 + \cdots)$$

$$+ x_l x_{l+\tau}(1 + j(6T+l)\varphi + j^2(6T+l)^2\varphi^2/2 + \cdots)$$

$$+ y_l y_{l+\tau}(1 + j(7T+l)\varphi + j^2(7T+l)^2\varphi^2/2 + \cdots)$$

$$= (8L + j(28T + 4L - 4)L\varphi)\delta(\tau) + o(\varphi)$$

As can be learned from the foregoing expression, a first-order term in the Taylor expansion of the ambiguity function of the first sequence group at zero Doppler is set to zero. Therefore, a pulse train obtained based on the first sequence group can be resilient to a Doppler frequency shift with first-order linear phase variations.

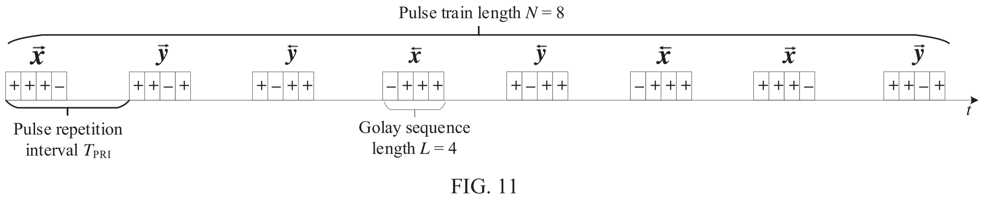

For example, sequence lengths of the first sequence, the second sequence, the third sequence, and the fourth sequence are $L = 4$, that is, each sequence includes four symbols, where $\vec{x} = [+1, +1, +1, -1]$ and $\vec{y} = [+1, +1, -1, +1]$. In this case, $\vec{x} = [-1, +1, +1, +1]$ and $\vec{y} = [+1, -1, +1, +1]$. When $N = 8$, the pulse train obtained based on the first sequence group may be shown in FIG. 11. The pulse train includes eight pulses, and the eight pulses respectively carry the eight sequences in the first sequence group $(\vec{x},\vec{y},\vec{y},\vec{x},\vec{y},\vec{x},\vec{x},\vec{y})$ sequentially.

In Implementation 1, when $N \geq 16$, the first sequence group further satisfies the following rule 1-2:

Rule 1-2:

if sequence $i$ in the first sequence group is the first sequence, sequence $N/2 + i$ is the second sequence;
if sequence $i$ in the first sequence group is the second sequence, sequence $N/2 + i$ is the first sequence;
if sequence i in the first sequence group is the third sequence, sequence $N/2 + i$ is the fourth sequence; or
if sequence $i$ in the first sequence group is the fourth sequence, sequence $N/2 + i$ is the third sequence, where
$i$ is a sequence number or position index of a sequence in the first sequence group, $0 \leq i < N/2$, and $i$ is an integer.

In Implementation 1, for $N = 16$, the first sequence group is $(\vec{x},\vec{y},\vec{y},\vec{x},\vec{y},\vec{x},\vec{x},\vec{y},\vec{y},\vec{x},\vec{x},\vec{y},\vec{x},\vec{y},\vec{y},\vec{x})$.

When $N = 16$, based on the foregoing rule 1-1, an arrangement order of first $N/2 = 8$ sequences in the first sequence group is the same as an arrangement order of sequences when the first sequence group includes the eight sequences, that is, $(\vec{x}, \vec{y}, \vec{y}, \vec{x}, \vec{y}, \vec{x}, \vec{x}, \vec{y})$, and then based on the foregoing rule 1-2, it may be determined that an arrangement order of last $N/2 = 8$ sequences in the first sequence group is $(\vec{y}, \vec{x}, \vec{x}, \vec{y}, \vec{x}, \vec{y}, \vec{y}, \vec{x})$. The quantity of first sequences, the quantity of second sequences, the quantity of third sequences, and the quantity of fourth sequences are all $N/4 = 4$. In the first sequence group, a sum of position indexes of the first sequences $\vec{x}$ is $\Sigma idx(\vec{x}) = 0 + 6 + 9 + 15 = 30$, a sum of position indexes of the second sequences $\vec{x}$ is $\Sigma idx(\vec{x}) = 3 + 5 + 10 + 12 = 30$, a sum of position indexes of the third sequences $\vec{y}$ is $1 + 7 + 8 + 14 = 30$, and a sum of position indexes of the fourth sequences $\vec{y}$ is $\Sigma idx(\vec{y}) = 2 + 4 + 13 + 11 = 30$.

In Implementation 1, when $N = 16$, a Taylor expansion of an ambiguity function of the first sequence group at zero Doppler may be expressed as:

$$A(\tau, f) = \sum_{l=0}^{L-\tau-1} x_l x_{l+\tau} e^{jl\varphi} + y_l y_{l+\tau} e^{j(T+l)\varphi} + y_l y_{l+\tau} e^{j(2T+L-l-1)\varphi} + x_l x_{l+\tau} e^{j(3T+L-l-1)\varphi}$$

$$+ y_l y_{l+\tau} e^{j(4T+L-l-1)\varphi} + x_l x_{l+\tau} e^{j(5T+L-l-1)\varphi} + x_l x_{l+\tau} e^{j(6T+l)\varphi}$$

$$+ y_l y_{l+\tau} e^{j(7T+l)\varphi} + y_l y_{l+\tau} e^{j(8T+l)\varphi} + x_l x_{l+\tau} e^{j(9T+l)\varphi} + x_l x_{l+\tau} e^{j(10T+L-l-1)\varphi}$$

$$+ y_l y_{l+\tau} e^{j(11T+L-l-1)\varphi} + x_l x_{l+\tau} e^{j(12T+L-l-1)\varphi} + y_l y_{l+\tau} e^{j(13T+L-l-1)\varphi}$$

$$+ y_l y_{l+\tau} e^{j(14T+l)\varphi} + x_l x_{l+\tau} e^{j(15T+l)\varphi}$$

$$= \sum_{l=0}^{L-\tau-1} x_l x_{l+\tau}(1 + jl\varphi + j^2 l^2 \varphi^2/2 + \cdots)$$

$$+ y_l y_{l+\tau}(1 + j(T + l)\varphi + j^2(T + l)^2 \varphi^2/2 + \cdots)$$

$$+ y_l y_{l+\tau}(1 + j(2T + L - l - 1)\varphi + j^2(2T + L - l - 1)^2 \varphi^2/2 + \cdots)$$

$$+ x_l x_{l+\tau}(1 + j(3T + L - l - 1)\varphi + j^2(3T + L - l - 1)^2 \varphi^2/2 + \cdots)$$

$$+ y_l y_{l+\tau}(1 + j(4T + L - l - 1)\varphi + j^2(4T + L - l - 1)^2 \varphi^2/2 + \cdots)$$

$$+ x_l x_{l+\tau}(1 + j(5T + L - l - 1)\varphi + j^2(5T + L - l - 1)^2 \varphi^2/2 + \cdots)$$

$$+ x_l x_{l+\tau}(1 + j(6T + l)\varphi + j^2(6T + l)^2 \varphi^2/2 + \cdots)$$

$$+ y_l y_{l+\tau}(1 + j(7T + l)\varphi + j^2(7T + l)^2 \varphi^2/2 + \cdots)$$

$$+ y_l y_{l+\tau}(1 + j(8T + l)\varphi + j^2(8T + l)^2 \varphi^2/2 + \cdots)$$

$$+ x_l x_{l+\tau}(1 + j(9T + l)\varphi + j^2(9T + l)^2 \varphi^2/2 + \cdots)$$

$$+ x_l x_{l+\tau}(1 + j(10T + L - l - 1)\varphi + j^2(10T + L - l - 1)^2 \varphi^2/2 + \cdots)$$

$$+ y_l y_{l+\tau}(1 + j(11T + L - l - 1)\varphi + j^2(11T + L - l - 1)^2 \varphi^2/2 + \cdots)$$

$$+ x_l x_{l+\tau}(1 + j(12T + L - l - 1)\varphi + j^2(12T + L - l - 1)^2 \varphi^2/2 + \cdots)$$

$$+ y_l y_{l+\tau}(1 + j(13T + L - l - 1)\varphi + j^2(13T + L - l - 1)^2 \varphi^2/2 + \cdots)$$

$$+ y_l y_{l+\tau}(1 + j(14T + l)\varphi + j^2(14T + l)^2 \varphi^2/2 + \cdots)$$

$$+ x_l x_{l+\tau}(1 + j(15T + l)\varphi + j^2(15T + l)^2 \varphi^2/2 + \cdots)$$

$$= (16L + j(120TL + 8L - 8)L\varphi)\delta(\tau) + o(\varphi)$$

As can be learned from the foregoing expression, a first-order term in the Taylor expansion of the ambiguity function of the first sequence group at zero Doppler is set to zero. Therefore, a pulse train obtained based on the first sequence group can be resilient to a Doppler frequency shift with first-order linear phase variations. In addition, because the sum $\Sigma idx(\vec{x})$ of the position indexes of the first sequences, the sum $\Sigma idx(\vec{x})$ of the position indexes of the second sequences, the sum $\Sigma idx(\vec{y})$ of the position indexes of the third sequences, and the sum $\Sigma idx(\vec{y})$ of the position indexes of the fourth sequences in the first sequence group are equal, a Lagrange remainder term in the Taylor expansion of the ambiguity function of the first sequence group is minimized, a large low-ambiguity region is obtained around a main peak of the ambiguity function of the first sequence group, and higher performance of target detection is achieved.

The communication apparatus may obtain a first sequence group with any length of $N$ based on the rule 1-1 and the rule 1-2 in the foregoing Implementation 1. The first sequence group $(\vec{x},\vec{y},\vec{y},\vec{x},\vec{y},\vec{x},\vec{x},\vec{y},\vec{y},\vec{x},\vec{x},\vec{y},\vec{x},\vec{y},\vec{y},\vec{x},$ ... ) with $N > 16$ may be determined with reference to the foregoing implementation of the first sequence group when $N \leq 16$, and examples thereof are not provided herein.

When $N \geq 16$, the first sequence group not only satisfies the foregoing rule 1-1 and rule 1-2, but also satisfies the following: In the first sequence group, the sum $\Sigma idx(\vec{x})$ of the position indexes of the first sequences, the sum $\Sigma idx(\vec{x})$ of the position indexes of the second sequences, the sum $\Sigma idx(\vec{y})$ of the position indexes of the third sequences, and the sum $\Sigma idx(\vec{y})$ of the position indexes of the fourth sequences are equal, and $\Sigma idx(\vec{x}) = \Sigma idx(\vec{x}) = \Sigma idx(\vec{y}) = \Sigma idx(\vec{y}) = (N-1)(log_2 N - 2)$. Therefore, when $N \geq 16$, the Lagrange remainder term in the Taylor expansion of the ambiguity function of the first sequence group can be minimized, a large low-ambiguity region is obtained around the main peak of the ambiguity function of the first sequence group, and higher performance of target detection is achieved.

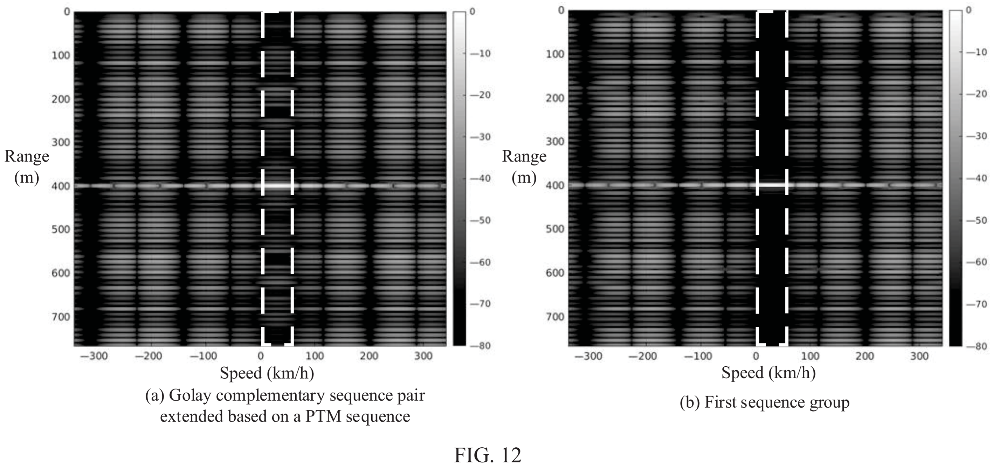

FIG. 12 compares, for a Doppler frequency shift with linear phase variations, an ambiguity function (as shown in (a) in FIG. 12) of a Golay complementary sequence group extended based on a PTM sequence and an ambiguity function (as shown in (b) in FIG. 12) of the first sequence group provided in the foregoing Implementation 1. It can be learned from (a) in FIG. 12 that, for a Doppler frequency shift with linear phase variations, there is no low-ambiguity region around a main peak of the ambiguity function of the Golay complementary sequence group extended based on the PTM sequence, and range sidelobes are large. As shown in (b) in FIG. 12, the ambiguity function of the first sequence group provided in the foregoing Implementation 1 can obtain a large low-ambiguity region around a main peak, and has high performance in detecting a target with a Doppler frequency shift exhibiting linear phase variations.

It should be understood that a manner of generating the first sequence group provided in the foregoing Implementation 1 may alternatively be as follows: The Golay complementary sequence pair $\vec{x}$ and $\vec{y}$ may be extended based on the PTM sequence to obtain an extended Golay complementary sequence group with a length of $N$, and then an arrangement order of symbols at corresponding positions in $\vec{x}$ and $\vec{y}$ is adjusted to a reverse order based on the foregoing rule 1-1 and rule 1-2. A specific manner of generating the first sequence group is not limited in this application.

In Implementation 2 and Implementation 3 described below, the first sequence group includes a second sequence group and a third sequence group, where both the second sequence group and the third sequence group include $N/2$ sequences. The second sequence group is a Golay complementary sequence group obtained by extending a Golay complementary sequence pair of the first sequence and the second sequence based on the PTM sequence, and the third sequence group is a Golay complementary sequence group obtained by extending a Golay complementary sequence pair of the fourth sequence and the third sequence based on the PTM sequence.

For example, if $N = 4$, the second sequence group includes $N/2 = 2$ sequences, that is, the second sequence group includes a Golay complementary sequence group $(\vec{x},\vec{y})$ obtained by extending the Golay complementary sequence pair of the first sequence $\vec{x}$ and the second sequence $\vec{y}$ based on the PTM sequence. The third sequence group includes $N/2 = 2$ sequences, that is, the third sequence group includes a Golay complementary sequence group $(\vec{y},\vec{x})$ obtained by extending the Golay complementary sequence pair of the fourth sequence $\vec{y}$ and the third sequence $\vec{x}$ based on the PTM sequence.

In other words, when $N = 4$, the second sequence group is $(\vec{x},\vec{y})$, and the third sequence group is $(\vec{y},\vec{x})$. Similarly, the following may be obtained:

When $N = 8$, the second sequence group is $(\vec{x},\vec{y},\vec{y},\vec{x})$, and the third sequence group is $(\vec{y},\vec{x},\vec{x},\vec{y})$.
When $N = 16$, the second sequence group is $(\vec{x},\vec{y},\vec{y},\vec{x},\vec{y},\vec{x},\vec{x},\vec{y})$, and the third sequence group is $(\vec{y},\vec{x},\vec{x},\vec{y},\vec{x},\vec{y},\vec{y},\vec{x})$.

Similarly, when $N \geq 16$, the second sequence group and the third sequence group may also be obtained with reference to the implementation for $N < 16$, and examples thereof are not provided herein.

Implementation 2: In the first sequence group, a sequence whose position index is $2i$ is a sequence whose position index is $i$ in the second sequence, and a sequence whose position index is $2i + 1$ is a sequence whose position index is $i$ in the third sequence, where a value range of the position index $i$ may be 0 $to$ $N/2 - 1$. The first sequence group obtained based on Implementation 2 may be referred to as two-dimensional Doppler-resilient sequences in which Golay sequences are alternately arranged in a forward order and a reverse order, and a pulse train obtained based on the first sequence group may be referred to as a two-dimensional Doppler-resilient pulse train in which the Golay sequences are alternately arranged in the forward order and the reverse order.

When $N = 4$, the second sequence group is $(\vec{x},\vec{y})$, and the third sequence group is $(\vec{y},\vec{x})$. In this case, the first

sequence group is $(\vec{x},\vec{y},\vec{y},\vec{x})$. The quantity of first sequences, the quantity of second sequences, the quantity of third sequences, and the quantity of fourth sequences are all $N/4 = 1$. In the first sequence group, a sum of position indexes of the first sequences $\vec{x}$ is $\Sigma idx(\vec{x}) = 0$, a sum of position indexes of the second sequences $\vec{x}$ is $\Sigma idx(\vec{x}) = 3$, a sum of position indexes of the third sequences $\vec{y}$ is $\Sigma idx(\vec{y}) = 2$, and a sum of position indexes of the fourth sequences $\vec{y}$ is $\Sigma idx(\vec{y}) = 1$.

A Taylor expansion of an ambiguity function of the first sequence group at zero Doppler may be expressed as:

$$A(\tau,f) = \sum_{l=0}^{L-\tau-1} x_l x_{l+\tau} e^{jl\varphi} + y_l y_{l+\tau} e^{j(T+L-l-1)\varphi} + y_l y_{l+\tau} e^{j(2T+l)\varphi} + x_l x_{l+\tau} e^{j(3T+L-l-1)\varphi}$$

$$= \sum_{l=0}^{L-\tau-1} x_l x_{l+\tau}(1 + jl\varphi + j^2 l^2 \varphi^2/2 + \cdots)$$

$$+ y_l y_{l+\tau}(1 + j(T+L-l-1)\varphi + j^2(T+L-l-1)^2\varphi^2/2 + \cdots)$$

$$+ y_l y_{l+\tau}(1 + j(2T+l)\varphi + j^2(2T+l)^2\varphi^2/2 + \cdots)$$

$$+ x_l x_{l+\tau}(1 + j(3T+L-l-1)\varphi + j^2(3T+L-l-1)^2\varphi^2/2 + \cdots)$$

$$= (4L + j(6T+2L-2)L\varphi)\delta(\tau) + o(\varphi)$$

As can be learned from the foregoing expression, a first-order term in the Taylor expansion of the ambiguity function of the first sequence group with a length of $N = 4$ at zero Doppler is set to zero. Therefore, a pulse train obtained based on the first sequence group can be resilient to a Doppler frequency shift with first-order linear phase variations.

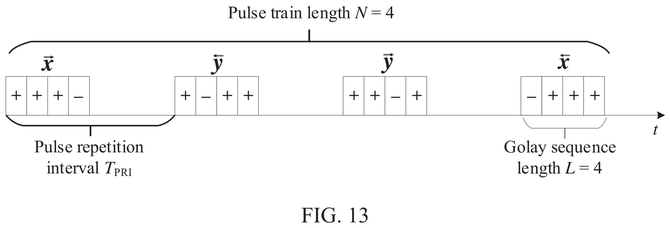

For example, sequence lengths of the first sequence, the second sequence, the third sequence, and the fourth sequence are L = 4, that is, each sequence includes four symbols, where $\vec{x} = [+1, +1, +1, -1]$ *and* $\vec{y} = [+1, +1, -1, +1]$. In this case, $\vec{x} = [-1, +1, +1, +1]$ and $\vec{y} = [+1, -1, +1, +1]$. When N = 4, the pulse train obtained based on the first sequence group may be shown in FIG. 13. The pulse train includes four pulses, and the four pulses respectively carry the eight sequences in the first sequence group $(\vec{x},\vec{y},\vec{y},\vec{x})$ sequentially.

When N = 8, the second sequence group is $(\vec{x},\vec{y},\vec{y},\vec{x})$, and the third sequence group is $(\vec{y},\vec{x},\vec{x},\vec{y})$. In this case, the first sequence group is $(\vec{x},\vec{y},\vec{y},\vec{y},\vec{y},\vec{x},\vec{x},\vec{y})$. The quantity of first sequences, the quantity of second sequences, the quantity of third sequences, and the quantity of fourth sequences are all $N/4 = 2$. In the first sequence group, a sum of position indexes of the first sequences $\vec{x}$ is $\Sigma idx(\vec{x}) = 6$, a sum of position indexes of the second sequences $\vec{x}$ is $\Sigma idx(\vec{x}) = 8$, a sum of position indexes of the third sequences $\vec{y}$ is $\Sigma idx(\vec{y}) = 6$, and a sum of position indexes of the fourth sequences $\vec{y}$ is $\Sigma idx(\vec{y}) = 8$. A Taylor expansion of an ambiguity function of the first sequence group at zero Doppler may be expressed as:

$$A(\tau,f) = \sum_{l=0}^{L-\tau-1} x_l x_{l+\tau} e^{jl\varphi} + y_l y_{l+\tau} e^{j(T+L-l-1)\varphi} + y_l y_{l+\tau} e^{j(2T+l)\varphi} + x_l x_{l+\tau} e^{j(3T+L-l-1)\varphi}$$

$$+ y_l y_{l+\tau} e^{j(4T+l)\varphi} + x_l x_{l+\tau} e^{j(5T+L-l-1)\varphi} + x_l x_{l+\tau} e^{j(6T+l)\varphi}$$

$$+ y_l y_{l+\tau} e^{j(7T+L-l-1)\varphi}$$

$$= \sum_{l=0}^{L-\tau-1} x_l x_{l+\tau}(1 + jl\varphi + j^2 l^2 \varphi^2/2 + \cdots)$$

$$+ y_l y_{l+\tau}(1 + j(T + L - l - 1)\varphi + j^2(T + L - l - 1)^2 \varphi^2/2 + \cdots)$$

$$+ y_l y_{l+\tau}(1 + j(2T + l)\varphi + j^2(2T + l)^2 \varphi^2/2 + \cdots)$$

$$+ x_l x_{l+\tau}(1 + j(3T + L - l - 1)\varphi + j^2(3T + L - l - 1)^2 \varphi^2/2 + \cdots)$$

$$+ y_l y_{l+\tau}(1 + j(4T + l)\varphi + j^2(4T + l)^2 \varphi^2/2 + \cdots)$$

$$+ x_l x_{l+\tau}(1 + j(5T + L - l - 1)\varphi + j^2(5T + L - l - 1)^2 \varphi^2/2 + \cdots)$$

$$+ x_l x_{l+\tau}(1 + j(6T + l)\varphi + j^2(6T + l)^2 \varphi^2/2 + \cdots)$$

$$+ y_l y_{l+\tau}(1 + j(7T + L - l - 1)\varphi + j^2(7T + L - l - 1)^2 \varphi^2/2 + \cdots)$$

$$= (8L + j(28T + 4L - 4)L\varphi)\delta(\tau) + o(\varphi)$$

As can be learned from the foregoing expression, a first-order term in the Taylor expansion of the ambiguity function of the first sequence group with a length of $N = 8$ at zero Doppler is set to zero. Therefore, a pulse train obtained based on the first sequence group can be resilient to a Doppler frequency shift with first-order linear phase variations.

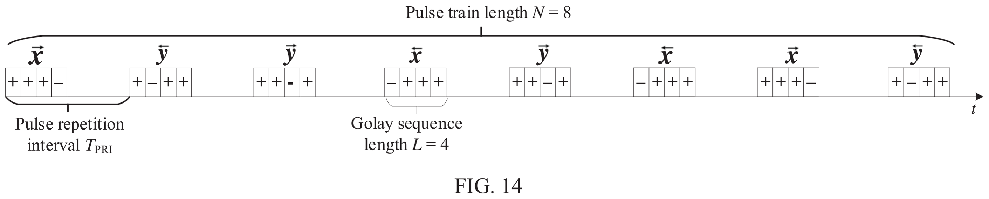

For example, sequence lengths of the first sequence, the second sequence, the third sequence, and the fourth sequence are L = 4, that is, each sequence includes four symbols, where $\vec{x} = [+1, +1, +1, -1]$ *and* $\vec{y} = [+1, +1, -1, +1]$. In this case, $\vec{x} = [-1, +1, +1, +1]$ and $\vec{y} = [+1, -1, +1, +1]$. When $N = 8$, the pulse train obtained based on the first sequence group may be shown in FIG. 14. The pulse train includes eight pulses, and the eight pulses respectively carry the eight sequences in the first sequence group $(\vec{x}, \vec{y}, \vec{y}, \vec{x}, \vec{y}, \vec{x}, \vec{x}, \vec{y})$ sequentially.

When $N = 16$, the second sequence group is $(\vec{x}, \vec{y}, \vec{y}, \vec{x}, \vec{y}, \vec{x}, \vec{x}, \vec{y})$, and the third sequence group is $(\vec{y}, \vec{x}, \vec{x}, \vec{y}, \vec{x}, \vec{y}, \vec{y}, \vec{x})$. In this case, the first sequence group is $(\vec{x}, \vec{y}, \vec{y}, \vec{x}, \vec{y}, \vec{x}, \vec{x}, \vec{y}, \vec{y}, \vec{x}, \vec{x}, \vec{y}, \vec{x}, \vec{y}, \vec{y}, \vec{x})$. The quantity of first sequences, the quantity of second sequences, the quantity of third sequences, and the quantity of fourth sequences are all $N/4 = 4$. In the first sequence group, a sum of position indexes of the first sequences $\vec{x}$ is $\Sigma idx(\vec{x}) = 28$, a sum of position indexes of the second sequences $\vec{x}$ is $\Sigma idx(\vec{x}) = 32$, a sum of position indexes of the third sequences $\vec{y}$ is $\Sigma idx(\vec{y}) = 28$, and a sum of position indexes of the fourth sequences $\vec{y}$ is $\Sigma idx(\vec{y}) = 32$. A Taylor expansion of an ambiguity function of the first sequence group at zero Doppler may be expressed as:

$$A(\tau,f) = \sum_{l=0}^{L-\tau-1} x_l x_{l+\tau} e^{jl\varphi} + y_l y_{l+\tau} e^{j(T+L-l-1)\varphi} + y_l y_{l+\tau} e^{j(2T+l)\varphi} + x_l x_{l+\tau} e^{j(3T+L-l-1)\varphi}$$

$$+ y_l y_{l+\tau} e^{j(4T+l)\varphi} + x_l x_{l+\tau} e^{j(5T+L-l-1)\varphi} + x_l x_{l+\tau} e^{j(6T+l)\varphi}$$

$$+ y_l y_{l+\tau} e^{j(7T+L-l-1)\varphi} + y_l y_{l+\tau} e^{j(8T+l)\varphi} + x_l x_{l+\tau} e^{j(9T+L-l-1)\varphi}$$

$$+ x_l x_{l+\tau} e^{j(10T+l)\varphi} + y_l y_{l+\tau} e^{j(11T+L-l-1)\varphi} + x_l x_{l+\tau} e^{j(12T+l)\varphi}$$

$$+ y_l y_{l+\tau} e^{j(13T+L-l-1)\varphi} + y_l y_{l+\tau} e^{j(14T+l)\varphi} + x_l x_{l+\tau} e^{j(15T+L-l-1)\varphi}$$

$$= \sum_{l=0}^{L-\tau-1} x_l x_{l+\tau} (1 + jl\varphi + j^2 l^2 \varphi^2/2 + \cdots)$$

$$+ y_l y_{l+\tau}(1 + j(T+L-l-1)\varphi + j^2(T+L-l-1)^2\varphi^2/2 + \cdots)$$

$$+ y_l y_{l+\tau}(1 + j(2T+l)\varphi + j^2(2T+l)^2\varphi^2/2 + \cdots)$$

$$+ x_l x_{l+\tau}(1 + j(3T+L-l-1)\varphi + j^2(3T+L-l-1)^2\varphi^2/2 + \cdots)$$

$$+ y_l y_{l+\tau}(1 + j(4T+l)\varphi + j^2(4T+l)^2\varphi^2/2 + \cdots)$$

$$+ x_l x_{l+\tau}(1 + j(5T+L-l-1)\varphi + j^2(5T+L-l-1)^2\varphi^2/2 + \cdots)$$

$$+ x_l x_{l+\tau}(1 + j(6T+l)\varphi + j^2(6T+l)^2\varphi^2/2 + \cdots)$$

$$+ y_l y_{l+\tau}(1 + j(7T+L-l-1)\varphi + j^2(7T+L-l-1)^2\varphi^2/2 + \cdots)$$

$$+ y_l y_{l+\tau}(1 + j(8T+l)\varphi + j^2(8T+l)^2\varphi^2/2 + \cdots)$$

$$+ x_l x_{l+\tau}(1 + j(9T+L-l-1)\varphi + j^2(9T+L-l-1)^2\varphi^2/2 + \cdots)$$

$$+ x_l x_{l+\tau}(1 + j(10T+l)\varphi + j^2(10T+l)^2\varphi^2/2 + \cdots)$$

$$+ y_l y_{l+\tau}(1 + j(11T+L-l-1)\varphi + j^2(11T+L-l-1)^2\varphi^2/2$$

$$+ \cdots) + x_l x_{l+\tau}(1 + j(12T+l)\varphi + j^2(12T+l)^2\varphi^2/2 + \cdots)$$

$$+ y_l y_{l+\tau}(1 + j(13T+L-l-1)\varphi + j^2(13T+L-l-1)^2\varphi^2/2$$

$$+ \cdots) + y_l y_{l+\tau}(1 + j(14T+l)\varphi + j^2(14T+l)^2\varphi^2/2 + \cdots)$$

$$+ x_l x_{l+\tau}(1 + j(15T+L-l-1)\varphi + j^2(15T+L-l-1)^2\varphi^2/2$$

$$+ \cdots)$$

$$= (16L + j(120TL + 8L - 8)L\varphi)\delta(\tau) + o(\varphi)$$

As can be learned from the foregoing expression, a first-order term in the Taylor expansion of the ambiguity function of the first sequence group with a length of $N = 16$ at zero Doppler is set to zero. Therefore, a pulse train obtained based on the first sequence group can be resilient to a Doppler frequency shift with first-order linear phase variations. In addition, in the first sequence group, the sum $\Sigma\, idx(\vec{x})$ of the position indexes of the first sequences, the sum $\Sigma\, idx(\vec{x})$ of the position indexes of the second sequences, the sum $\Sigma\, idx(\vec{y})$ of the position indexes of the third sequences, and the sum $\Sigma\, idx(\vec{y})$ of the position indexes of the fourth sequences are approximately equal. Therefore, a second-order term of the Taylor expansion of the ambiguity function of the first sequence group at zero Doppler is small, and high performance of target detection is achieved.

The communication apparatus can obtain a first sequence group with any length of $N$ based on the foregoing Implementation 2. The first sequence group $(\vec{x},\vec{y},\vec{y},\vec{x},\vec{y},\vec{x},\vec{x},\vec{y},\vec{y},\vec{x},\vec{x},\vec{y},\vec{x},\vec{y},\vec{y},\vec{x},$ ...) with $N > 16$ may be determined with reference to the foregoing implementation of the first sequence group when $N \leq 16$, and examples thereof are not provided herein. When the length of the first sequence group is $N \geq 16$, because the sum $\Sigma\ idx(\vec{x})$ of the position indexes of the first sequences, the sum $\Sigma\ idx(\vec{x})$ of the position indexes of the second sequences, the sum $\Sigma\ idx(\vec{y})$ of the position indexes of the third sequences, and the sum $\Sigma\ idx(\vec{y})$ of the position indexes of the fourth sequences in the first sequence group are approximately equal, the second-order term of the Taylor expansion of the ambiguity function of the first sequence group at zero Doppler is small, and high performance of target detection is achieved.

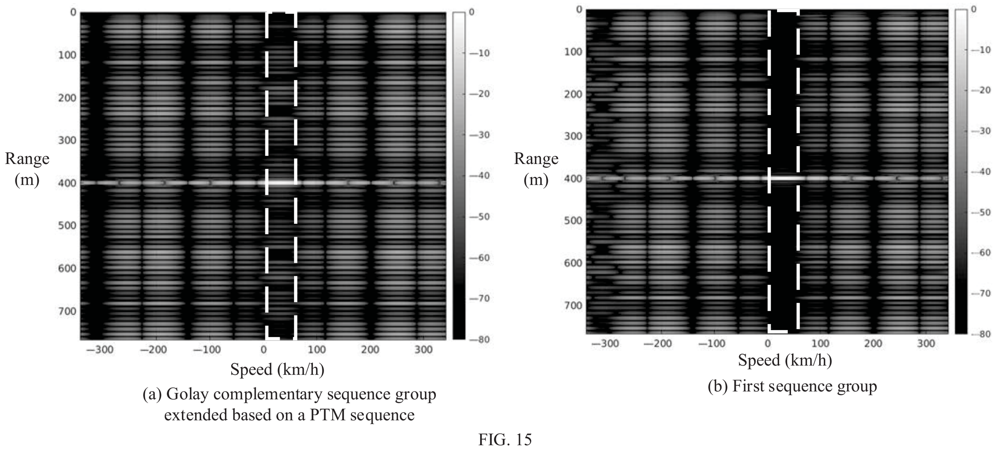

FIG. 15 compares, for a Doppler frequency shift with linear phase variations, an ambiguity function (as shown in (a) in FIG. 15) of a Golay complementary sequence group extended based on a PTM sequence and an ambiguity function (as shown in (b) in FIG. 15) of the first sequence group provided in the foregoing Implementation 2. It can be learned from (a) in FIG. 15 that, for a Doppler frequency shift with linear phase variations, there is no low-ambiguity region around a main peak of the ambiguity function of the Golay complementary sequence group extended based on the PTM sequence, and range sidelobes are large. As shown in (b) in FIG. 15, the ambiguity function of the first sequence group provided in the foregoing Implementation 2 can obtain, around a main peak, a large low-ambiguity region comparable to that in Implementation 1, and has high performance in detecting a target with a Doppler frequency shift exhibiting linear phase variations.

The foregoing manner in which the communication apparatus obtains, based on the second sequence group and the third sequence group, the first sequence group provided in Implementation 2, is merely one implementation of this application. A specific implementation of the first sequence group is not limited in this application. For example, in another implementation, the communication apparatus may extend the Golay complementary sequence pair $\vec{x}$ and $\vec{y}$ based on the PTM sequence to obtain an extended sequence group; and then based on the sequence group in which a sequence with an even position index is in a forward order and a sequence with an odd position index is in a reverse order, the communication apparatus adjusts the sequence with the odd position index in the sequence group to the reverse order, to obtain the first sequence group, where the value range of the position index is 0 to $N$ - 1.

Implementation 3: In the first sequence group, first $N/2$ sequences are the second sequence group, and last $N/2$ sequences are the third sequence group.

The first sequence group obtained based on Implementation 3 may be referred to as two-dimensional Doppler-resilient sequences with Golay sequences centrally arranged in forward and reverse orders, and a pulse train obtained based on the first sequence group may be referred to as a two-dimensional Doppler-resilient pulse train with Golay sequences centrally arranged in forward and reverse orders.

When $N = 4$, the second sequence group is $(\vec{x},\vec{y})$, and the third sequence group is $(\vec{y},\vec{x})$. In this case, the first sequence group is $(\vec{x},\vec{y},\vec{y},\vec{x})$. In the first sequence group, a sum of position indexes of the first sequences $\vec{x}$ is $\Sigma\ idx(\vec{x}) = 0$, a sum of position indexes of the second sequences $\vec{x}$ is $\Sigma\ idx(\vec{x}) = 3$, a sum of position indexes of the third sequences $\vec{y}$ is $\Sigma\ idx(\vec{y}) = 1$, and a sum of position indexes of the fourth sequences $\vec{y}$ is $\Sigma\ idx(\vec{y}) = 2$. A Taylor expansion of an ambiguity function of the first sequence group at zero Doppler may be expressed as:

$$A(\tau,f) = \sum_{l=0}^{L-\tau-1} x_l x_{l+\tau} e^{jl\varphi} + y_l y_{l+\tau} e^{j(T+l)\varphi} + y_l y_{l+\tau} e^{j(2T+L-l-1)\varphi} + x_l x_{l+\tau} e^{j(3T+L-l-1)\varphi}$$

$$= \sum_{l=0}^{L-\tau-1} x_l x_{l+\tau}(1 + jl\varphi + j^2 l^2 \varphi^2/2 + \cdots)$$

$$+ y_l y_{l+\tau}(1 + j(T+l)\varphi + j^2(T+l)^2 \varphi^2/2 + \cdots)$$

$$+ y_l y_{l+\tau}(1 + j(2T+L-l-1)\varphi + j^2(2T+L-l-1)^2 \varphi^2/2 + \cdots)$$

$$+ x_l x_{l+\tau}(1 + j(3T+L-l-1)\varphi + j^2(3T+L-l-1)^2 \varphi^2/2 + \cdots)$$

$$= (4L + j(6T + 2L - 2)L\varphi)\delta(\tau) + o(\varphi)$$

As can be learned from the foregoing expression, a first-order term in the Taylor expansion of the ambiguity function of the first sequence group with a length of $N = 4$ at zero Doppler is set to zero. Therefore, a pulse train obtained based on the first sequence group can be resilient to a Doppler frequency shift with first-order linear phase variations.

For example, sequence lengths of the first sequence, the second sequence, the third sequence, and the fourth sequence are $L = 4$, that is, each sequence includes four symbols, where $\vec{x} = [+1, +1, +1, -1]$ and $\vec{y} = [+1, +1, -1, +1]$. In this case, $\vec{x} = [-1, +1, +1, +1]$ and $\vec{y} = [+1, -1, +1, +1]$. When $N = 4$, the pulse train obtained based on the first sequence group may be shown in FIG. 13. The pulse train includes four pulses, and the four pulses respectively carry the eight sequences in the first sequence group $(\vec{x},\vec{y},\vec{y},\vec{x})$ sequentially. When $N = 4$, the first sequence group provided in Implementation 3 is the same as that provided in Implementation 1. Therefore, the pulse train obtained based on the first sequence group provided in Implementation 3 is similarly shown in FIG. 10.

When $N$ = 8, the second sequence group is $(\vec{x},\vec{y},\vec{y},\vec{x})$, and the third sequence group is $(\vec{y},\vec{x},\vec{x},\vec{y})$. In this case, the first sequence group is $(\vec{x},\vec{y},\vec{y},\vec{x},\vec{y},\vec{x},\vec{x},\vec{y})$. In the first sequence group, a sum of position indexes of the first sequences $\vec{x}$ is $\Sigma\ idx(\vec{x})$ = 3, a sum of position indexes of the second sequences $\vec{x}$ is $\Sigma\ idx(\vec{x})$ = 11, a sum of position indexes of the third sequences $\vec{y}$ is $\Sigma\ idx(\vec{y})$ = 3, and a sum of position indexes of the fourth sequences $\vec{y}$ is $\Sigma\ idx(\vec{y})$ = 11. A Taylor expansion of an ambiguity function of the first sequence group at zero Doppler may be expressed as:

$$A(\tau, v) = \sum_{l=0}^{L-\tau-1} x_l x_{l+\tau} e^{jl\varphi} + y_l y_{l+\tau} e^{j(T+l)\varphi} + y_l y_{l+\tau} e^{j(2T+l)\varphi} + x_l x_{l+\tau} e^{j(3T+l)\varphi}$$

$$+ y_l y_{l+\tau} e^{j(4T+L-l-1)\varphi} + x_l x_{l+\tau} e^{j(5T+L-l-1)\varphi} + x_l x_{l+\tau} e^{j(6T+L-l-1)\varphi}$$

$$+ y_l y_{l+\tau} e^{j(7T+L-l-1)\varphi}$$

$$= \sum_{l=0}^{L-\tau-1} x_l x_{l+\tau}(1 + jl\varphi + j^2 l^2 \varphi^2/2 + \cdots)$$

$$+ y_l y_{l+\tau}(1 + j(T+l)\varphi + j^2(T+l)^2\varphi^2/2 + \cdots)$$

$$+ y_l y_{l+\tau}(1 + j(2T+l)\varphi + j^2(2T+l)^2\varphi^2/2 + \cdots)$$

$$+ x_l x_{l+\tau}(1 + j(3T+l)\varphi + j^2(3T+l)^2\varphi^2/2 + \cdots)$$

$$+ y_l y_{l+\tau}(1 + j(4T+L-l-1)\varphi + j^2(4T+L-l-1)^2\varphi^2/2 + \cdots)$$

$$+ x_l x_{l+\tau}(1 + j(5T+L-l-1)\varphi + j^2(5T+L-l-1)^2\varphi^2/2 + \cdots)$$

$$+ x_l x_{l+\tau}(1 + j(6T+L-l-1)\varphi + j^2(6T+L-l-1)^2\varphi^2/2 + \cdots)$$

$$+ y_l y_{l+\tau}(1 + j(7T+L-l-1)\varphi + j^2(7T+L-l-1)^2\varphi^2/2 + \cdots)$$

$$= (8L + j(28T + 4L - 4)L\varphi)\delta(\tau) + o(\varphi)$$

As can be learned from the foregoing expression, a first-order term in the Taylor expansion of the ambiguity function of the first sequence group with a length of $N$ = 8 at zero Doppler is set to zero. Therefore, a pulse train obtained based on the first sequence group can be resilient to a Doppler frequency shift with first-order linear phase variations.

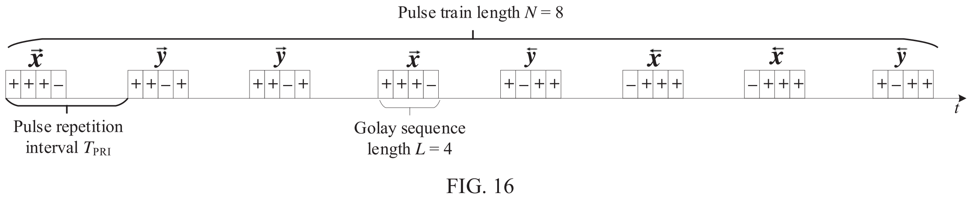

For example, sequence lengths of the first sequence, the second sequence, the third sequence, and the fourth sequence are L = 4, that is, each sequence includes four symbols, where $\vec{x}$ = [+1, +1, +1, -1] $and\ \vec{y}$ = [+1, +1, -1, +1]. In this case, $\vec{x}$ = [-1, +1, +1, +1] and $\vec{y}$ = [+1, -1, +1, +1]. When $N$ = 8, the pulse train obtained based on the first sequence group may be shown in FIG. 16. The pulse train includes eight pulses, and the eight pulses respectively carry the eight sequences in the first sequence group $(\vec{x},\vec{y},\vec{y},\vec{x},\vec{y},\vec{x},\vec{x},\vec{y})$ sequentially.

When $N$ = 16, the second sequence group is $(\vec{x},\vec{y},\vec{y},\vec{x},\vec{y},\vec{x},\vec{x},\vec{y})$, and the third sequence group is $(\vec{y},\vec{x},\vec{x},\vec{y},\vec{x},\vec{y},\vec{y},\vec{x})$. In this case, the first sequence group is $(\vec{x},\vec{y},\vec{y},\vec{x},\vec{y},\vec{x},\vec{x},\vec{y},\vec{y},\vec{x},\vec{x},\vec{y},\vec{x},\vec{y},\vec{y},\vec{x})$. In the first sequence group, a sum of position indexes of the first sequences $\vec{x}$ is $\Sigma\ idx(\vec{x})$ = 14, a sum of position indexes of the second sequences $\vec{x}$ is $\Sigma\ idx(\vec{x})$ = 46, a sum of position indexes of the third sequences $\vec{y}$ is $\Sigma\ idx(\vec{y})$ = 14, and a sum of position indexes of the fourth sequences $\vec{y}$ is $\Sigma\ idx(\vec{y})$ = 46. A Taylor expansion of an ambiguity function of the first sequence group at zero Doppler may be expressed as:

$$A(\tau,f) = \sum_{l=0}^{L-\tau-1} x_l x_{l+\tau} e^{jl\varphi} + y_l y_{l+\tau} e^{j(T+l)\varphi} + y_l y_{l+\tau} e^{j(2T+l)\varphi} + x_l x_{l+\tau} e^{j(3T+l)\varphi}$$

$$+ y_l y_{l+\tau} e^{j(4T+l)\varphi} + x_l x_{l+\tau} e^{j(5T+l)\varphi} + x_l x_{l+\tau} e^{j(6T+l)\varphi} + y_l y_{l+\tau} e^{j(7T+l)\varphi}$$

$$+ y_l y_{l+\tau} e^{j(8T+L-l-1)\varphi} + x_l x_{l+\tau} e^{j(9T+L-l-1)\varphi} + x_l x_{l+\tau} e^{j(10T+L-l-1)\varphi}$$

$$+ y_l y_{l+\tau} e^{j(11T+L-l-1)\varphi} + x_l x_{l+\tau} e^{j(12T+L-l-1)\varphi} + y_l y_{l+\tau} e^{j(13T+L-l-1)\varphi}$$

$$+ y_l y_{l+\tau} e^{j(14T+L-l-1)\varphi} + x_l x_{l+\tau} e^{j(15T+L-l-1)\varphi}$$

$$= \sum_{l=0}^{L-\tau-1} x_l x_{l+\tau}(1 + jl\varphi + j^2 l^2 \varphi^2/2 + \cdots)$$

$$+ y_l y_{l+\tau}(1 + j(T+l)\varphi + j^2(T+l)^2\varphi^2/2 + \cdots)$$

$$+ y_l y_{l+\tau}(1 + j(2T+l)\varphi + j^2(2T+l)^2\varphi^2/2 + \cdots)$$

$$+ x_l x_{l+\tau}(1 + j(3T+l)\varphi + j^2(3T+l)^2\varphi^2/2 + \cdots)$$

$$+ y_l y_{l+\tau}(1 + j(4T+l)\varphi + j^2(4T+l)^2\varphi^2/2 + \cdots)$$

$$+ x_l x_{l+\tau}(1 + j(5T+l)\varphi + j^2(5T+l)^2\varphi^2/2 + \cdots)$$

$$+ x_l x_{l+\tau}(1 + j(6T+l)\varphi + j^2(6T+l)^2\varphi^2/2 + \cdots)$$

$$+ y_l y_{l+\tau}(1 + j(7T+l)\varphi + j^2(7T+l)^2\varphi^2/2 + \cdots)$$

$$+ y_l y_{l+\tau}(1 + j(8T+L-l-1)\varphi + j^2(8T+L-l-1)^2\varphi^2/2 + \cdots)$$

$$+ x_l x_{l+\tau}(1 + j(9T+L-l-1)\varphi + j^2(9T+L-l-1)^2\varphi^2/2 + \cdots)$$

$$+ x_l x_{l+\tau}(1 + j(10T+L-l-1)\varphi + j^2(10T+L-l-1)^2\varphi^2/2 + \cdots)$$

$$+ y_l y_{l+\tau}(1 + j(11T+L-l-1)\varphi + j^2(11T+L-l-1)^2\varphi^2/2 + \cdots)$$

$$+ x_l x_{l+\tau}(1 + j(12T+L-l-1)\varphi + j^2(12T+L-l-1)^2\varphi^2/2 + \cdots)$$

$$+ y_l y_{l+\tau}(1 + j(13T+L-l-1)\varphi + j^2(13T+L-l-1)^2\varphi^2/2 + \cdots)$$

$$+ y_l y_{l+\tau}(1 + j(14T+L-l-1)\varphi + j^2(14T+L-l-1)^2\varphi^2/2 + \cdots)$$

$$+ x_l x_{l+\tau}(1 + j(15T+L-l-1)\varphi + j^2(15T+L-l-1)^2\varphi^2/2 + \cdots)$$

$$= (16L + j(120TL + 8L - 8)L\varphi)\delta(\tau) + o(\varphi)$$

As can be learned from the foregoing expression, a first-order term in the Taylor expansion of the ambiguity function of the first sequence group with a length of $N = 16$ at zero Doppler is set to zero. Therefore, a pulse train obtained based on the first sequence group can be resilient to a Doppler frequency shift with first-order linear phase variations.

The communication apparatus may obtain a first sequence group with any length of $N$ based on the foregoing Implementation 3. The first sequence group ($\vec{x},\vec{y},\vec{y},\vec{x},\vec{y},\vec{x},\vec{x},\vec{y}$, ...) with $N > 16$ may be determined with reference to the foregoing implementation of the first sequence group when $N \leq 16$, and examples thereof are not provided herein. The pulse train obtained based on the first sequence group with the length of $N$ provided in Implementation 3 can be resilient to a Doppler frequency shift with first-order linear phase variations.

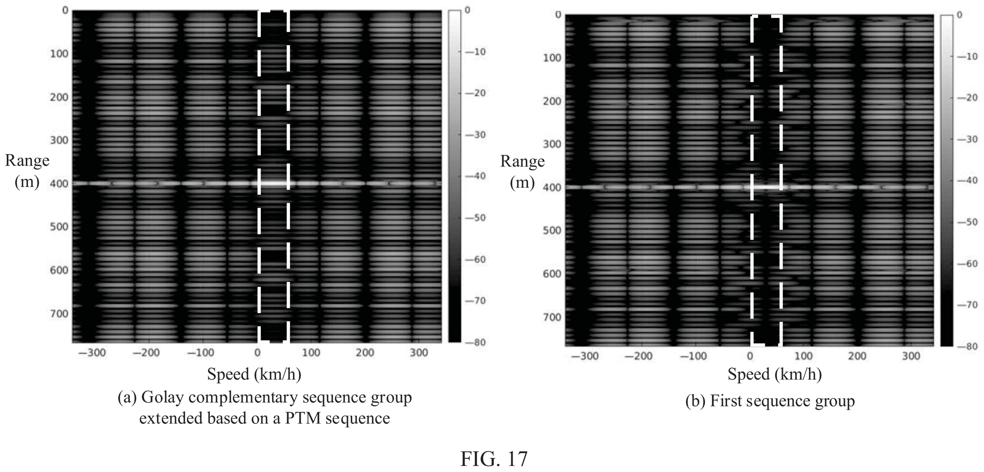

FIG. 17 compares, for a Doppler frequency shift with linear phase variations, an ambiguity function (as shown in (a) in FIG. 17) of a Golay complementary sequence group extended based on a PTM sequence and an ambiguity function (as shown in (b) in FIG. 17) of the first sequence group provided in the foregoing Implementation 3. It can be learned from (a) in FIG. 17 that, for a Doppler frequency shift with linear phase variations, there is no low-ambiguity region around a main peak of the ambiguity function of the Golay complementary sequence group extended based on the PTM sequence, and range sidelobes are large. As shown in (b) in FIG. 17, the ambiguity function of the first sequence group provided in the foregoing Implementation 3 can obtain a small low-ambiguity region around a main peak, and can improve performance of target detection.

S902: The communication apparatus sends a pulse train, where the pulse train is obtained based on the first sequence group, and one pulse in the pulse train corresponds to one of the $N$ sequences.

In the foregoing Implementation 1 to Implementation 3, the communication apparatus determines the pulse train based on the first sequence group, where the pulse train may include $N$ pulse trains, the $N$ pulses are in a one-to-one correspondence with the $N$ sequences in the first sequence group, and each pulse carries a corresponding sequence.

In an implementation, the communication apparatus sends the pulse train and receives an echo signal, and the communication apparatus determines a range and/or a speed based on the echo signal. For example, the echo signal is an echo signal reflected by a target after the pulse train is transmitted to the target, and the communication apparatus may determine a range and/or a speed of the target based on the echo signal. Specifically, the communication apparatus may determine the range and/or the speed of the target by obtaining an ambiguity function of the signal or by using a sequence cross-correlation.

In another implementation, a first communication apparatus may perform the pulse train transmission method shown in FIG. 9, that is, determine the first sequence group and send the pulse train. A second communication apparatus receives the echo signal of the pulse train. For example, the echo signal is an echo signal of the pulse train, reflected by the target to the second communication apparatus after the pulse train is transmitted to the target. The second communication apparatus is a communication apparatus that is clock-synchronized with the first communication apparatus. The second communication apparatus may determine a location and/or a speed of the target based on the echo signal. Specifically, the second communication apparatus knows that the pulse train is obtained based on the first sequence group, and the second communication apparatus may determine the range and/or the speed of the target by obtaining the ambiguity function of the signal or by using the sequence cross-correlation.

The first communication apparatus and the second communication apparatus may maintain clock synchronization by using a wired connection (for example, a communication medium such as an optical fiber), or may implement clock synchronization in a wireless communication mode.

For example, the first communication apparatus may be a transmitter of a multistatic radar, and the second communication apparatus may be a receiver of the multistatic radar. The transmitter and the receiver of the multistatic radar may be placed at different locations. However, this application is not limited thereto. The first communication apparatus and the second communication apparatus may be different communication devices or apparatuses configured in different communication devices.

In an implementation, based on the first sequence group provided in one of the foregoing Implementation 1 to Implementation 3, the communication apparatus may determine a fourth sequence group and a fifth sequence group by using space-time coding, where both the fourth sequence group and the fifth sequence group include $N$ sequences.

The fourth sequence group and the fifth sequence group include one or more of the first sequence, the second sequence, the third sequence, and the fourth sequence; and the fourth sequence group and the fifth sequence group further include one or more of a fifth sequence, a sixth sequence, a seventh sequence, and an eighth sequence. Positive/Negative signs of symbols at identical positions in the fifth sequence and the first sequence are opposite, that is, the fifth sequence is $-\vec{x}$. Positive/Negative signs of symbols at identical positions in the sixth sequence and the second sequence are opposite, that is, the sixth sequence is $-\vec{y}$. Positive/Negative signs of symbols at identical positions in the seventh sequence and the third sequence are opposite, that is, the seventh sequence is $-\vec{x}$. Positive/Negative signs of symbols at identical positions in the eighth sequence and the fourth sequence are opposite, that is, the eighth sequence is $-\vec{y}$.

The fourth sequence group and the fifth sequence group may correspond to the first antenna and the second antenna respectively. That the communication apparatus sends the pulse train includes: The communication apparatus sends a first pulse train by using a first antenna, and sends a second pulse train by using a second antenna. Both the first pulse train and the second pulse train include $N$ pulses and have a same start moment and a same pulse period, the $N$ pulses in the first pulse train respectively carry the sequences in the fourth sequence group sequentially, and the $N$ pulses in the second pulse train respectively carry the sequences in the fifth sequence group sequentially.

Optionally, the first antenna and the second antenna are antennas in different directions of a dual-polarized antenna. For example, the first antenna is an antenna in a vertical polarization direction of the dual-polarized antenna, and the second antenna is an antenna in a horizontal polarization direction of the dual-polarized antenna; or the first antenna is an antenna in a horizontal polarization direction of the dual-polarized antenna, and the second antenna is an antenna in a vertical polarization direction of the dual-polarized antenna.

For example, the space-time coding may be specifically Alamouti (Alamouti) space-time coding.

Specifically, the communication apparatus may obtain the following by encoding two symbols $a$ and $b$ based on Alamouti space-time coding:

$$C = \begin{bmatrix} a & -b^* \\ b & a^* \end{bmatrix}$$

*a\** and *b\** respectively represent conjugates of *a and b*. A matrix *C* obtained through Alamouti space-time coding is an orthogonal matrix, that is, the matrix *C* satisfies:

$$CC^H = \begin{bmatrix} a & -b^* \\ b & a^* \end{bmatrix}\begin{bmatrix} a & -b^* \\ b & a^* \end{bmatrix}^H = \begin{bmatrix} |a|^2 + |b|^2 & 0 \\ 0 & |a|^2 + |b|^2 \end{bmatrix} = (|a|^2 + |b|^2)I$$

$|a|$ and $|b|$ are amplitudes of *a and b* respectively, and *I* is an identity matrix.

The following first uses the first sequence group provided in Implementation 1 as an example for description.

The first sequence group with $N = 4$ provided in the foregoing Implementation 1 is $(\vec{x}, \vec{y}, \vec{y}, \vec{x})$, and the communication apparatus may obtain a sequence group set based on the first sequence group and by using space-time coding:

$$X_{N=4} = \begin{bmatrix} \vec{x} & -\vec{y} & -\overleftarrow{y} & -\overleftarrow{x} \\ \vec{y} & \vec{x} & \overleftarrow{x} & -\overleftarrow{y} \end{bmatrix}$$

The sequence group set includes 2*N* sequences. In the sequence group set, the first row $(\vec{x}, -\vec{y}, -\vec{y}, -\vec{x})$ is the fourth sequence group corresponding to the first antenna, and the second row $(\vec{y}, \vec{x}, \vec{x}, -\vec{y})$ is the fifth sequence group corresponding to the second antenna. The fourth sequence group and the fifth sequence group are orthogonal to each other, that is, $X_{N=4}$ is an orthogonal matrix and satisfies:

$$X_{N=4}X_{N=4}^H = \begin{bmatrix} \vec{x} & -\vec{y} & -\overleftarrow{y} & -\overleftarrow{x} \\ \vec{y} & \vec{x} & \overleftarrow{x} & -\overleftarrow{y} \end{bmatrix}\begin{bmatrix} \vec{x} & \vec{y} \\ -\vec{y} & \vec{x} \\ -\overleftarrow{y} & \overleftarrow{x} \\ -\overleftarrow{x} & -\overleftarrow{y} \end{bmatrix}$$

$$= \begin{bmatrix} |\vec{x}|^2 + |\vec{y}|^2 + |\overleftarrow{x}|^2 + |\overleftarrow{y}|^2 & 0 \\ 0 & |\vec{x}|^2 + |\vec{y}|^2 + |\overleftarrow{x}|^2 + |\overleftarrow{y}|^2 \end{bmatrix}$$

From the sequence group set $X_{N=4}$, it can be learned that the sequences in the fourth sequence group are sequentially the sequences in the first sequence group, and that positive/negative signs of the sequences and an arrangement order of the sequences in the fifth sequence group are determined by space-time coding. Moreover, the fourth sequence group and the fifth sequence group are required to be mutually orthogonal.

In an implementation, the communication apparatus may obtain a Golay complementary sequence group (*x, y, y, x*) with a length of $N = 4$ and extended based on the PTM sequence, where *x* and y both represent forward-order sequences, that is, $(\vec{x}, \vec{y}, \vec{y}, \vec{x})$. The communication apparatus obtains, based on Alamouti space-time coding and based on two consecutive sequences in the sequence group, that is, two sequences whose position indexes are 2*i and 2i* + 1, two columns of sequences whose position indexes are 2*i and 2i* + 1 in a sequence group set in which no forward/reverse order adjustment is performed on sequences, where $i = 0, ..., N/2-1$, and a value range of the position index is 0 to $N - 1$. For example, *i =0,* and the communication apparatus obtains the following by using Alamouti space-time coding and based on two sequences *x* and y whose position indexes are 0 and 1 in the extended Golay complementary sequence group:

$$Q = \begin{bmatrix} x & -y^* \\ y & x^* \end{bmatrix} = \begin{bmatrix} x & -y \\ y & x \end{bmatrix}$$

Because symbols in the Golay sequence are 1 *or* - 1, a conjugate of the Golay sequence is still the sequence itself, that is, *y\* = y* and *x\* = x*. For *i* = 1, the communication apparatus obtains the following by using Alamouti space-time coding and based on two sequences *y* and x whose position indexes are 2 and 3 in the first sequence group:

$$P = \begin{bmatrix} -y & -x \\ x & -y \end{bmatrix}$$

Selection of positive/negative signs of sequences in **P** enables a matrix [Q **P**] formed by **Q** and **P** to be an orthogonal matrix.

$$[\boldsymbol{Q} \quad \boldsymbol{P}] = \begin{bmatrix} x & -y & -y & -x \\ y & x & x & -y \end{bmatrix}$$

The matrix **[Q P]** is a sequence group set in which no forward/reverse order adjustment is performed on sequences. The communication apparatus may determine a forward/reverse order of a sequence in an $n^{th}$ column in the matrix based on a forward/reverse order of an $n^{th}$ sequence in the first sequence group, where, for example, $n = 1, 2, ..., N$. Orders of the four sequences in the first sequence group $(\vec{x},\vec{y},\overleftarrow{y},\overleftarrow{x})$ are sequentially forward, forward, reverse, and reverse. Therefore, orders of sequences in the four columns of the matrix **[Q P]** are sequentially forward, forward, reverse, and reverse. In this way, the sequence group set $\boldsymbol{X}_{N=4}$ is obtained.

When $N = 4$, a Taylor expansion of an ambiguity function of the sequence group set $\boldsymbol{X}_{N=4}$ (the sequence group set includes $2N = 8$ sequences) obtained based on the first sequence group, at zero Doppler, may be expressed as:

$$A(\tau, \nu) = \sum_{l=0}^{L-\tau-1} x_l x_{l+\tau} e^{jl\varphi} + y_l y_{l+\tau} e^{j(T+L-l-1)\varphi} + y_l y_{l+\tau} e^{j(2T+l)\varphi} + x_l x_{l+\tau} e^{j(3T+L-l-1)\varphi}$$

$$= \sum_{l=0}^{L-\tau-1} x_l x_{l+\tau} (1 + jl\varphi + j^2 l^2 \varphi^2 / 2 + \cdots)$$

$$+ y_l y_{l+\tau} (1 + j(T + L - l - 1)\varphi + j^2 (T + L - l - 1)^2 \varphi^2 / 2 + \cdots)$$

$$+ y_l y_{l+\tau} (1 + j(2T + l)\varphi + j^2 (2T + l)^2 \varphi^2 / 2 + \cdots)$$

$$+ x_l x_{l+\tau} (1 + j(3T + L - l - 1)\varphi + j^2 (3T + L - l - 1)^2 \varphi^2 / 2 + \cdots)$$

$$= (4L + j(6T + 2L - 2)L\varphi)\delta(\tau) + o(\varphi)$$

As can be learned from the foregoing expression, a first-order term in the Taylor expansion of the ambiguity function of the sequence group set at zero Doppler is set to zero. Therefore, a pulse train obtained based on the sequence group set can be resilient to a Doppler frequency shift with first-order linear phase variations. In addition, because the sequence groups in the sequence group set are separately sent by using a plurality of antennas, a signal-to-noise ratio can be increased, and accuracy of target detection can be improved.

When $N = 8$, the pulse train obtained based on the first sequence group may be shown in FIG. 16. The pulse train includes eight pulses, and the eight pulses respectively carry eight sequences in the first sequence group $(\vec{x},\vec{y},\vec{y},\vec{x},\vec{y},\vec{x},\vec{x},\vec{y})$ sequentially.

The first sequence group with $N = 8$ provided in the foregoing Implementation 1 is $(\vec{x},\vec{y},\vec{y},\vec{x},\vec{y},\vec{x},\vec{x},\vec{y})$, and the communication apparatus may obtain a sequence group set based on the first sequence group and by using space-time coding:

$$\boldsymbol{X}_{N=8} = \begin{bmatrix} \vec{x} & -\vec{y} & -\overleftarrow{y} & -\overleftarrow{x} & -\overleftarrow{y} & -\overleftarrow{x} & \vec{x} & -\vec{y} \\ \vec{y} & \vec{x} & \overleftarrow{x} & -\overleftarrow{y} & \overleftarrow{x} & -\overleftarrow{y} & \vec{y} & \vec{x} \end{bmatrix}$$

The sequence group set includes 2N = 16 sequences. In the sequence group set, the first row $(\vec{x}, -\vec{y}, -\overleftarrow{y}, -\overleftarrow{x}, -\overleftarrow{y}, -\overleftarrow{x}, \vec{x}, -\vec{y})$ is the fourth sequence group corresponding to the first antenna, and the second row $(\vec{y},\vec{x},\overleftarrow{x}, -\overleftarrow{y},\overleftarrow{x}, -\overleftarrow{y},\vec{y},\vec{x})$ is the fifth sequence group corresponding to the second antenna. The fourth sequence group and the fifth sequence group are orthogonal to each other, that is, $\boldsymbol{X}_{N=8}$ is an orthogonal matrix.

From $\boldsymbol{X}_{N=8}$, it can be learned that the sequences in the fourth sequence group are sequentially the sequences in the first sequence group, and that positive/negative signs of the sequences and an arrangement order of the sequences in the fifth sequence group are determined by space-time coding. Moreover, the fourth sequence group and the fifth sequence group are required to be mutually orthogonal.

In an implementation, the communication apparatus may obtain a Golay complementary sequence group (*x, y, y, x, y, x, x,y*) with a length of $N = 8$ and extended based on the PTM sequence, where *x* and y both represent forward-order sequences. The communication apparatus obtains, based on Alamouti space-time coding and based on two consecutive sequences in the sequence, that is, two sequences whose position indexes are $2i$ and $2i + 1$, two columns of sequences whose position indexes are $2i$ and $2i + 1$ in a sequence group set in which no forward/reverse order adjustment is performed on sequences, where $i = 0, ..., N/2-1$, and a value range of the position index is 0 to $N - 1$. Then the communication apparatus sequentially adjusts, based on forward/reverse orders of the sequences in the first sequence group, forward/reverse orders of corresponding sequences in the sequence group set in which no forward/reverse order adjustment is performed on the sequences, thereby obtaining a sequence group set $X_{N=8}$ when $N = 8$.

When $N = 8$, a Taylor expansion of an ambiguity function of the sequence group set (the sequence group set includes $2N = 16$ sequences) obtained based on the first sequence group, at zero Doppler, may be expressed as:

$$
A(\tau, v) = \sum_{l=0}^{L-\tau-1} x_l x_{l+\tau} e^{jl\varphi} + y_l y_{l+\tau} e^{j(T+L-l-1)\varphi} + y_l y_{l+\tau} e^{j(2T+l)\varphi} + x_l x_{l+\tau} e^{j(3T+L-l-1)\varphi}
$$

$$
+ y_l y_{l+\tau} e^{j(4T+l)\varphi} + x_l x_{l+\tau} e^{j(5T+L-l-1)\varphi} + x_l x_{l+\tau} e^{j(6T+l)\varphi}
$$

$$
+ y_l y_{l+\tau} e^{j(7T+L-l-1)\varphi}
$$

$$
= \sum_{l=0}^{L-\tau-1} x_l x_{l+\tau}(1 + jl\varphi + j^2 l^2 \varphi^2/2 + \cdots)
$$

$$
+ y_l y_{l+\tau}(1 + j(T + L - l - 1)\varphi + j^2(T + L - l - 1)^2\varphi^2/2 + \cdots)
$$

$$
+ y_l y_{l+\tau}(1 + j(2T + l)\varphi + j^2(2T + l)^2\varphi^2/2 + \cdots)
$$

$$
+ x_l x_{l+\tau}(1 + j(3T + L - l - 1)\varphi + j^2(3T + L - l - 1)^2\varphi^2/2 + \cdots)
$$

$$
+ y_l y_{l+\tau}(1 + j(4T + l)\varphi + j^2(4T + l)^2\varphi^2/2 + \cdots)
$$

$$
+ x_l x_{l+\tau}(1 + j(5T + L - l - 1)\varphi + j^2(5T + L - l - 1)^2\varphi^2/2 + \cdots)
$$

$$
+ x_l x_{l+\tau}(1 + j(6T + l)\varphi + j^2(6T + l)^2\varphi^2/2 + \cdots)
$$

$$
+ y_l y_{l+\tau}(1 + j(7T + L - l - 1)\varphi + j^2(7T + L - l - 1)^2\varphi^2/2 + \cdots)
$$

$$
= (8L + j(28T + 4L - 4)L\varphi)\delta(\tau) + o(\varphi)
$$

As can be learned from the foregoing expression, a first-order term in the Taylor expansion of the ambiguity function of the sequence group set at zero Doppler is set to zero. Therefore, a pulse train obtained based on the sequence group set can be resilient to a Doppler frequency shift with first-order linear phase variations. In addition, because the sequence groups in the sequence group set are separately sent by using a plurality of antennas, the signal-to-noise ratio can be further increased, and accuracy of target detection can be improved.

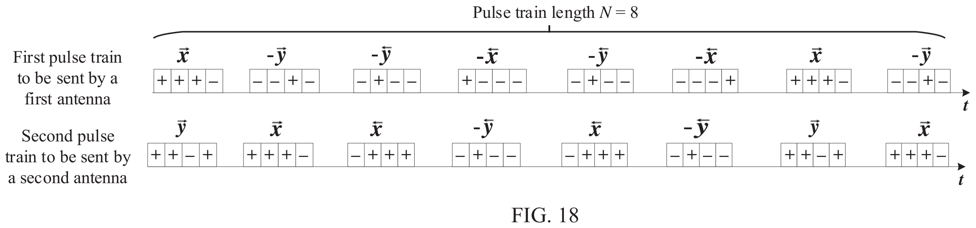

For example, sequence lengths of the first sequence, the second sequence, the third sequence, and the fourth sequence are $L = 4$, that is, each sequence includes four symbols, where $\vec{x} = [+1, +1, +1, -1]$ and $\vec{y} = [+1, +1, -1, +1]$. In this case, $\vec{x} = [-1, +1, +1, +1]$, $\vec{y} = [+1, -1, +1, +1]$, $-\vec{x} = [-1, -1, -1, +1]$, $-\vec{y} = [-1, -1, +1, -1]$, $-\vec{x} = [+1, -1, -1, -1]$, and $-\vec{y} = [-1, +1, -1, -1]$. When $N = 8$, the first pulse train to be sent by the first antenna and the second pulse train to be sent by the second antenna, which are obtained based on the fourth sequence group and the fifth sequence group in the sequence group set $X_{N=8}$, may be shown in FIG. 18. As shown in FIG. 18, the first pulse train and the second pulse train have a same start moment and a same pulse repetition interval (that is, a pulse period). While sending the $1^{st}$ sequence $\vec{x}$ in the fourth sequence group by using the first antenna, the communication apparatus sends the $1^{st}$ sequence $\vec{y}$ in the fifth sequence group by using the second antenna, and so on.

When $N \geq 16$, an arrangement of the sequences in the fourth sequence group and the fifth sequence group in the sequence group set obtained by the communication apparatus based on the first sequence group satisfies the following rules:

when sequence number $i$ of a sequence is an even number, if sequence $i$ in the fourth sequence group is the first sequence $\vec{x}$, sequence $N/2 + i$ is the sixth sequence $-\vec{y}$; if sequence $i$ in the fourth sequence group is the second sequence $\vec{y}$, sequence $N/2 + i$ is the fifth sequence $-\vec{x}$; if sequence $i$ in the fourth sequence group is the third sequence $\vec{x}$, sequence $N/2 + i$ is the eighth sequence $-\vec{y}$; if sequence $i$ in the fourth sequence group is the fourth sequence $\vec{y}$,

sequence $N/2 + i$ is the seventh sequence $-\vec{x}$; if sequence $i$ in the fourth sequence group is the fifth sequence $-\vec{x}$, sequence $N/2 + i$ is the second sequence $\vec{y}$; if sequence $i$ in the fourth sequence group is the sixth sequence $-\vec{y}$, sequence $N/2 + i$ is the first sequence $\vec{x}$; if sequence $i$ in the fourth sequence group is the seventh sequence $-\vec{x}$, sequence $N/2 + i$ is the fourth sequence $\vec{y}$; or if sequence $i$ in the fourth sequence group is the eighth sequence $-\vec{y}$, sequence $N/2 + i$ is the third sequence $\vec{x}$; or

when sequence number $i$ of a sequence is an odd number, if sequence $i$ in the fourth sequence group is the first sequence $\vec{x}$, sequence $N/2 + i$ is the second sequence $\vec{y}$; if sequence $i$ in the fourth sequence group is the second sequence $\vec{y}$, sequence $N/2 + i$ is the first sequence $\vec{x}$; if sequence $i$ in the fourth sequence group is the third sequence $\vec{x}$, sequence $N/2 + i$ is the fourth sequence $\vec{y}$; if sequence $i$ in the fourth sequence group is the fourth sequence $\vec{y}$, sequence $N/2 + i$ is the third sequence $\vec{x}$; if sequence $i$ in the fourth sequence group is the fifth sequence $-\vec{x}$, sequence $N/2 + i$ is the sixth sequence $-\vec{y}$; if sequence $i$ in the fourth sequence group is the sixth sequence $-\vec{y}$, sequence $N/2 + i$ is the fifth sequence $-\vec{x}$; if sequence $i$ in the fourth sequence group is the seventh sequence $-\vec{x}$, sequence $N/2 + i$ is the eighth sequence $-\vec{y}$; or if sequence $i$ in the fourth sequence group is the eighth sequence $-\vec{y}$, sequence $N/2 + i$ is the seventh sequence $-\vec{x}$; and

when sequence number $i$ of a sequence is an even number, if sequence $i$ in the fifth sequence group is the first sequence $\vec{x}$, sequence $N/2 + i$ is the second sequence $\vec{y}$; if sequence $i$ in the fifth sequence group is the second sequence $\vec{y}$, sequence $N/2 + i$ is the first sequence $\vec{x}$; if sequence $i$ in the fifth sequence group is the third sequence $\vec{x}$, sequence $N/2 + i$ is the fourth sequence $\vec{y}$; if sequence $i$ in the fifth sequence group is the fourth sequence $\vec{y}$, sequence $N/2 + i$ is the third sequence $\vec{x}$; if sequence $i$ in the fifth sequence group is the fifth sequence $-\vec{x}$, sequence $N/2 + i$ is the sixth sequence $-\vec{y}$; if sequence $i$ in the fifth sequence group is the sixth sequence $-\vec{y}$, sequence $N/2 + i$ is the fifth sequence $-\vec{x}$; if sequence $i$ in the fifth sequence group is the seventh sequence $-\vec{x}$, sequence $N/2 + i$ is the eighth sequence $-\vec{y}$; or if sequence $i$ in the fifth sequence group is the eighth sequence $-\vec{y}$, sequence $N/2 + i$ is the seventh sequence $-\vec{x}$; or

when sequence number $i$ of a sequence is an odd number, if sequence $i$ in the fifth sequence group is the first sequence $\vec{x}$, sequence $N/2 + i$ is the sixth sequence $-\vec{y}$; if sequence $i$ in the fifth sequence group is the second sequence $\vec{y}$, sequence $N/2 + i$ is the fifth sequence $-\vec{x}$; if sequence $i$ in the fifth sequence group is the third sequence $\vec{x}$, sequence $N/2 + i$ is the eighth sequence $-\vec{y}$; if sequence $i$ in the fifth sequence group is the fourth sequence $\vec{y}$, sequence $N/2 + i$ is the seventh sequence $-\vec{x}$; if sequence $i$ in the fifth sequence group is the fifth sequence $-\vec{x}$, sequence $N/2 + i$ is the second sequence $\vec{y}$; if sequence $i$ in the fifth sequence group is the sixth sequence $-\vec{y}$, sequence $N/2 + i$ is the first sequence $\vec{x}$; if sequence $i$ in the fifth sequence group is the seventh sequence $-\vec{x}$, sequence $N/2 + i$ is the fourth sequence $\vec{y}$; or if sequence $i$ in the fifth sequence group is the eighth sequence $-\vec{y}$, sequence $N/2 + i$ is the third sequence $\vec{x}$, where

$$0 \leq i < N/2.$$

For example, the first sequence group with $N = 16$ provided in the foregoing Implementation 1 is $(\vec{x},\vec{y},\vec{y},\vec{x},\vec{y},\vec{x},\vec{x},\vec{y},\vec{y},\vec{x},\vec{x},\vec{y},\vec{x},\vec{y},\vec{y},\vec{x})$, and the communication apparatus may obtain a sequence group set based on the first sequence group and by using space-time coding:

In the sequence group set, the first row $(\vec{x}, -\vec{y}, -\vec{y}, -\vec{x}, -\vec{y}, \vec{x},\vec{x}, -\vec{y}, -\vec{y}, -\vec{x},\vec{x}, -\vec{y},\vec{x}, -\vec{y}, -\vec{y}, -\vec{x})$ is the fourth sequence group corresponding to the first antenna, and the second row $(\vec{y},\vec{x},\vec{x}, -\vec{y},\vec{x}, -\vec{y},\vec{y},\vec{x},\vec{x}, -\vec{y},\vec{y},\vec{x},\vec{y},\vec{x},\vec{x}, -\vec{y})$ is the fifth sequence group corresponding to the second antenna. The fourth sequence group and the fifth sequence group satisfy the foregoing sequence arrangement rules for the fourth sequence group and the fifth sequence group when $N \geq 16$. The fourth sequence group and the fifth sequence group are orthogonal to each other, that is, $X_{N=16}$ is an orthogonal matrix.

From $X_{N=16}$, it can be learned that the sequences in the fourth sequence group are sequentially the sequences in the first sequence group, and that positive/negative signs of the sequences and an arrangement order of the sequences in the fifth sequence group are determined by space-time coding. Moreover, the fourth sequence group and the fifth sequence group are required to be mutually orthogonal.

In an implementation, the communication apparatus may obtain a Golay complementary sequence group $(x, y, y, x, y, x, x, y, y, x, x, y, x, y, y, x)$ with a length of $N = 16$ and extended based on the PTM sequence, where $x$ and y both represent forward-order sequences. The communication apparatus obtains, based on Alamouti space-time coding and based on two consecutive sequences in the sequence, that is, two sequences whose position indexes are $2i$ and $2i + 1$, two columns of sequences whose position indexes are $2i$ and $2i + 1$ in a sequence group set in which no forward/reverse order adjustment is performed on sequences, where $i = 0, ..., N/2-1$, and a value range of the position index is 0 to $N - 1$. Then the communication apparatus sequentially adjusts, based on an arrangement of the sequences in the first sequence group, a forward/reverse order of a sequence in each column of the sequence group set in which no forward/reverse order adjustment is performed on sequences, thereby obtaining a sequence group set $X_{N=16}$ when $N = 16$.

When $N = 16$, a Taylor expansion of an ambiguity function of the sequence group set (the sequence group set includes $2N = 32$ sequences) obtained based on the first sequence group, at zero Doppler, may be expressed as:

$$A(\tau,v) = \sum_{l=0}^{L-\tau-1} x_l x_{l+\tau} e^{jl\varphi} + y_l y_{l+\tau} e^{j(T+L-l-1)\varphi} + y_l y_{l+\tau} e^{j(2T+l)\varphi} + x_l x_{l+\tau} e^{j(3T+L-l-1)\varphi}$$

$$+ y_l y_{l+\tau} e^{j(4T+l)\varphi} + x_l x_{l+\tau} e^{j(5T+L-l-1)\varphi} + x_l x_{l+\tau} e^{j(6T+l)\varphi}$$

$$+ y_l y_{l+\tau} e^{j(7T+L-l-1)\varphi} + y_l y_{l+\tau} e^{j(8T+L-l-1)\varphi} + x_l x_{l+\tau} e^{j(9T+l)\varphi}$$

$$+ x_l x_{l+\tau} e^{j(10T+L-l-1)\varphi} + y_l y_{l+\tau} e^{j(11T+l)\varphi} + x_l x_{l+\tau} e^{j(12T+L-l-1)\varphi}$$

$$+ y_l y_{l+\tau} e^{j(13T+l)\varphi} + y_l y_{l+\tau} e^{j(14T+L-l-1)\varphi} + x_l x_{l+\tau} e^{j(15T+l)\varphi}$$

$$= \sum_{l=0}^{L-\tau-1} x_l x_{l+\tau}(1 + jl\varphi + j^2 l^2 \varphi^2/2 + \cdots)$$

$$+ y_l y_{l+\tau}(1 + j(T+L-l-1)\varphi + j^2(T+L-l-1)^2\varphi^2/2 + \cdots)$$

$$+ y_l y_{l+\tau}(1 + j(2T+l)\varphi + j^2(2T+l)^2\varphi^2/2 + \cdots)$$

$$+ x_l x_{l+\tau}(1 + j(3T+L-l-1)\varphi + j^2(3T+L-l-1)^2\varphi^2/2 + \cdots)$$

$$+ y_l y_{l+\tau}(1 + j(4T+l)\varphi + j^2(4T+l)^2\varphi^2/2 + \cdots)$$

$$+ x_l x_{l+\tau}(1 + j(5T+L-l-1)\varphi + j^2(5T+L-l-1)^2\varphi^2/2 + \cdots)$$

$$+ x_l x_{l+\tau}(1 + j(6T+l)\varphi + j^2(6T+l)^2\varphi^2/2 + \cdots)$$

$$+ y_l y_{l+\tau}(1 + j(7T+L-l-1)\varphi + j^2(7T+L-l-1)^2\varphi^2/2 + \cdots)$$

$$+ y_l y_{l+\tau}(1 + j(8T+L-l-1)\varphi + j^2(8T+L-l-1)^2\varphi^2/2 + \cdots)$$

$$+ x_l x_{l+\tau}(1 + j(9T+l)\varphi + j^2(9T+l)^2\varphi^2/2 + \cdots)$$

$$+ x_l x_{l+\tau}(1 + j(10T+L-l-1)\varphi + j^2(10T+L-l-1)^2\varphi^2/2 + \cdots)$$

$$+ y_l y_{l+\tau}(1 + j(11T+l)\varphi + j^2(11T+l)^2\varphi^2/2 + \cdots)$$

$$+ x_l x_{l+\tau}(1 + j(12T+L-l-1)\varphi + j^2(12T+L-l-1)^2\varphi^2/2 + \cdots)$$

$$+ y_l y_{l+\tau}(1 + j(13T+l)\varphi + j^2(13T+l)^2\varphi^2/2 + \cdots)$$

$$+ y_l y_{l+\tau}(1 + j(14T+L-l-1)\varphi + j^2(14T+L-l-1)^2\varphi^2/2 + \cdots)$$

$$+ x_l x_{l+\tau}(1 + j(15T+l)\varphi + j^2(15T+l)^2\varphi^2/2 + \cdots)$$

$$= (16L + j(120TL + 8L - 8)L\varphi)\delta(\tau) + o(\varphi)$$

As can be learned from the foregoing expression, a first-order term in the Taylor expansion of the ambiguity function of the sequence group set at zero Doppler is set to zero. Therefore, a pulse train obtained based on the sequence group set can be resilient to a Doppler frequency shift with first-order linear phase variations. In addition, because the sequence groups in the sequence group set are separately sent by using a plurality of antennas, the signal-to-noise ratio can be further increased, and accuracy of target detection can be improved.

Based on the first sequence group with $N > 16$ provided in the foregoing Implementation 1, the communication apparatus may obtain, by using space-time coding, the sequence group set including 2N sequences, and the fourth sequence group and the fifth sequence group in the sequence group set are orthogonal to each other. The sequence group set can be resilient to a Doppler frequency shift with first-order linear variations, and achieve a high detection probability for a moving target.

The foregoing describes in detail the sequence group set that is obtained by using space-time coding and based on the first sequence group provided in the foregoing Implementation 1 and that includes the fourth sequence group corresponding to the first antenna and the fifth sequence group corresponding to the second antenna.

In another implementation, the sequence group set $X_N$ may be obtained through construction by the communication apparatus based on the PTM sequence, a sequence group $A_1$, and a sequence group $B_1$. The sequence group $A_1$ and the sequence group $B_1$ each include $N$ sequences, and each sequence in the sequence group includes a plurality of symbols, where at least two sequences are Golay complementary sequences, and symbols in at least two sequences are arranged in opposite orders. The sequence group $A_1$ and the sequence group $B_1$ each include $N/2$ sequences corresponding to the first antenna, and $N/2$ sequences corresponding to the second antenna.

The sequence group $A_1$ and the sequence group $B_1$ may be respectively denoted as:

$$A_1 = \begin{bmatrix} \vec{x} & -\vec{y} \\ \vec{y} & \vec{x} \end{bmatrix} \text{ and } B_1 = \begin{bmatrix} -\overleftarrow{y} & -\overleftarrow{x} \\ \overleftarrow{x} & -\overleftarrow{y} \end{bmatrix}$$

In the sequence group $A_1$ and the sequence group $B_1$, sequences in the first row correspond to the first antenna, and sequences in the second row correspond to the second antenna.

When $N = 4$, the sequence group set $X_{N=4}$ may be obtained through construction based on a PTM sequence with a length of $N/2 = 2$, the sequence group $A_1$, and the sequence group $B_1$, and the PTM sequence with the length of 2 is (0, 1), where 0 corresponds to the sequence group $A_1$, and 1 corresponds to the sequence group $B_1$. Accordingly:

$$X_{N=4} = (A_1, B_1) = \begin{bmatrix} \vec{x} & -\vec{y} & -\overleftarrow{y} & -\overleftarrow{x} \\ \vec{y} & \vec{x} & \overleftarrow{x} & -\overleftarrow{y} \end{bmatrix}$$

When $N = 8$, the sequence group set $X_{N=8}$ may be obtained through construction based on a PTM sequence with a length of $N/2 = 4$, the sequence group $A_1$, and the sequence group $B_1$, and the PTM sequence with the length of 4 is (0, 1, 1, 0), where 0 corresponds to the sequence group $A_1$, and 1 corresponds to the sequence group $B_1$. Accordingly:

$$X_{N=8} = (A_1, B_1, B_1, A_1) = \begin{bmatrix} \vec{x} & -\vec{y} & -\overleftarrow{y} & -\overleftarrow{x} & -\overleftarrow{y} & -\overleftarrow{x} & \vec{x} & -\vec{y} \\ \vec{y} & \vec{x} & \overleftarrow{x} & -\overleftarrow{y} & \overleftarrow{x} & -\overleftarrow{y} & \vec{y} & \vec{x} \end{bmatrix}$$

When $N = 16$, the sequence group set $X_{N=16}$ may be obtained through construction based on a PTM sequence with a length of $N/2 = 8$, the sequence group $A_1$, and the sequence group $B_1$, and the PTM sequence with the length of 8 is (0,1,1,0,1,0,0,1), where 0 corresponds to the sequence group $A_1$, and 1 corresponds to the sequence group $B_1$. Accordingly:

$$X_{N=16} = (A_1, B_1, B_1, A_1, B_1, A_1, A_1, B_1)$$

$$= \begin{bmatrix} \vec{x} & -\vec{y} & -\overleftarrow{y} & -\overleftarrow{x} & -\overleftarrow{y} & -\overleftarrow{x} & \vec{x} & -\vec{y} & -\overleftarrow{y} & -\overleftarrow{x} & \vec{x} & -\vec{y} & \overleftarrow{x} & -\overleftarrow{y} & -\vec{y}, & -\overleftarrow{x} \\ \vec{y} & \vec{x} & \overleftarrow{x} & -\overleftarrow{y} & \overleftarrow{x} & -\overleftarrow{y} & \vec{y} & \vec{x} & \overleftarrow{x} & -\overleftarrow{y} & \vec{y} & \vec{x} & \overleftarrow{y} & \overleftarrow{x} & \vec{x} & -\vec{y} \end{bmatrix}$$

The communication apparatus may further obtain, by using space-time coding and based on the first sequence group provided in the foregoing Implementation 2, the sequence group set that includes the fourth sequence group corresponding to the first antenna and the fifth sequence group corresponding to the second antenna.

The fourth sequence group and the fifth sequence group in the sequence group set obtained by the communication apparatus by using space-time coding and based on the first sequence group provided in the foregoing Implementation 2 satisfy the following rules:

sequence $2i$ in the fourth sequence group is sequence i in a sixth sequence group, where the sixth sequence group is obtained through construction based on the PTM sequence and by using the first sequence $\vec{x}$ and the sixth sequence $-\vec{y}$;

sequence $2i + 1$ in the fourth sequence group is sequence $i$ in a seventh sequence group, where the seventh sequence group is obtained through construction based on the PTM sequence and by using the eighth sequence $-\vec{y}$ and the seventh sequence $-\vec{x}$;

sequence $2i$ in the fifth sequence group is sequence $i$ in an eighth sequence group, where the eighth sequence group is obtained through construction based on the PTM sequence and by using the second sequence $\vec{y}$ and the first sequence $\vec{x}$; and

sequence $2i + 1$ in the fifth sequence group is sequence i in a ninth sequence group, where the seventh sequence group is obtained through construction based on the PTM sequence and by using the third sequence $\vec{x}$ and the eighth sequence $-\vec{y}$, where

$0 \leq i < N/2$, and $i$ is an integer.

When $N = 4$, the sixth sequence group is $(\vec{x}, -\vec{y})$, the seventh sequence group is $(-\vec{y}, -\vec{x})$, the eighth sequence group is $(\vec{y}, \vec{x})$, and the ninth sequence group is $(\vec{x}, -\vec{y})$.

When $N = 8$, the sixth sequence group is $(\vec{x}, -\vec{y}, -\vec{y}, \vec{x})$, the seventh sequence group is $(-\vec{y}, -\vec{x}, -\vec{x}, -\vec{y})$, the eighth sequence group is $(\vec{y}, \vec{x}, \vec{x}, \vec{y})$, and the ninth sequence group is $(\vec{x}, -\vec{y}, -\vec{y}, \vec{x})$.

When $N = 16$, the sixth sequence group is $(\vec{x}, -\vec{y}, -\vec{y}, \vec{x}, -\vec{y}, \vec{x}, \vec{x}, -\vec{y})$, the seventh sequence group is $(-\vec{y}, -\vec{x}, -\vec{x}, -\vec{y}, -\vec{x}, -\vec{y}, -\vec{y}, -\vec{x})$, the eighth sequence group is $(\vec{y}, \vec{x}, \vec{x}, \vec{y}, \vec{x}, \vec{y}, \vec{y}, \vec{x})$, and the ninth sequence group is $(\vec{x}, -\vec{y}, -\vec{y}, \vec{x}, \vec{x}, -\vec{y})$.

The first sequence group with $N = 4$ provided in the foregoing Implementation 2 is $(\vec{x}, \vec{y}, \vec{y}, \vec{x})$, and the communication apparatus may obtain a sequence group set based on the first sequence group and by using space-time coding:

$$X_{N=4} = \begin{bmatrix} \vec{x} & -\overleftarrow{y} & -\vec{y} & -\overleftarrow{x} \\ \vec{y} & \overleftarrow{x} & \vec{x} & -\overleftarrow{y} \end{bmatrix}$$

The sequence group set includes $2N$ sequences. In the sequence group set, the first row $(\vec{x}, -\vec{y}, -\vec{y}, -\vec{x})$ is the fourth sequence group corresponding to the first antenna, and the second row $(\vec{y}, \vec{x}, \vec{x}, -\vec{y})$ is the fifth sequence group corresponding to the second antenna. Sequence $2i$ in the fourth sequence group is sequence $i$ in the sixth sequence group $(\vec{x}, -\vec{y})$, and sequence $2i + 1$ in the fourth sequence group is sequence $i$ in the seventh sequence group $(-\vec{y}, -\vec{x})$. Sequence $2i$ in the fifth sequence group is sequence $i$ in the eighth sequence group $(\vec{y}, \vec{x})$, and sequence $2i + 1$ in the fifth sequence group is sequence $i$ in the ninth sequence group $(\vec{x}, -\vec{y})$. The fourth sequence group and the fifth sequence group are orthogonal to each other, that is, $X_{N=4}$ is an orthogonal matrix.

From the sequence group set $X_{N=4}$, it can be learned that the sequences in the fourth sequence group are sequentially the sequences in the second sequence group, and that positive/negative signs of the sequences and an arrangement order of the sequences in the fifth sequence group are determined by space-time coding. Moreover, the fourth sequence group and the fifth sequence group are required to be mutually orthogonal.

In an implementation, the communication apparatus may obtain a Golay complementary sequence group $(x, y, y, x)$ with a length of $N = 4$ and extended based on the PTM sequence, where $x$ and $y$ both represent forward-order sequences, that is, $(\vec{x}, \vec{y}, \vec{y}, \vec{x})$. The communication apparatus obtains, based on Alamouti space-time coding and based on two consecutive sequences in the sequence, that is, two sequences whose position indexes are $2n$ and $2n + 1$, two columns of sequences whose position indexes are $2n$ and $2n + 1$ in a sequence group set in which no forward/reverse order adjustment is performed on sequences, where $n = 0, ..., N/2-1$, and a value range of the position index is $0$ to $N - 1$. Then the communication apparatus sequentially adjusts, based on forward/reverse orders of the sequences in the second sequence group, forward/reverse orders of corresponding sequences in the sequence group set in which no forward/reverse order adjustment is performed on the sequences, thereby obtaining a sequence group set $X_{N=4}$ when $N = 8$.

Similarly, based on the first sequence group provided in Implementation 2, a sequence group set $X_N$ with any length $N$ being a power of 2 may be obtained by using space-time coding. The following shows examples of sequence group sets $X_{N=8}$ and $X_{N=16}$ obtained by using space-time coding and based on the first sequence group with $N = 8$ and the first sequence group with $N = 16$ that are provided in Implementation 2. When $N > 16$, a sequence group set may be implemented with reference thereto, and examples thereof are not provided herein.

For example, the first sequence group with $N = 8$ provided in the foregoing Implementation 2 is $(\vec{x}, \vec{y}, \vec{y}, \vec{x}, \vec{y}, \vec{x}, \vec{x}, \vec{y})$, and a sequence group set $X_{N=8}$ obtained based on the first sequence group and by using space-time coding is:

$$X_{N=8} = \begin{bmatrix} \vec{x} & -\overleftarrow{y} & -\vec{y} & -\overleftarrow{x} & -\vec{y} & -\overleftarrow{x} & \vec{x} & -\overleftarrow{y} \\ \vec{y} & \overleftarrow{x} & \vec{x} & -\overleftarrow{y} & \vec{x} & -\overleftarrow{y} & \vec{y} & \overleftarrow{x} \end{bmatrix}$$

The fourth sequence group is $(\vec{x}, -\vec{y}, -\vec{y}, -\vec{x}, -\vec{y}, -\vec{x}, \vec{x}, -\vec{y})$, and the fifth sequence group is $(\vec{y}, \vec{x}, \vec{x}, -\vec{y}, \vec{x}, -\vec{y}, \vec{y}, \vec{x})$. Sequence $2i$ in the fourth sequence group is sequence $i$ in the sixth sequence group $(\vec{x}, -\vec{y}, -\vec{y}, \vec{x})$, and sequence $2i + 1$ in the fourth sequence group is sequence $i$ in the seventh sequence group $(-\vec{y}, -\vec{x}, -\vec{x}, -\vec{y})$. Sequence $2i$ in the fifth sequence group is sequence $i$ in the eighth sequence group $(\vec{y}, \vec{x}, \vec{x}, \vec{y})$, and sequence $2i + 1$ in the fifth sequence group is sequence $i$ in the ninth sequence group $(\vec{x}, -\vec{y}, -\vec{y}, \vec{x})$.

The first sequence group with $N = 16$ provided in the foregoing Implementation 2 is $(\vec{x}, \vec{y}, \vec{y}, \vec{x}, \vec{y}, \vec{x}, \vec{x}, \vec{y}, \vec{y}, \vec{x}, \vec{x}, \vec{y}, \vec{x}, \vec{y}, \vec{y}, \vec{x})$, and a sequence group set $X_{N=16}$ obtained based on the first sequence group and by using space-time coding is:

$$X_{N=16} = \begin{bmatrix} \vec{x} & -\overleftarrow{y} & -\vec{y} & -\overleftarrow{x} & -\vec{y} & -\overleftarrow{x} & \vec{x} & -\overleftarrow{y} & -\vec{y} & -\overleftarrow{x} & \vec{x} & -\overleftarrow{y} & \vec{x} & -\overleftarrow{y} & -\vec{y} & -\overleftarrow{x} \\ \vec{y} & \overleftarrow{x} & \vec{x} & -\overleftarrow{y} & \vec{x} & -\overleftarrow{y} & \vec{y} & \overleftarrow{x} & \vec{x} & -\overleftarrow{y} & \vec{y} & \overleftarrow{x} & \vec{y} & \overleftarrow{x} & \vec{x} & -\overleftarrow{y} \end{bmatrix}$$

The fourth sequence group is ($\vec{x}$, -$\overleftarrow{y}$, -$\vec{y}$, -$\overleftarrow{x}$, -$\vec{y}$, -$\overleftarrow{x}$, $\vec{x}$, -$\overleftarrow{y}$, -$\vec{y}$, -$\overleftarrow{x}$, $\vec{x}$, -$\overleftarrow{y}$, $\vec{x}$, -$\overleftarrow{y}$, -$\vec{y}$, -$\overleftarrow{x}$), and the fifth sequence group is ($\vec{y}$, $\overleftarrow{x}$, $\vec{x}$, -$\overleftarrow{y}$, $\vec{x}$, -$\overleftarrow{y}$, $\vec{y}$, $\overleftarrow{x}$, $\vec{x}$, -$\overleftarrow{y}$, $\vec{y}$, $\overleftarrow{x}$, $\vec{y}$, $\overleftarrow{x}$, $\vec{x}$, -$\overleftarrow{y}$). Sequence 2i in the fourth sequence group is sequence $i$ in the sixth sequence group ($\vec{x}$, -$\overleftarrow{y}$, -$\vec{y}$, $\overleftarrow{x}$, -$\vec{y}$, $\overleftarrow{x}$, $\vec{x}$, -$\overleftarrow{y}$), and sequence 2$i$ + 1 in the fourth sequence group is sequence $i$ in the seventh sequence group (-$\vec{y}$, -$\overleftarrow{x}$, -$\vec{x}$, -$\overleftarrow{y}$, -$\vec{x}$, -$\overleftarrow{y}$, -$\vec{y}$, -$\overleftarrow{x}$). Sequence 2$i$ in the fifth sequence group is sequence $i$ in the eighth sequence group ($\vec{y}$, $\overleftarrow{x}$, $\vec{x}$, $\vec{y}$, $\overleftarrow{x}$, $\vec{y}$, $\vec{y}$, $\overleftarrow{x}$), and sequence 2$i$ + 1 in the fifth sequence group is sequence $i$ in the ninth sequence group ($\vec{x}$, -$\overleftarrow{y}$, -$\vec{y}$, $\overleftarrow{x}$, -$\vec{y}$, $\overleftarrow{x}$, $\vec{x}$, -$\overleftarrow{y}$).

In another implementation, the sequence group set $X_N$ obtained by the communication apparatus by using space-time coding and based on the first sequence group provided in Implementation 2 may be obtained through construction based on the PTM sequence, a sequence group $A_2$, and a sequence group $B_2$. The sequence group $A_2$ and the sequence group $B_2$ each include $N$ sequences, and each sequence in the sequence group includes a plurality of symbols, where at least two sequences are Golay complementary sequences, and symbols in at least two sequences are arranged in opposite orders. The sequence group $A_2$ and the sequence group $B_2$ each include $N/2$ sequences corresponding to the first antenna, and $N/2$ sequences corresponding to the second antenna.

The sequence group $A_2$ and the sequence group $B_2$ may be respectively denoted as:

$$A_2 = \begin{bmatrix} \vec{x} & -\overleftarrow{y} \\ \vec{y} & \overleftarrow{x} \end{bmatrix} \text{ and } B_2 = \begin{bmatrix} -\vec{y} & -\overleftarrow{x} \\ \vec{x} & -\overleftarrow{y} \end{bmatrix}$$

When $N$ = 4, the sequence group set $X_{N=4}$ is:

$$X_{N=4} = (A_2, B_2) = \begin{bmatrix} \vec{x} & -\overleftarrow{y} & -\vec{y} & -\overleftarrow{x} \\ \vec{y} & \overleftarrow{x} & \vec{x} & -\overleftarrow{y} \end{bmatrix}$$

When $N$ = 8, the sequence group set $X_{N=8}$ is:

$$X_{N=8} = (A_2, B_2, B_2, A_2) = \begin{bmatrix} \vec{x} & -\overleftarrow{y} & -\vec{y} & -\overleftarrow{x} & -\vec{y} & -\overleftarrow{x} & \vec{x} & -\overleftarrow{y} \\ \vec{y} & \overleftarrow{x} & \vec{x} & -\overleftarrow{y} & \vec{x} & -\overleftarrow{y} & \vec{y} & \overleftarrow{x} \end{bmatrix}$$

When $N$ = 16, the sequence group set $X_{N=16}$ is:

$$X_{N=16} = (A_2, B_2, B_2, A_2, B_2, A_2, A_2, B_2)$$

$$= \begin{bmatrix} \vec{x} & -\overleftarrow{y} & -\vec{y} & -\overleftarrow{x} & -\vec{y} & -\overleftarrow{x} & \vec{x} & -\overleftarrow{y} & -\vec{y} & -\overleftarrow{x} & \vec{x} & -\overleftarrow{y} & \vec{x} & -\overleftarrow{y} & -\vec{y} & -\overleftarrow{x} \\ \vec{y} & \overleftarrow{x} & \vec{x} & -\overleftarrow{y} & \vec{x} & -\overleftarrow{y} & \vec{y} & \overleftarrow{x} & \vec{x} & -\overleftarrow{y} & \vec{y} & \overleftarrow{x} & \vec{y} & \overleftarrow{x} & \vec{x} & -\overleftarrow{y} \end{bmatrix}$$

Similarly, the communication apparatus may obtain, through construction based on the PTM sequence, the sequence group $A_2$, and the sequence group $B_2$, a sequence group set when $N$ > 16. This may be implemented with reference to a manner of determining a sequence group set when $N \leq 16$, and examples thereof are not provided herein.

The communication apparatus may further obtain, by using space-time coding and based on the first sequence group provided in the foregoing Implementation 3, the sequence group set that includes the fourth sequence group corresponding to the first antenna and the fifth sequence group corresponding to the second antenna.

The fourth sequence group and the fifth sequence group in the sequence group set obtained by the communication apparatus by using space-time coding and based on the first sequence group provided in the foregoing Implementation 3 satisfy the following rules:

first $N/2$ sequences in the fourth sequence group are a sixth sequence group, and last $N/2$ sequences in the fourth sequence group are a seventh sequence group; and
first $N/2$ sequences in the fifth sequence group are an eighth sequence group, and last $N/2$ sequences in the fifth sequence group are a ninth sequence group.

The sixth sequence group to the ninth sequence group are described above, and details are not described herein again.

The first sequence group with $N = 4$ provided in the foregoing Implementation 3 is $(\vec{x}, \vec{y}, \overleftarrow{y}, \overleftarrow{x})$, and the communication apparatus may obtain a sequence group set based on the first sequence group and by using space-time coding:

$$X_{N=4} = \begin{bmatrix} \vec{x} & -\vec{y} & -\overleftarrow{y} & -\overleftarrow{x} \\ \vec{y} & \vec{x} & \overleftarrow{x} & -\overleftarrow{y} \end{bmatrix}$$

The sequence group set includes 2N sequences. In the sequence group set, the first row $(\vec{x}, -\vec{y}, -\overleftarrow{y}, -\overleftarrow{x})$ is the fourth sequence group corresponding to the first antenna, and the second row $(\vec{y}, \vec{x}, \overleftarrow{x}, -\overleftarrow{y})$ is the fifth sequence group corresponding to the second antenna. In the fourth sequence group, the first $N/2$ sequences are the sixth sequence group $(\vec{x}, -\vec{y})$, and the last $N/2$ sequences are the seventh sequence group $(-\overleftarrow{y}, -\overleftarrow{x})$. In the fifth sequence group, the first $N/2$ sequences are the eighth sequence group $(\vec{y}, \vec{x})$, and the last $N/2$ sequences are the ninth sequence group $(\overleftarrow{x}, -\overleftarrow{y})$. The fourth sequence group and the fifth sequence group are orthogonal to each other, that is, $X_{N=4}$ is an orthogonal matrix.

The first sequence group with $N = 8$ provided in the foregoing Implementation 3 is $(\vec{x}, \vec{y}, \vec{y}, \vec{x}, \overleftarrow{y}, \overleftarrow{x}, \overleftarrow{x}, \overleftarrow{y})$, and a sequence group set $X_{N=8}$ obtained based on the first sequence group and by using space-time coding is:

$$X_{N=8} = \begin{bmatrix} \vec{x} & -\vec{y} & -\vec{y} & \vec{x} & -\overleftarrow{y} & -\overleftarrow{x} & -\overleftarrow{x} & -\overleftarrow{y} \\ \vec{y} & \vec{x} & \vec{x} & \vec{y} & \overleftarrow{x} & -\overleftarrow{y} & -\overleftarrow{y} & \overleftarrow{x} \end{bmatrix}$$

The fourth sequence group is $(\vec{x}, -\vec{y}, -\vec{y}, \vec{x}, -\overleftarrow{y}, -\overleftarrow{x}, -\overleftarrow{x}, -\overleftarrow{y})$, and the fifth sequence group is $(\vec{y}, \vec{x}, \vec{x}, \vec{y}, \overleftarrow{x}, -\overleftarrow{y}, -\overleftarrow{y}, \overleftarrow{x})$. In the fourth sequence group, the first $N/2$ sequences are the sixth sequence group $(\vec{x}, -\vec{y}, -\vec{y}, \vec{x})$, and the last $N/2$ sequences are the seventh sequence group $(-\overleftarrow{y}, -\overleftarrow{x}, -\overleftarrow{x}, -\overleftarrow{y})$. In the fifth sequence group, the first $N/2$ sequences are the eighth sequence group $(\vec{y}, \vec{x}, \vec{x}, \vec{y})$, and the last $N/2$ sequences are the ninth sequence group $(\overleftarrow{x}, -\overleftarrow{y}, -\overleftarrow{y}, \overleftarrow{x})$.

The first sequence group with $N = 16$ provided in the foregoing Implementation 3 is $(\vec{x}, \vec{y}, \vec{y}, \vec{x}, \vec{y}, \vec{x}, \vec{x}, \vec{y}, \vec{y}, \vec{x}, \vec{x}, \vec{y}, \vec{x}, \vec{y}, \vec{y}, \vec{x})$, and a sequence group set $X_{N=16}$ obtained based on the first sequence group and by using space-time coding is:

$$X_{N=16} = \begin{bmatrix} \vec{x} & -\vec{y} & -\vec{y} & -\vec{x} & -\vec{y} & \vec{x} & \vec{x} & -\vec{y} & -\overleftarrow{y} & -\overleftarrow{x} & -\overleftarrow{x} & -\overleftarrow{y} & -\overleftarrow{x} & -\overleftarrow{y} & -\overleftarrow{y} & -\overleftarrow{x} \\ \vec{y} & \vec{x} & \vec{x} & \vec{y} & \vec{x} & \vec{y} & \vec{y} & \vec{x} & \overleftarrow{x} & -\overleftarrow{y} & -\overleftarrow{y} & \overleftarrow{x} & -\overleftarrow{y} & \overleftarrow{x} & \overleftarrow{x} & -\overleftarrow{y} \end{bmatrix}$$

The fourth sequence group is $(\vec{x}, -\vec{y}, -\vec{y}, -\vec{x}, -\vec{y}, \vec{x}, \vec{x}, -\vec{y}, -\vec{y}, -\vec{x}, -\vec{x}, -\vec{y}, -\vec{x}, -\vec{y}, -\vec{y}, -\vec{x})$, and the fifth sequence group is $(\vec{y}, \vec{x}, \vec{x}, \vec{y}, \vec{x}, \vec{y}, \vec{y}, \vec{x}, \vec{x}, -\vec{y}, -\vec{y}, \vec{x}, -\vec{y}, \vec{x}, \vec{x}, -\vec{y})$. In the fourth sequence group, the first $N/2$ sequences are the sixth sequence group $(\vec{x}, -\vec{y}, -\vec{y}, \vec{x}, -\vec{y}, \vec{x}, \vec{x}, -\vec{y},)$, and the last $N/2$ sequences are the seventh sequence group $(-\overleftarrow{y}, -\overleftarrow{x}, -\overleftarrow{x}, -\overleftarrow{y}, -\overleftarrow{x}, -\overleftarrow{y}, -\overleftarrow{y}, -\overleftarrow{x})$. In the fifth sequence group, the first $N/2$ sequences are the eighth sequence group $(\vec{y}, \vec{x}, \vec{x}, \vec{y}, \vec{x}, \vec{y}, \vec{y}, \vec{x})$ the last $N/2$ sequences are the ninth sequence group $(\overleftarrow{x}, -\overleftarrow{y}, -\overleftarrow{y}, \overleftarrow{x}, -\overleftarrow{y}, \overleftarrow{x}, \overleftarrow{x}, -\overleftarrow{y})$.

Similarly, a sequence group set when $N > 16$ may be obtained with reference to the implementation, and examples thereof are not provided herein.

In another implementation, the sequence group set $X_N$ obtained by the communication apparatus by using space-time coding and based on the first sequence group provided in Implementation 3 may be obtained through construction based on the PTM sequence, a sequence group $A_3$, and a sequence group $B_3$. The sequence group $A_3$ and the sequence group $B_3$ each include $N$ sequences, and each sequence in the sequence group includes a plurality of symbols, where at least two sequences are Golay complementary sequences, and symbols in at least two sequences are arranged in opposite orders. The sequence group $A_3$ and the sequence group $B_3$ each include $N/2$ sequences corresponding to the first antenna, and $N/2$ sequences corresponding to the second antenna. In addition, in the sequence group set $X_N$, first $N/2$ sequence groups are in forward orders, and last $N/2$ sequence groups are in reverse orders.

The sequence group $A_3$ and the sequence group $B_3$ may be respectively denoted as:

$$A_3 = \begin{bmatrix} \vec{x} & -\vec{y} \\ \vec{y} & \vec{x} \end{bmatrix} \text{ and } B_3 = \begin{bmatrix} -\vec{y} & -\vec{x} \\ \vec{x} & -\vec{y} \end{bmatrix}$$

The sequence group $A_3$ and the sequence group $B_3$ are in forward orders, that is, $A_3 = \vec{A}_3$, and $B_3 = \vec{B}_3$. Reverse-order sequence groups of the sequence group $A_3$ and the sequence group $B_3$ are $\overleftarrow{A}_3$ and $\overleftarrow{B}_3$ respectively.

$$\overleftarrow{A}_3 = \begin{bmatrix} \overleftarrow{x} & -\overleftarrow{y} \\ \overleftarrow{y} & \overleftarrow{x} \end{bmatrix} \text{ and } \overleftarrow{B}_3 = \begin{bmatrix} -\overleftarrow{y} & -\overleftarrow{x} \\ \overleftarrow{x} & -\overleftarrow{y} \end{bmatrix}$$

When $N = 4$, the sequence group set $X_{N=4}$ may be obtained through construction based on a PTM sequence with a length of $N/2 = 2$, the sequence group $A_3$, and the sequence group $B_3$, and the PTM sequence with the length of 2 is (0, 1), where 0 corresponds to the sequence group $A_3$, and 1 corresponds to the sequence group $B_3$. Moreover, in the sequence group set $X_N$, the first half of sequence groups are required to be in forward orders, and the last half of sequence groups are required to be in reverse orders. Accordingly:

$$X_{N=4} = \left( \overrightarrow{A}_3, \overleftarrow{B}_3 \right) = \begin{bmatrix} \overrightarrow{x} & -\overrightarrow{y} & -\overleftarrow{y} & -\overleftarrow{x} \\ \overrightarrow{y} & \overrightarrow{x} & \overleftarrow{x} & -\overleftarrow{y} \end{bmatrix}$$

When $N = 8$, the sequence group set $X_{N=8}$ may be obtained through construction based on a PTM sequence with a length of $N/2 = 4$, the sequence group $A_3$, and the sequence group $B_3$, and the PTM sequence with the length of 4 is (0, 1, 1, 0), where 0 corresponds to the sequence group $A_3$, and 1 corresponds to the sequence group $B_3$. Moreover, in the sequence group set $X_N$, the first $N/2$ sequence groups are required to be in forward orders, and the last N/2 sequence groups are required to be in reverse orders. Accordingly:

$$X_{N=8} = \left( \overrightarrow{A}_3, \overrightarrow{B}_3, \overleftarrow{B}_3, \overleftarrow{A}_3 \right) == \begin{bmatrix} \overrightarrow{x} & -\overrightarrow{y} & -\overrightarrow{y} & -\overrightarrow{x} & -\overleftarrow{y} & -\overleftarrow{x} & \overleftarrow{x} & -\overleftarrow{y} \\ \overrightarrow{y} & \overrightarrow{x} & \overrightarrow{x} & -\overrightarrow{y} & \overleftarrow{x} & -\overleftarrow{y} & \overleftarrow{y} & \overleftarrow{x} \end{bmatrix}$$

When $N = 16$, the sequence group set $X_{N=16}$ may be obtained through construction based on a PTM sequence with a length of $N/2 = 2$, the sequence group $A_3$, and the sequence group $B_3$, and the PTM sequence with the length of 4 is (0, 1, 1, 0, 1, 0, 0, 1), where 0 corresponds to the sequence group $A_3$, and 1 corresponds to the sequence group $B_3$. Moreover, in the sequence group set $X_N$, the first $N/2$ sequence groups are required to be in forward orders, and the last $N/2$ sequence groups are required to be in reverse orders. Accordingly:

$$X_{N=16} = \left( \overrightarrow{A}_3, \overrightarrow{B}_3, \overrightarrow{B}_3, \overrightarrow{A}_3, \overleftarrow{B}_3, \overleftarrow{A}_3, \overleftarrow{A}_3, \overleftarrow{B}_3 \right)$$

$$= \begin{bmatrix} \overrightarrow{x} & -\overrightarrow{y} & -\overrightarrow{y} & -\overrightarrow{x} & -\overrightarrow{y} & -\overrightarrow{x} & \overrightarrow{x} & -\overrightarrow{y} & -\overleftarrow{y} & -\overleftarrow{x} & \overleftarrow{x} & -\overleftarrow{y} & \overleftarrow{x} & -\overleftarrow{y} & -\overleftarrow{y} & -\overleftarrow{x} \\ \overrightarrow{y} & \overrightarrow{x} & \overrightarrow{x} & -\overrightarrow{y} & \overrightarrow{x} & -\overrightarrow{y} & \overrightarrow{y} & \overrightarrow{x} & \overleftarrow{x} & -\overleftarrow{y} & \overleftarrow{y} & \overleftarrow{x} & \overleftarrow{y} & \overleftarrow{x} & \overleftarrow{x} & -\overleftarrow{y} \end{bmatrix}$$

Similarly, the communication apparatus may obtain, through construction based on the PTM sequence, the sequence group $A_3$, and the sequence group $B_3$, a sequence group set when $N > 16$. This may be implemented with reference to a manner of determining a sequence group set when $N \leq 16$, and examples thereof are not provided herein.

According to the solutions provided in this application, by using a property that a Golay complementary sequence pair remains a Golay complementary sequence pair after symbols in one sequence or both sequences are arranged in a reverse order, it is proposed that a pulse train resilient to a Doppler frequency shift with linear phase variations should be obtained through extension based on the Golay complementary sequence pair and symbol reversal. Target detection performed based on the pulse train can improve ranging accuracy, so that performance of target detection is improved.

It may be understood that, to implement functions in the foregoing embodiments, the communication apparatus includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

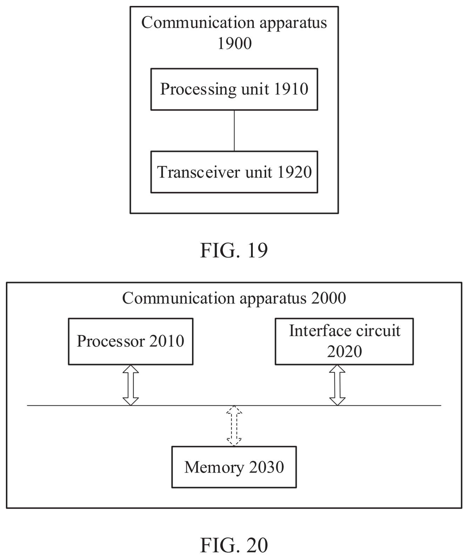

FIG. 19 and FIG. 20 are diagrams of possible structures of communication apparatuses according to embodiments of this application. The communication apparatuses may be configured to implement functions of the communication apparatuses in the foregoing method embodiments, and therefore can also achieve beneficial effects of the foregoing method embodiments. In an embodiment of this application, the communication apparatus may be one of the terminal devices 120a to 120g shown in FIG. 1, or may be the network device 110a or 110b shown in FIG. 1, or may be a module (for example, a chip) used in a terminal device or a network device. The communication apparatus may alternatively be a communication device such as a radar. This is not limited in this application.

The communication apparatus 1900 includes a transceiver unit 1920, and the transceiver unit 1920 may be configured to receive or send information. The communication apparatus 1900 may further include a processing unit 1910, and the processing unit 1910 may be configured to process instructions or data, to implement corresponding operations.

It should be understood that, when the communication apparatus 1900 is the chip configured (or used) in the communication device, the transceiver unit 1920 in the communication apparatus 1900 may be an input/output interface or a circuit in the chip, and the processing unit 1910 in the communication apparatus 1900 may be a processor in the chip.

Optionally, the communication apparatus 1900 may further include a storage unit. The storage unit may be configured to store instructions or data. The processing unit 1910 may execute the instructions or the data stored in the storage unit, to enable the communication apparatus to implement corresponding operations.

The communication apparatus 1900 may be configured to implement the communication apparatus in the method embodiment shown in FIG. 9. When the communication apparatus 1900 is configured to implement functions of the communication apparatus in the method embodiment shown in FIG. 9, the processing unit 1910 is configured to determine a first sequence group, where the first sequence group includes $N$ sequences, where $N$ is greater than 2 and is a power of 2, the $N$ sequences include at least one Golay complementary sequence pair, each of the $N$ sequences includes a plurality of symbols, and symbols in at least two sequences are arranged in opposite orders. The transceiver unit 1920 is configured to send a pulse train, where the pulse train is obtained based on the first sequence group, and one pulse in the pulse train corresponds to one of the $N$ sequences.

For more detailed descriptions of the processing unit 1910 and the transceiver unit 1920, refer to related descriptions in the method embodiment shown in FIG. 9.

The communication apparatus 1900 may be configured to implement a communication apparatus for receiving an echo signal of a pulse signal. When the communication apparatus 1900 is configured to implement functions of the communication apparatus for receiving an echo signal of a pulse signal, the transceiver unit 1920 is configured to receive an echo signal of a pulse train, where the pulse train is obtained based on a first sequence group, and the first sequence group includes $N$ sequences, where $N$ is greater than 2 and is a power of 2, the $N$ sequences include at least one Golay complementary sequence pair, each of the $N$ sequences includes a plurality of symbols, symbols in at least two sequences are arranged in opposite orders, and one pulse in the pulse train corresponds to one of the $N$ sequences. The processing unit 1910 is configured to determine a range and/or a speed based on the echo signal.

It should be understood that the transceiver unit 1920 in the communication apparatus 1900 can be implemented by using a communication interface (for example, a transceiver, a transceiver circuit, an input/output interface, or a pin). When the communication interface is a transceiver, the transceiver may include a receiver and/or a transmitter. The processing unit 1910 in the communication apparatus 1900 may be implemented by using at least one processor. The processing unit 1910 in the communication apparatus 1900 may alternatively be implemented by using at least one logic circuit. Optionally, the communication apparatus 1900 further includes a storage unit, and the storage unit may be implemented by using a memory.

As shown in FIG. 20, a communication apparatus 2000 includes a processor 2010 and an interface circuit 2020. The processor 2010 and the interface circuit 2020 are coupled to each other. It may be understood that the interface circuit 2020 may be a transceiver or an input/output interface. Optionally, the communication apparatus 2000 may further include a memory 2030, configured to store instructions executed by the processor 2010, or store input data required for running instructions by the processor 2010, or store data generated after the processor 2010 runs instructions.

When the communication apparatus 2000 is configured to implement the method shown in FIG. 20, the processor 2010 is configured to implement a function of the processing unit 1910, and the interface circuit 2020 is configured to implement a function of the transceiver unit 1920.

When the communication apparatus is a chip used in a communication device, the chip may implement the functions of the communication apparatus in the foregoing method embodiments. The chip receives information from another module (for example, a radio frequency module or an antenna) of the communication device, where the information is sent by another communication device to the communication device. Alternatively, the chip sends information to another module (for example, a radio frequency module or an antenna) of the communication device, where the information is sent by the communication device to another communication device.

It may be understood that the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, the storage medium is coupled to the processor, so that the processor can read information from the storage medium or write information into the storage medium. The storage medium may alternatively be a component of the processor. The processor and the storage medium may be located in an ASIC. In addition, the ASIC may be located in an access network device or a terminal device. The processor and the storage medium may alternatively exist as discrete components in the access network device or the terminal device.

According to the method provided in embodiments of this application, an embodiment of this application further provides a communication system, including a first communication apparatus and a second communication apparatus. In an implementation, the first communication apparatus sends a pulse signal, and the first communication apparatus determines a first sequence group, where the first sequence group includes $N$ sequences, where $N$ is greater than 2 and is a power of 2, the $N$ sequences include at least one Golay complementary sequence pair, each of the $N$ sequences includes a plurality of symbols, and symbols in at least two sequences are arranged in opposite orders. The first communication apparatus sends a pulse train, where the pulse train is obtained based on the first sequence group, and one pulse in the pulse train corresponds to one of the $N$ sequences. The second communication apparatus receives an echo signal of the pulse train, and determines a range and/or a speed based on the echo signal.

The first communication apparatus and the second communication apparatus may maintain clock synchronization by using a wired connection (for example, a communication medium such as an optical fiber), or may implement clock synchronization in a wireless communication mode. In this way, target detection can be implemented in a manner in which the first communication apparatus sends the pulse train and the second communication apparatus receives the echo signal of the pulse train.

According to the method provided in embodiments of this application, an embodiment of this application further provides a computer program product. The computer program product includes computer program code. When the computer program code is executed by one or more processors, an apparatus including the processor is enabled to perform the method shown in FIG. 9.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, the procedures or functions according to embodiments of this application are all or partially performed. The computer may be a general-purpose computer, a dedicated computer, a computer network, a network device, user equipment, or another programmable apparatus.

According to the method provided in embodiments of this application, an embodiment of this application further provides a computer-readable storage medium. The computer-readable storage medium stores a computer program or instructions. When the computer program or instructions are run by one or more processors, an apparatus including the processor is enabled to perform the method shown in FIG. 9.

The computer programs or instructions may be stored in a computer-readable storage medium or may be transmitted from one computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In several embodiments provided in this application, it should be understood that the disclosed system, apparatus, and method may be implemented in other manners. For example, the described apparatuses are merely examples. For example, division of the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions in embodiments.

In embodiments of this application, unless otherwise specified or there is a logic conflict, terms and/or descriptions between different embodiments are consistent and may be mutually referenced, and technical features in different embodiments may be combined into a new embodiment based on an internal logical relationship thereof.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A pulse train transmission method, comprising:

   determining a first sequence group, wherein the first sequence group comprises $N$ sequences, wherein $N$ is greater than 2 and is a power of 2, the $N$ sequences comprise at least one Golay complementary sequence pair, each of the $N$ sequences comprises a plurality of symbols, and symbols in at least two sequences are arranged in opposite orders; and
   sending a pulse train, wherein the pulse train is obtained based on the first sequence group, and one pulse in the pulse train corresponds to one of the $N$ sequences.

2. The method according to claim 1, wherein the method further comprises:

   receiving an echo signal of the pulse train; and
   determining a range and/or a speed based on the echo signal.

3. The method according to claim 1 or 2, wherein lengths of the $N$ sequences are equal.

4. The method according to any one of claims 1 to 3, wherein

   the first sequence group comprises a first sequence and a second sequence, wherein the first sequence and the second sequence are Golay complementary sequences; and
   the first sequence group further comprises a third sequence and a fourth sequence, wherein a symbol arrangement order of the third sequence is opposite to that of the first sequence, and a symbol arrangement order of the fourth sequence is opposite to that of the second sequence.

5. The method according to claim 4, wherein
   a quantity of first sequences, a quantity of second sequences, a quantity of third sequences, and a quantity of fourth sequences that are comprised in the first sequence group are the same.

6. The method according to claim 5, wherein a first-order term of a phase in a Taylor expansion of an ambiguity function of the first sequence group at zero Doppler is set to zero.

7. The method according to any one of claims 4 to 6, wherein

   if $N = 4$, the first sequence, the second sequence, the fourth sequence, and the third sequence in the first sequence group are sequentially arranged; or
   if $N > 4$, an arrangement order of first $N/2$ sequences in the first sequence group is the same as an arrangement order of sequences when the first sequence group comprises the $N/2$ sequences.

8. The method according to claim 7, wherein

   for $N = 4$, the first sequence group is $(\vec{x}, \vec{y}, \vec{y}, \vec{x})$; or
   for $N = 8$, the first sequence group is $(\vec{x}, \vec{y}, \vec{y}, \vec{x}, \vec{x}, \vec{x}, \vec{x}, \vec{y})$; or
   for $N = 16$, the first sequence group is $(\vec{x}, \vec{y}, \vec{y}, \vec{x}, \vec{y}, \vec{x}, \vec{x}, \vec{y}, \vec{y}, \vec{x}, \vec{x}, \vec{y}, \vec{x}, \vec{y}, \vec{y}, \vec{x})$, wherein
   $\vec{x}$ represents the first sequence, $\vec{y}$ represents the second sequence, $\vec{x}$ represents the third sequence, and $\vec{y}$ represents the fourth sequence.

9. The method according to claim 7 or 8, wherein if $N \geq 16$, an arrangement of the $N$ sequences in the first sequence group satisfies the following rule:

   if sequence $i$ in the first sequence group is the first sequence, sequence $N/2 + i$ is the second sequence; or
   if sequence $i$ in the first sequence group is the second sequence, sequence $N/2 + i$ is the first sequence; or

if sequence *i* in the first sequence group is the third sequence, sequence *N*/2 + *i* is the fourth sequence; or
if sequence *i* in the first sequence group is the fourth sequence, sequence *N*/2 + *i* is the third sequence, wherein
$0 \leq i < N/2$, and *i* is an integer.

10. The method according to any one of claims 4 to 9, wherein when $N \geq 16$, the quantity of first sequences, the quantity of second sequences, the quantity of third sequences, and the quantity of fourth sequences in the first sequence group are all *N*/4, and
in the first sequence group, a sum of indexes of the *N*/4 first sequences in the first sequence group, a sum of indexes of the *N*/4 second sequences in the first sequence group, a sum of indexes of the *N*/4 third sequences in the first sequence group, and a sum of indexes of the *N*/4 fourth sequences in the first sequence group are the same.

11. The method according to any one of claims 4 to 6, wherein the method further comprises:

constructing, based on a PTM sequence, a second sequence group by using the first sequence and the second sequence, wherein the second sequence group comprises *N*/2 sequences; and
constructing, based on the PTM sequence, a third sequence group by using the fourth sequence and the third sequence, wherein the third sequence group comprises *N*/2 sequences, wherein
the first sequence group comprises the second sequence group and the third sequence group.

12. The method according to claim 11, wherein sequence *i* in the second sequence group is sequence 2*i* in the first sequence group, and sequence *i* in the third sequence group is a (2*i* + 1)$^{th}$ sequence in the first sequence group, wherein $0 \leq i < N/2$, and i is an integer.

13. The method according to claim 12, wherein

for *N* = 4, the second sequence group is $(\vec{x}, \vec{y})$, the third sequence group is $(\vec{y}, \vec{x})$, and the first sequence group is $(\vec{x}, \vec{y}, \vec{y}, \vec{x})$; or
for *N* = 8, the second sequence group is $(\vec{x}, \vec{y}, \vec{y}, \vec{x})$, the third sequence group is $(\vec{y}, \vec{x}, \vec{x}, \vec{y})$, and the first sequence group is $(\vec{x}, \vec{y}, \vec{y}, \vec{x}, \vec{y}, \vec{x}, \vec{x}, \vec{y})$; or
for *N* = 16, the second sequence group is $(\vec{x}, \vec{y}, \vec{y}, \vec{x}, \vec{y}, \vec{x}, \vec{x}, \vec{y})$, the third sequence group is $(\vec{y}, \vec{x}, \vec{x}, \vec{y}, \vec{x}, \vec{y}, \vec{y}, \vec{x})$, and the first sequence group is $(\vec{x}, \vec{y}, \vec{x}, \vec{y}, \vec{x}, \vec{x}, \vec{y}, \vec{y}, \vec{x}, \vec{x}, \vec{y}, \vec{x}, \vec{y}, \vec{y}, \vec{x})$, wherein
$\vec{x}$ represents the first sequence, $\vec{y}$ represents the second sequence, $\vec{x}$ represents the third sequence, and $\vec{y}$ represents the fourth sequence.

14. The method according to claim 11, wherein first *N*/2 sequences in the first sequence group are the second sequence group, and last *N*/2 sequences in the first sequence group are the third sequence group.

15. The method according to claim 14, wherein

for *N* = 4, the second sequence group is $(\vec{x}, \vec{y})$, the third sequence group is $(\vec{y}, \vec{x})$, and the first sequence group is $(\vec{x}, \vec{y}, \vec{x}, \vec{x})$; or
for *N* = 8, the second sequence group is $(\vec{x}, \vec{y}, \vec{y}, \vec{x})$, the third sequence group is $(\vec{y}, \vec{x}, \vec{x}, \vec{y})$, and the first sequence group is $(\vec{x}, \vec{y}, \vec{y}, \vec{x}, \vec{y}, \vec{x}, \vec{x}, \vec{y})$; or
for *N* = 16, the second sequence group is $(\vec{x}, \vec{y}, \vec{y}, \vec{x}, \vec{y}, \vec{x}, \vec{x}, \vec{y})$, the third sequence group is $(\vec{y}, \vec{x}, \vec{x}, \vec{y}, \vec{x}, \vec{y}, \vec{y}, \vec{x})$, and the first sequence group is $(\vec{x}, \vec{y}, \vec{y}, \vec{x}, \vec{y}, \vec{x}, \vec{x}, \vec{y}, \vec{x}, \vec{x}, \vec{x}, \vec{y}, \vec{x}, \vec{y}, \vec{y}, \vec{x})$, wherein
$\vec{x}$ represents the first sequence, $\vec{y}$ represents the second sequence, $\vec{x}$ represents the third sequence, and $\vec{y}$ represents the fourth sequence.

16. The method according to any one of claims 1 to 15, wherein *N* pulses in the pulse train respectively carry the *N* sequences in the first sequence group sequentially.

17. The method according to any one of claims 1 to 16, wherein the method further comprises:

determining a fourth sequence group and a fifth sequence group based on the first sequence group and by using space-time coding, wherein both the fourth sequence group and the fifth sequence group comprise *N* sequences, wherein
the fourth sequence group and the fifth sequence group comprise one or more of the first sequence, the second sequence, the third sequence, and the fourth sequence; and the fourth sequence group and the fifth sequence group further comprise one or more of a fifth sequence, a sixth sequence, a seventh sequence, and an eighth sequence, wherein positive/negative signs of symbols at identical positions in the fifth sequence and the first sequence are opposite, positive/negative signs of symbols at identical positions in the sixth sequence and the second sequence are opposite, positive/negative signs of symbols at identical positions in the seventh sequence and the third sequence are opposite, and positive/negative signs of symbols at identical positions in the eighth sequence and the fourth sequence are opposite.

18. The method according to claim 17, wherein sending the pulse train comprises:

sending a first pulse train by using the first antenna, and sending a second pulse train by using the second antenna, wherein
both the first pulse train and the second pulse train comprise $N$ pulses and have a same start moment and a same pulse period, the $N$ pulses in the first pulse train respectively carry the sequences in the fourth sequence group sequentially, and the $N$ pulses in the second pulse train respectively carry the sequences in the fifth sequence group sequentially.

19. The method according to claim 17 or 18, wherein

for $N = 4$, the first sequence group is $(\vec{x}, \vec{y}, \vec{y}, \vec{x})$, the fourth sequence group is $(\vec{x}, -\vec{y}, -\vec{y}, -\vec{x})$, and the fifth sequence group is $(\vec{y}, \vec{x}, \vec{x}, -\vec{y})$; or
for $N = 8$, the first sequence group is $(\vec{x}, \vec{y}, \vec{y}, \vec{x}, \vec{y}, \vec{x}, \vec{x}, \vec{y})$, the fourth sequence group is $(\vec{x}, -\vec{y}, -\vec{y}, -\vec{x}, -\vec{y}, -\vec{x}, \vec{x}, -\vec{y})$, and the fifth sequence group is $(\vec{y}, \vec{x}, \vec{x}, -\vec{y}, \vec{x}, -\vec{y}, \vec{y}, \vec{x})$; or
for $N = 16$, the first sequence group is $(\vec{x}, \vec{y}, \vec{y}, \vec{x}, \vec{y}, \vec{x}, \vec{x}, \vec{y}, \vec{y}, \vec{x}, \vec{x}, \vec{y}, \vec{x}, \vec{y}, \vec{y}, \vec{x})$, the fourth sequence group is $(\vec{x}, -\vec{y}, -\vec{y}, -\vec{x}, -\vec{y}, -\vec{x}, \vec{x}, -\vec{y}, -\vec{y}, -\vec{x}, \vec{x}, -\vec{y}, \vec{x}, -\vec{y}, -\vec{y}, -\vec{x})$, and the fifth sequence group is $(\vec{y}, \vec{x}, \vec{x}, -\vec{y}, \vec{x}, -\vec{y}, \vec{y}, \vec{x}, \vec{x}, -\vec{y}, \vec{y}, \vec{x}, \vec{y}, \vec{x}, \vec{x}, -\vec{y})$, wherein $\vec{x}$ represents the first sequence, $\vec{y}$ represents the second sequence, $\vec{x}$ represents the third sequence, $\vec{y}$ represents the fourth sequence, $-\vec{x}$ represents the fifth sequence, $-\vec{y}$ represents the sixth sequence, $-\vec{x}$ represents the seventh sequence, and $-\vec{y}$ represents the eighth sequence.

20. The method according to any one of claims 17 to 19, wherein when $N \geq 16$, an arrangement of the sequences in the fourth sequence group and the fifth sequence group satisfies the following rules:

when sequence number $i$ of a sequence is an even number, if sequence $i$ in the fourth sequence group is the first sequence, sequence $N/2 + i$ is the sixth sequence; if sequence $i$ in the fourth sequence group is the second sequence, sequence $N/2 + i$ is the fifth sequence; if sequence $i$ in the fourth sequence group is the third sequence, sequence $N/2 + i$ is the eighth sequence; if sequence $i$ in the fourth sequence group is the fourth sequence, sequence $N/2 + i$ is the seventh sequence; if sequence $i$ in the fourth sequence group is the fifth sequence, sequence $N/2 + i$ is the second sequence; if sequence $i$ in the fourth sequence group is the sixth sequence, sequence $N/2 + i$ is the first sequence; if sequence $i$ in the fourth sequence group is the seventh sequence, sequence $N/2 + i$ is the fourth sequence; or if sequence $i$ in the fourth sequence group is the eighth sequence, sequence $N/2 + i$ is the third sequence; or
when sequence number $i$ of a sequence is an odd number, if sequence $i$ in the fourth sequence group is the first sequence, sequence $N/2 + i$ is the second sequence; if sequence $i$ in the fourth sequence group is the second sequence, sequence $N/2 + i$ is the first sequence; if sequence $i$ in the fourth sequence group is the third sequence, sequence $N/2 + i$ is the fourth sequence; if sequence $i$ in the fourth sequence group is the fourth sequence, sequence $N/2 + i$ is the third sequence; if sequence $i$ in the fourth sequence group is the fifth sequence, sequence $N/2 + i$ is the sixth sequence; if sequence $i$ in the fourth sequence group is the sixth sequence, sequence $N/2 + i$ is the fifth sequence; if sequence $i$ in the fourth sequence group is the seventh sequence, sequence $N/2 + i$ is the eighth sequence; or if sequence $i$ in the fourth sequence group is the eighth sequence, sequence $N/2 + i$ is the seventh sequence; and
when sequence number $i$ of a sequence is an even number, if sequence $i$ in the fifth sequence group is the first sequence, sequence $N/2 + i$ is the second sequence; if sequence $i$ in the fifth sequence group is the second sequence, sequence $N/2 + i$ is the first sequence; if sequence $i$ in the fifth sequence group is the third sequence, sequence $N/2 + i$ is the fourth sequence; if sequence $i$ in the fifth sequence group is the fourth sequence, sequence $N/2 + i$ is the third sequence; if sequence $i$ in the fifth sequence group is the fifth sequence, sequence $N/2 + i$ is the sixth sequence; if sequence $i$ in the fifth sequence group is the sixth sequence, sequence $N/2 + i$ is the fifth sequence; if sequence $i$ in the fifth sequence group is the seventh sequence, sequence $N/2 + i$ is the eighth sequence; or if sequence $i$ in the fifth sequence group is the eighth sequence, sequence $N/2 + i$ is the seventh sequence; or

when sequence number $i$ of a sequence is an odd number, if sequence $i$ in the fifth sequence group is the first sequence, sequence $N/2 + i$ is the sixth sequence; if sequence $i$ in the fifth sequence group is the second sequence, sequence $N/2 + i$ is the fifth sequence; if sequence $i$ in the fifth sequence group is the third sequence, sequence $N/2 + i$ is the eighth sequence; if sequence $i$ in the fifth sequence group is the fourth sequence, sequence $N/2 + i$ is the seventh sequence; if sequence $i$ in the fifth sequence group is the fifth sequence, sequence $N/2 + i$ is the second sequence; if sequence $i$ in the fifth sequence group is the sixth sequence, sequence $N/2 + i$ is the first sequence; if sequence $i$ in the fifth sequence group is the seventh sequence, sequence $N/2 + i$ is the fourth sequence; or if sequence $i$ in the fifth sequence group is the eighth sequence, sequence $N/2 + i$ is the third sequence, wherein

$$0 \le i < N/2.$$

21. The method according to claim 17 or 18, wherein

sequence $2i$ in the fourth sequence group is sequence $i$ in a sixth sequence group, wherein the sixth sequence group is obtained through construction based on the PTM sequence and by using the first sequence and the sixth sequence;
sequence $2i + 1$ in the fourth sequence group is sequence $i$ in a seventh sequence group, wherein the seventh sequence group is obtained through construction based on the PTM sequence and by using the eighth sequence and the seventh sequence;
sequence $2i$ in the fifth sequence group is sequence $i$ in an eighth sequence group, wherein the eighth sequence group is obtained through construction based on the PTM sequence and by using the second sequence and the first sequence; and
sequence $2i + 1$ in the fifth sequence group is sequence $i$ in a ninth sequence group, wherein the seventh sequence group is obtained through construction based on the PTM sequence and by using the third sequence and the eighth sequence, wherein
$0 \le i < N/2$, and $i$ is an integer.

22. The method according to claim 21, wherein

for $N = 4$, the first sequence group is $(\vec{x}, \vec{y}, \vec{y}, \vec{x})$, the fourth sequence group is $(\vec{x}, -\vec{y}, -\vec{y}, -\vec{x})$, and the fifth sequence group is $(\vec{y}, \vec{x}, \vec{x}, -\vec{y})$; or
for $N = 8$, the first sequence group is $(\vec{x}, \vec{y}, \vec{y}, \vec{x}, \vec{y}, \vec{x}, \vec{x}, \vec{y})$, the fourth sequence group is $(\vec{x}, -\vec{y}, -\vec{y}, -\vec{x}, -\vec{y}, -\vec{x}, \vec{x}, -\vec{y})$, and the fifth sequence group is $(\vec{y}, \vec{x}, \vec{x}, -\vec{y}, \vec{x}, -\vec{y}, \vec{y}, \vec{x})$; or
for $N = 16$, the first sequence group is $(\vec{x}, \vec{y}, \vec{y}, \vec{x}, \vec{y}, \vec{x}, \vec{x}, \vec{y}, \vec{y}, \vec{x}, \vec{x}, \vec{y}, \vec{x}, \vec{y}, \vec{y}, \vec{x})$, the fourth sequence group is $(\vec{x}, -\vec{y}, -\vec{y}, -\vec{x}, -\vec{y}, -\vec{x}, \vec{x}, -\vec{y}, -\vec{y}, -\vec{x}, \vec{x}, -\vec{y}, \vec{x}, -\vec{y}, -\vec{y}, -\vec{x})$, and the fifth sequence group is $(\vec{y}, \vec{x}, \vec{x}, -\vec{y}, \vec{x}, -\vec{y}, \vec{y}, \vec{x}, \vec{x}, -\vec{y}, \vec{y}, \vec{x}, \vec{y}, \vec{x}, \vec{x}, -\vec{y})$, wherein
$\vec{x}$ represents the first sequence, $\vec{y}$ represents the second sequence, $\vec{x}$ represents the third sequence, $\vec{y}$ represents the fourth sequence, $-\vec{x}$ represents the fifth sequence, $-\vec{y}$ represents the sixth sequence, $-\vec{x}$ represents the seventh sequence, and $-\vec{y}$ represents the eighth sequence.

23. The method according to claim 17 or 18, wherein

first $N/2$ sequences in the fourth sequence group are a sixth sequence group, and last $N/2$ sequences in the fourth sequence group are a seventh sequence group, wherein the sixth sequence group is obtained through construction based on the PTM sequence and by using the first sequence and the sixth sequence, and the seventh sequence group is obtained through construction based on the PTM sequence and by using the eighth sequence and the seventh sequence; and
first $N/2$ sequences in the fifth sequence group are an eighth sequence group, and last $N/2$ sequences in the fifth sequence group are a ninth sequence group, wherein the eighth sequence group is obtained through construction based on the PTM sequence and by using the second sequence and the first sequence, and the seventh sequence group is obtained through construction based on the PTM sequence and by using the third sequence and the eighth sequence.

24. The method according to claim 23, wherein

for $N = 4$, the first sequence group is $(\vec{x}, \vec{y}, \vec{y}, \vec{x})$, the fourth sequence group is $(\vec{x}, -\vec{y}, -\vec{y}, -\vec{x})$, and the fifth sequence

group is $(\vec{y}, \vec{x}, \vec{x}, -\vec{y})$; or

for $N$ = 8, the first sequence group is $(\vec{x}, \vec{y}, \vec{y}, \vec{x} \vec{y}, \vec{x}, \vec{x}, \vec{y})$, the fourth sequence group is $(\vec{x}, -\vec{y}, -\vec{y} \vec{x}, -\vec{y}, -\vec{x}, -\vec{x}, -\vec{y})$, and the fifth sequence group is $(\vec{y}, \vec{x}, \vec{x}, \vec{y}, \vec{x}, -\vec{y}, -\vec{y}, \vec{x})$; or

for $N$ = 16, the first sequence group is $(\vec{x}, \vec{y}, \vec{y}, \vec{x}, \vec{y}, \vec{x}, \vec{x} \vec{y}, \vec{y}, \vec{x}, \vec{x}, \vec{y}, \vec{x}, \vec{y}, \vec{y}, \vec{x})$, the fourth sequence group is $(\vec{x}, -\vec{y}, -\vec{y}, -\vec{x}, -\vec{y}, \vec{x}, \vec{x}, -\vec{y}, -\vec{y}, -\vec{x}, -\vec{x}, -\vec{y}, -\vec{x}, -\vec{y}, -\vec{y}, -\vec{x})$, and the fifth sequence group is $(\vec{y}, \vec{x}, \vec{x}, \vec{y}, \vec{x}, \vec{y}, \vec{y}, \vec{x}, \vec{x}, -\vec{y}, -\vec{y}, \vec{x}, -\vec{y}, \vec{x}, \vec{x}, -\vec{y})$, wherein $\vec{x}$ represents the first sequence, $\vec{y}$ represents the second sequence, $\vec{x}$ represents the third sequence, $\vec{y}$ represents the fourth sequence, $-\vec{x}$ represents the fifth sequence, $-\vec{y}$ represents the sixth sequence, $-\vec{x}$ represents the seventh sequence, and $-\vec{y}$ represents the eighth sequence.

25. The method according to any one of claims 17 to 21, wherein the first antenna is an antenna in a vertical polarization direction of a dual-polarized antenna, and the second antenna is an antenna in a horizontal polarization direction of the dual-polarized antenna; or

the first antenna is an antenna in a horizontal polarization direction of a dual-polarized antenna, and the second antenna is an antenna in a vertical polarization direction of the dual-polarized antenna.

26. A pulse train transmission method, comprising:

receiving an echo signal of a pulse train, wherein the pulse train is obtained based on a first sequence group, and the first sequence group comprises $N$ sequences, wherein $N$ is greater than 2 and is a power of 2, the $N$ sequences comprise at least one Golay complementary sequence pair, each of the $N$ sequences comprises a plurality of symbols, symbols in at least two sequences are arranged in opposite orders, and one pulse in the pulse train corresponds to one of the $N$ sequences; and

determining a range and/or a speed based on the echo signal.

27. A communication apparatus, comprising:

a processing unit, configured to determine a first sequence group, wherein the first sequence group comprises $N$ sequences, wherein $N$ is greater than 2 and is a power of 2, the $N$ sequences comprise at least one Golay complementary sequence pair, each of the $N$ sequences comprises a plurality of symbols, and symbols in at least two sequences are arranged in opposite orders; and

a transceiver unit, configured to send a pulse train, wherein the pulse train is obtained based on the first sequence group, and one pulse in the pulse train corresponds to one of the $N$ sequences.

28. A communication apparatus, comprising:

a transceiver unit, configured to receive an echo signal of a pulse train, wherein the pulse train is obtained based on a first sequence group, and the first sequence group comprises $N$ sequences, wherein $N$ is greater than 2 and is a power of 2, the $N$ sequences comprise at least one Golay complementary sequence pair, each of the $N$ sequences comprises a plurality of symbols, symbols in at least two sequences are arranged in opposite orders, and one pulse in the pulse train corresponds to one of the $N$ sequences; and

a processing unit, configured to determine a range and/or a speed based on the echo signal.

29. A communication apparatus, comprising a processor, wherein the processor is configured to execute a computer program stored in a memory, to enable the communication apparatus to perform the method according to any one of claims 1 to 25, or to perform the method according to claim 26.

30. The apparatus according to claim 27, wherein the processor further comprises the memory.

31. A communication apparatus, comprising a logic circuit and a communication interface, wherein the logic circuit is configured to process to-be-processed information to obtain processed information, and the communication interface is configured to obtain the to-be-processed information and/or output the processed information, to enable the communication apparatus to perform the method according to any one of claims 1 to 25, or to perform the method according to claim 26.

32. A communication system, comprising a communication apparatus configured to perform the method according to any one of claims 1 to 25, and a communication apparatus configured to perform the method according to claim 26.

33. A computer-readable storage medium, wherein the computer-readable storage medium stores a computer program, and when the computer program is run, the method according to any one of claims 1 to 26 is implemented.

FIG. 1

FIG. 2

EP 4 716 165 A1

FIG. 3

FIG. 4

FIG. 5

FIG. 6

FIG. 7

θ

Linear phase
variation

=

θ

0  T  l

Stepwise phase
variation

+

θ

0  T  l

Sawtooth phase
variation

FIG. 8

900

S901: Determine a first sequence group, where the first sequence group includes *N* sequences, *N* is greater than 2 and is a power of 2, one pulse in a pulse train corresponds to at least one of the *N* sequences, the N sequences include at least one Golay complementary sequence pair, each of the *N* sequences includes a plurality of symbols, and symbols in at least two sequences are arranged in opposite orders

S902: Send a pulse train, where the pulse train is obtained based on the first sequence group, and one pulse in the pulse train corresponds to one of the *N* sequences

FIG. 9

Pulse train length *N* = 4

$T_{sym}$   $\vec{x}$   $\vec{y}$   $\bar{y}$   $\bar{x}$

| + | + | + | − |    | + | + | − | + |    | + | − | + | + |    | − | + | + | + |

Pulse repetition
interval $T_{PRI}$

Golay sequence
length *L* = 4

FIG. 10

Pulse train length $N = 8$

$\vec{x}$    $\vec{y}$    $\overleftarrow{y}$    $\overleftarrow{x}$    $\overleftarrow{y}$    $\overleftarrow{x}$    $\vec{x}$    $\vec{y}$

| + | + | + | − |  | + | + | − | + |  | + | − | + | + |  | − | + | + | + |  | + | − | + | + |  | − | + | + | + |  | + | + | + | − |  | + | + | − | + |

$t$

Pulse repetition
interval $T_{\mathrm{PRI}}$

Golay sequence
length $L = 4$

FIG. 11

50

(a) Golay complementary sequence pair
extended based on a PTM sequence

(b) First sequence group

FIG. 12

EP 4 716 165 A1

Pulse train length $N = 4$

$\vec{x}$  $\bar{\vec{y}}$  $\vec{y}$  $\bar{\vec{x}}$

| + | + | + | − |   | + | − | + | + |   | + | + | − | + |   | − | + | + | + |

$t$

Pulse repetition interval $T_{\text{PRI}}$

Golay sequence length $L = 4$

FIG. 13

Pulse train length $N = 8$

$\vec{x}$

| + | + | + | − |
|---|---|---|---|

$\vec{y}$

| + | − | + | + |
|---|---|---|---|

$\vec{y}$

| + | + | - | + |
|---|---|---|---|

$\overleftarrow{x}$

| − | + | + | + |
|---|---|---|---|

$\vec{y}$

| + | + | − | + |
|---|---|---|---|

$\overleftarrow{x}$

| − | + | + | + |
|---|---|---|---|

$\vec{x}$

| + | + | + | − |
|---|---|---|---|

$\vec{y}$

| + | − | + | + |
|---|---|---|---|

$t$

Pulse repetition
interval $T_{\mathrm{PRI}}$

Golay sequence
length $L = 4$

FIG. 14

(a) Golay complementary sequence group
extended based on a PTM sequence

(b) First sequence group

FIG. 15

EP 4 716 165 A1

FIG. 16

FIG. 17

Pulse train length $N = 8$

First pulse train to be sent by a first antenna

| $\vec{x}$ | $-\vec{y}$ | $-\vec{\bar{y}}$ | $-\vec{\bar{x}}$ | $-\vec{\bar{y}}$ | $-\vec{\bar{x}}$ | $\vec{x}$ | $-\vec{y}$ |
|---|---|---|---|---|---|---|---|
| + + + − | − − + − | − + − − | + − − − | − + − − | − − − + | + + + − | − − + − |

$t$

Second pulse train to be sent by a second antenna

| $\vec{\bar{y}}$ | $\vec{\bar{x}}$ | $\vec{\bar{x}}$ | $-\vec{\bar{y}}$ | $\vec{\bar{x}}$ | $-\vec{\bar{y}}$ | $\vec{y}$ | $\vec{x}$ |
|---|---|---|---|---|---|---|---|
| + + − + | + + + − | − + + + | − + − − | − + + + | − + − − | + + − + | + + + − |

$t$

FIG. 18

Communication apparatus
1900

Processing unit 1910

Transceiver unit 1920

FIG. 19

Communication apparatus 2000

Processor 2010

Interface circuit
2020

Memory 2030

FIG. 20

## INTERNATIONAL SEARCH REPORT

| International application No. |
|---|
| **PCT/CN2023/102941** |

| | |
|---|---|
| **A.** | **CLASSIFICATION OF SUBJECT MATTER** |

H04L25/48(2006.01)i; H04J13/00(2011.01)i

According to International Patent Classification (IPC) or to both national classification and IPC

| | |
|---|---|
| **B.** | **FIELDS SEARCHED** |

Minimum documentation searched (classification system followed by classification symbols)

IPC: H04L, H04J

Documentation searched other than minimum documentation to the extent that such documents are included in the fields searched

Electronic data base consulted during the international search (name of data base and, where practicable, search terms used)

CNTXT, ENTXT, DWPI, CNKI, IEEE, 3GPP: 格雷, 戈莱, 戈雷, 互补, 序列, 逆序, 反序, 反转, 反向, 顺序, 相反, 脉冲, 冲激, 冲击, 回波, 反射, 频偏, 偏移, 定位, 速度, 距离, 扩展, 前导, 导频, GOLAY, complementary, revers+, sequence, pulse?, impulse?, burst, echo, reflect+, extend+, distance, velocity

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | CN 109343044 A (NATIONAL UNIVERSITY OF DEFENSE TECHNOLOGY OF PLA) 15 February 2019 (2019-02-15)<br>description, paragraphs [0025] and [0030]-[0041], and figure 2 | 1-6, 16, 26-33 |
| Y | CA 2313411 A1 (NORTEL NETWORKS LIMITED) 06 January 2001 (2001-01-06)<br>description, page 1, line 22-page 2, line 6, page 3, line 26-page 5, line 16 and page 7, line 21-page 8, line 13, and table 2 | 1-6, 16, 26-33 |
| A | US 2021278521 A1 (QUALCOMM INC.) 09 September 2021 (2021-09-09)<br>entire document | 1-33 |
| A | WO 2018231737 A1 (INTEL CORP.) 20 December 2018 (2018-12-20)<br>entire document | 1-33 |
| A | CN 115219987 A (XIAMEN UNIVERSITY OF TECHNOLOGY) 21 October 2022 (2022-10-21)<br>entire document | 1-33 |

| ✓ Further documents are listed in the continuation of Box C. | ✓ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 December 2023** | **19 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/102941** |

| C. | DOCUMENTS CONSIDERED TO BE RELEVANT | |
| --- | --- | --- |
| Category* | Citation of document, with indication, where appropriate, of the relevant passages | Relevant to claim No. |
| A | 朱家华 (ZHU, Jiahua). "雷达目标检测互补波形设计研究 (Research of Complementary Waveforms Design for Radar Target Detection)"<br>中国博士学位论文全文数据库信息科技辑 (Information & Technology, China Doctoral Dissertations Full-text Database), 15 February 2020 (2020-02-15), sections 2.1-2.2 and 3.1-3.2 | 1-33 |

Form PCT/ISA/210 (second sheet) (July 2022)

## INTERNATIONAL SEARCH REPORT
### Information on patent family members

| International application No. |
| --- |
| **PCT/CN2023/102941** |

| Patent document cited in search report | | | Publication date (day/month/year) | Patent family member(s) | Publication date (day/month/year) |
| --- | --- | --- | --- | --- | --- |
| CN | 109343044 | A | 15 February 2019 | None | |
| CA | 2313411 | A1 | 06 January 2001 | None | |
| US | 2021278521 | A1 | 09 September 2021 | None | |
| WO | 2018231737 | A1 | 20 December 2018 | None | |
| CN | 115219987 | A | 21 October 2022 | None | |

Form PCT/ISA/210 (patent family annex) (July 2022)